# EUROPEAN PATENT APPLICATION

(11) **EP 1 770 131 A1**
(43) Date of publication of application: **04.04.2007**
(21) Application number: 06020588.7
(22) Date of filing: 29.09.2006
(51) Int. Cl.: C09D 11/00, B41M 7/00, B41C 1/10

(54) **Ink composition for ink jet recording and method for producing planographic printing plate using the same**

(30) Priority: 30.09.2005 JP 2005288749
(71) Applicant: FUJIFILM Corporation, Minato-ku Tokyo (JP)
(72) Inventor: Kakino, Ryuki, Yoshida-cho, Haibara-gun, Shizuoka-ken (JP)
(74) Representative: HOFFMANN EITLE

(57) **Abstract**

An ink composition for ink jet recording comprising dispersion medium (A) and nonaqueous dispersion resin particles (B) having a volume average particle diameter 0.8 µm or more, and a method for producing a planographic printing plate using the ink composition for ink jet recording are provided.

## Description

### BACKGROUND OF THE INVENTION

### Field of the Invention

The present invention relates to an ink composition for ink jet recording and a method for producing a planographic printing plate using the same.

### Description of the Related Art

As image recording methods of forming a image on a printing medium, such as paper, on the basis of the signal of image data, there are the main known electrophotographic methods, sublimation and fusion heat transfer methods, and ink jet methods. Electrophotographic methods require a process of forming an electrostatic latent image by electrostatic charging and exposure of a photosensitive drum, thus the system is complicated and an expensive apparatus is necessary. Heat transfer methods, although the apparatus itself is less expensive than that for electrophotographic methods, use an ink ribbon, hence running costs are expensive, and waste material is produced. On the other hand, in ink jet methods, as printing is performed directly on a printing medium, by ejecting ink on only the necessary image parts with an inexpensive apparatus, coloring materials can be effectively used and the running costs are low. In addition, ink jet methods make less noise, and are superior image recording systems. Accordingly, ink jet recording systems have been rapidly growing in popularity in recently years.

Ink jet recording systems include a variety of systems such as so-called electrostatic systems of ejecting ink by electrostatic attraction, so-called drop-on-demand systems (piezo systems) ejecting ink using vibratory pressure of a piezo element, and so-called bubble (thermal) jet system of ejecting ink by the pressure created by generating and growing bubbles using heat. Extremely high definition images can be obtained by these systems.

On the other hand, conventional planographic printing plates are obtained as follows. A planographic printing plate precursor comprising a hydrophilic support having provided thereon a lipophilic photo sensitive resin layer (image recording layer) is exposed through an original image such as lith film, and while leaving the image recording layer in the image area, the image recording layer in the non-image area is dissolved and removed with an alkaline developer or an organic solvent to uncover the surface of the hydrophilic support, thereby obtaining a planographic printing plate.

However, in the plate-making process using a conventional planographic printing plate precursor, a step of dissolving and removing a non-image area with a developer or the like must be provided after exposure. However, the treatment of waste solution discharged in wet processing is recently a great concern to industry as a whole from the consideration of the global environment, thus a solution to the above problem is increasingly desired.

In recent years, it has become known that there are techniques for directly forming images, on the basis of signal of image data produced by computer or the like, on an aluminum support, a plastic support or the like using the above ink jet recording systems, and using the thus obtained ink jet recording CTP for printing on a cylinder in a printing machine without going through wet processing (e.g., Japanese Patent Application Laid-Open (JP-A) Nos. 2002-86667, 2001-88269, 2001-150652, 10-298473, 10-259336, and 10-273614).

As the ink for such ink jet recording CTP, aqueous ink (JP-ANo. 2002-86667), solid ink (JP-A No. 2001-88269), UV ink (JP-A No. 2001-150652), oil-based ink (JP-A Nos. 10-298473, 10-259336, and 10-273614) are generally used.

However, aqueous ink is highly foaming and provides insufficient ejection stability in an ink head. Moreover, aqueous ink may blot an image on a printing material during image forming on a hydrophilic support, or may lower the image forming rate because of its slow drying rate.

On the other hand, solid ink requires a heating device in the head, thus the system is complicated and an expensive apparatus is necessary. Moreover, the viscosity of solid ink during ejection is so high that jetting of fine ink droplets for forming a high resolution image is difficult.

A printing method using UV ink as described in JP-A No. 2001-150652 is also disclosed. However, as is the case with solid ink, UV ink is so viscous during ejection that jetting of fine ink droplets for forming a high resolution image is difficult, and the ink in a head is hardened if it is exposed to visible light, which can cause head clogging.

On the other hand, oil-based inks, as described in JP-ANos. 10-298473, 10-259336, and 10-273614, can produce an image with less blotting when it is combined with a hydrophilic support. Moreover, the oil-based ink will not cause the hardening or clogging in a head that is seen with UV ink, and has a low viscosity, being superior in ink circulating and running properties in a head. In addition, the oil-based ink can produce fine ink droplets for forming a high resolution image, thus achieves excellent image reproducibility.

An ink jet recording CTP using an oil-based ink is described in JP-A No. 10-259336, wherein an electrostatic system is used for ink jet recording. However, because the oil-based inks described in JP-A Nos. 10-298473, 10-259336, and 10-273614 contain particles having a particle diameter of about 0.1 µm to 0.5 µm, the particle surface area is small, and thus they have poor sensitivity to pulse voltage and have the problem that they become unstable during ejection when applied to electrostatic ink jet recording. Furthermore, such oil-based inks containing particles having small particle diameters readily blot when they are applied to a recording medium, which can deteriorate the image quality. Although oil-based inks have the above advantages, ink jet recording systems compatible with the oil-based inks are limited, and the inks may deteriorate the image quality by blotting. Thus the solution of these problems is demanded.

### SUMMARY OF THE INVENTION

The present invention has been made in view of the above circumstances and provides ink composition for ink jet recording and a method for producing a planographic printing plate using the same.

A first aspect of the present invention provides an ink composition for ink jet recording comprising a dispersion medium(A), and nonaqueous dispersion resin particles (B) having a volume average particle diameter of 0.8 µm or more.

A second aspect of the present invention provides a method for producing a planographic printing plate comprising forming an image using the ink composition for ink jet recording of the invention.

### BRIEF DESCRIPTION OF THE DRAWINGS

Fig. 1 is a schematic view showing the entire constitution of an example of the ink jet printing apparatus suitable for the ink composition of the present invention.

Fig. 2 is a perspective view showing the constitution of the ink jet head of the ink jet recording apparatus in the invention (the edge of the guard electrode at each ejection section is not shown for clarity).

Fig. 3 is a cutaway side view showing the distribution condition of charged particles when many ejecting sections of the ink jet head shown in Fig. 2 are used (corresponding to the view X-X in Fig. 2).

Fig. 4 is a side view schematically illustrating a brush graining step used in mechanically surface-roughening treatment in the production of a support for a planographic printing plate precursor of the invention.

Fig. 5 is a graph showing an example of a waveform chart of alternating current used in electrochemically surface-roughening treatment in the production of a support for a planographic printing plate precursor of the present invention.

Fig. 6 is a side view illustrating an example of a radial-form cell in electrochemically surface-roughening treatment using alternating current in the production of a support for a planographic printing plate precursor of the invention.

Fig. 7 is a schematic view of an anodic oxidation treatment device used in anodic oxidation treatment in the production of a support for a planographic printing plate precursor of the invention.

### DETAILED DESCRIPTION OF THE INVENTION

The present invention is described below.

### <Ink composition for ink jet recording>

In the first place, the ink composition for ink jet recording of the invention (hereinafter may be abbreviated as "ink composition") is described.

The ink composition of the invention contains: dispersion medium (A); and nonaqueous dispersion resin particles (B) having a volume average particle diameter of 0.8 µm or more (hereinafter may be referred to as specific particles).The ingredients of the ink composition of the invention are described in detail below.

### [(A) Dispersion medium]

Examples of the dispersion medium (A) constituting the ink composition of the invention include straight-chain or branched-chain aliphatic hydrocarbons, alicyclic hydrocarbons, aromatic hydrocarbons, and halogen substituted derivatives thereof (halogenated hydrocarbons). Specific examples include octane, isooctane, decane, isodecane, decalin, nonane, dodecane, isododecane, cyclohexane, cyclooctane, cyclodecane, benzene, toluene, xylene, mesitylene, Isopar E, Isopar G, Isopar H, Isopar L (Isopar: trade name of Exxon Co.), Shellsol 70, Shellsol 71(Shellsol: trade name of Shell Oil Co.), Amsco OMS, Amsco 460 solvent (Amsco: trade name of Spirits Co.), methylene dichloride, chloroform, carbon tetrachloride, dichloroethane, methyl chloroform, and mixtures thereof.

The above hydrocarbon compounds and halogen substituted derivatives may be used in combination with following nonhydrocarbon compounds. Examples of such compound include alcohols (e.g., methyl alcohol, ethyl alcohol, propyl alcohol, butyl alcohol, and fluorinated alcohols), ketones (e.g., acetone, methylethylketone, and cyclohexanone), carboxylic acid esters (e.g., methyl acetate, ethyl acetate, propyl acetate, butyl acetate, methyl propionate, and ethyl propionate), and ethers (e.g., diethyl ether, dipropyl ether, tetrahydrofuran, and dioxane).

The proportion of the nonhydrocarbon compounds used in combination with said hydrocarbon compounds or halogen substituted derivatives thereof is, when an image is formed using an ink jet recording system such as a piezo system, selected in consideration of the viscosity, the boiling point of the dispersion medium, redispersibility and other factors.

On the other hand, when an image is formed using an electrostatic ink jet recording system, the proportion of the nonhydrocarbon compounds used in combination with said hydrocarbon compounds or halogen substituted derivatives thereof is preferably in a low range from the viewpoint of lowering the permittivity of the dispersion medium.

In the ink composition of the invention, the content of the dispersion medium (A) is preferably in the range of 90 to 10% by mass, more preferably 98 to 20% by mass, further preferably 97 to 30% by mass with respect to the total weight of the ink composition.

If the content of the dispersion medium (A) is less than 10% by mass, the dispersion medium increases in viscosity to deteriorate in ejectability, and can cause the aggregation of the specific particles (B) to deteriorate the storage stability and dispersibility. If the content is exceeding 99% by mass, the concentration of the specific particles (B) decreases, which can deteriorates the image forming properties. If the specific particles (B) are colored, the color concentration decreases, which can deteriorates the visibility.

### [(B) Nonaqueous dispersion resin particles having a volume average particle diameter of 0.8 µm or more]

The nonaqueous dispersion resin particles (specific particles), which is the most important constituent in the invention, has a volume average particle diameter of 0.8 µm or more and are resin particles dispersible in said dispersion medium (A). The specific particles are preferably obtained by polymerization granulation through copolymerization of at least one type of the monofunctional monomer (b) in a nonaqueous solvent (a) in the presence of a resin for dispersion stabilization (c) (hereinafter may be referred to as dispersant), and preferably have a volume average particle diameter of 0.8 µm or more.

The method for polymerization granulation of the specific particles of the invention is illustrated below.

### [Nonaqueous solvent (a)]

Examples of the nonaqueous solvent (a) include straight-chain or branched-chain aliphatic hydrocarbons, alicyclic hydrocarbons, or aromatic hydrocarbons and halogen substituted derivatives thereof (halogenated hydrocarbons). Specific examples include, octane, isooctane, decane, isodecane, decalin, nonane, dodecane, isododecane, cyclohexane, cyclooctane, cyclodecane, benzene, toluene, xylene, mesitylene, Isopar E, Isopar G, Isopar H, Isopar L (Isopar: trade name of Exxon Co.), Shellsol 70, Shellsol 71 (Shellsol: trade name of Shell Oil Co.), Amsco OMS, Amsco 460 solvent (Amsco: trade name of Spirits Co.), methylene dichloride, chloroform, carbon tetrachloride, dichloroethane, methyl chloroform, and mixtures thereof.

The above hydrocarbon compounds and halogen substituted derivatives may be used in combination with following nonhydrocarbon compounds. Examples of such compound include alcohols (e.g., methyl alcohol, ethyl alcohol, propyl alcohol, butyl alcohol, and fluorinated alcohols), ketones (e.g., acetone, methylethylketone and cyclohexanone), carboxylic acid esters (e.g., methyl acetate, ethyl acetate, propyl acetate, butyl acetate, methyl propionate, and ethyl propionate), ethers (e.g., diethyl ether, dipropyl ether, tetrahydrofuran, and dioxane), and halogenated hydrocarbons (e.g., methylene dichloride, chloroform, carbon tetrachloride, dichloroethane, and methyl chloroform).

In the invention, it is preferable to use the nonaqueous solvent (a) equal to the dispersion medium (A), usually in the granulation process of the specific particles, to omit the steps involved with the substitution to the dispersion medium (A) that constitutes the ink composition.

Accordingly, in a piezo ink jet recording system or the like, the proportion of the nonhydrocarbon compound used in combination with hydrocarbon compounds and halogen substituted derivatives thereof is selected in consideration of the viscosity, the boiling point of the dispersion medium, redispersibility and other factors.

On the other hand, when an image is formed using an electrostatic ink jet recording system, the proportion of the nonhydrocarbon compounds used in combination with said hydrocarbon compounds or halogen substituted derivatives thereof is preferably in a low range from the viewpoint of lowering the permittivity of the dispersion medium. When the specific particles (B) are prepared using the nonaqueous solvent (a) equal to the dispersion medium (A), if the permittivity 5.0 or more by mixing a nonhydrocarbon compound with a hydrocarbon compound or its halogen substituted derivative, it is preferable to decrease the permittivity 5.0 or less by removing the nonhydrocarbon compound mixed during the synthesis of the specific particles (B) by heating or under reduced pressure, or by increasing the proportion of the hydrocarbon compound by substituting the supernatant using a centrifuge.

The amount of the nonaqueous solvent (a) is preferably in the range of 80 to 0.01% by mass with respect to the total weight of the mixed solution used for the synthesis, that is, the solids content in the mixed solution is preferably in the range of 20 to 99.99%, more preferably in the range of 70 to 0.1% by mass, further preferably in the range of 60 to 1% by mass.

If the content of the nonaqueous solvent (a) is less than 0.01% by mass, the specific particles (B) have a particle diameter smaller than the desired size, and decrease in monodispersibility. If the content is exceeding 80% by mass, the specific particles (B) cause aggregation to decrease in monodispersibility and dispersibility.

### [Monofunctional monomer (b)]

The monofunctional monomer (b) (hereinafter may be abbreviated as monomer (b)) in the invention is not particularly limited as long as it is a monofunctional monomer soluble in the nonaqueous solvent (a), and turns into insoluble in the solvent once it is polymerized. Specific examples thereof include a monomer represented by the following formula (I).

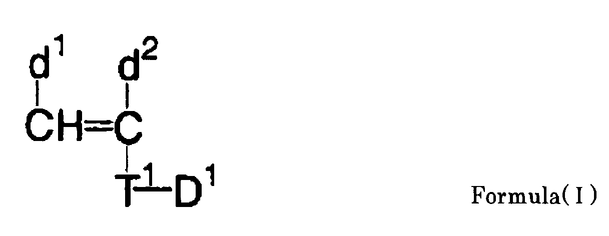

In above formula (I), T¹ represents -COO-, -OCO-, -CH₂OCO-, -CH₂COO-, -O-, -CONHCOO-, -CONHOCO-, -SO₂-, -CON(W¹)-, -SO₂N(W¹)-, or a phenylene group (hereinafter a phenylene group is expressed by -Ph-. The phenylene group includes 1,2-, 1,3- and 1,4-phenylene groups.), wherein W¹ represents a hydrogen atom or a substituted or unsubstituted aliphatic group having 1 to 20 carbon atoms (e.g., methyl group, ethyl group, propyl group, butyl group, 2-chloroethyl group, 2-bromoethyl group, 2-cyano ethyl group, 2-hydroxy ethyl group, benzyl group, chlorobenzyl group, methylbenzyl group, methoxybenzyl group, phenethyl group, 3-phenylpropyl group, dimethylbenzyl group, fluorobenzyl group, 2-methoxy ethyl group, and 3-methoxy propyl group).

D¹ represents a hydrogen atom, a halogen atom or a substituted or unsubstituted aliphatic group having 1 to 20 carbon atoms. Examples of the aliphatic group include methyl group, ethyl group, propyl group, butyl group, 2-chloroethyl group, 2,2-dichloroethyl group, 2,2,2-trifluoroethyl group, 2-bromoethyl group, 2-glycidylethyl group, 2-hydroxyethyl group, 2-hydroxypropyl group, 2,3-dihydroxypropyl group, 2-hydroxy-3-chloropropyl group, 2-cyanoethyl group, 3-cyanopropyl group, 2-nitroethyl group, 2-methoxyethyl group, 2-methanesulfonylethyl group, 2-ethoxyethyl group, N,N-dimethylaminoethyl group, N,N-diethylaminoethyl group, trimethoxysilylpropyl group, 3-bromopropyl group, 4-hydroxybutyl group, 2-furfurylethyl group, 2-thienylethyl group, 2-pyridylethyl group, 2-morpholinoethyl group, 2-carboxyethyl group, 3-carboxypropyl group, 4-carboxybutyl group, 2-phosphoethyl group, 3-sulfopropyl group, 4-sulfobutyl group, 2-carboxyamideethyl group, 3-sulfoamidepropyl group, 2-N-methylcarboxyamideethyl group, cyclopentyl group, chlorocyclohexyl group, and dichlorohexyl group.

d¹ and d² may be the same or different from each other, and represents a hydrogen atom, a halogen atom, a cyano group, a hydrocarbon group having 1 to 20 carbon atoms, -COO-Z¹ or -COO-Z¹ via a hydrocarbon group having 1 to 20 carbon atoms (wherein Z¹ represents hydrocarbon group having a carbon number of 1 to 22).

Specific examples of the monofunctional monomer (b) include vinyl esters or allyl esters of aliphatic carboxylic acids having 1 to 20 carbon atoms (e.g., acetic acid, propionic acid, butyric acid, monochloroacetic acid, and trifluoropropionic acid); substituted or unsubstituted alkyl esters or amides of unsaturated carboxylic acids having a carbon number of 1 to 10 such as acrylic acid, methacrylic acid, crotonic acid, itaconic acid, and maleic acid (examples of the alkyl group include methyl group, ethyl group, propyl group, butyl group, 2-chloroethyl group, 2-bromoethyl group, 2-fluoroethyl group, trifluoroethyl group, 2-hydroxy ethyl group, 2-cyanoethyl group, 2-nitroethyl group, 2-methoxyethyl group, 2-methanesulfonylethyl group, 2-benzenesulfonylethyl group, 2-(N,N-dimethylamino)ethyl group, 2-(N,N-diethyl amino)ethyl group, 2-carboxyethyl group, 2-phosphoethyl group, 4-carboxybutyl group, 3-sulfopropyl group, 4-sulfobutyl group, 3-chloropropyl group, 2-hydroxy-3-chloropropyl group, 2-furfurylethyl group, 2-pyridinylethyl group, 2-thienylethyl group, trimethoxysilylpropyl group, and 2-carboxyamideethyl group); styrene derivatives (e.g., styrene, vinyl toluene, a-methylstyrene, vinylnaphthalene, chlorostyrene, dichlorostyrene, bromostyrene, vinylbenzene carboxylic acid, vinylbenzene sulfonic acid, chloromethyl styrene, hydroxymethyl styrene, methoxymethyl styrene, N,N-dimethylaminomethyl styrene, vinylbenzene carboxyamide, and vinylbenzene sulfoamide); unsaturated carboxylic acids such as acrylic acid, methacrylic acid, crotonic acid, maleic acid, and itaconic acid; cyclic acid anhydrides such as maleic acid, and itaconic acid; acrylonitrile; and methacrylonitrile; heterocycle compounds having polymerizable double bond group(s) (specific examples include the compounds described in "Polymer Data Reference Book, Basic Edition (Kobunshi Data Handbook Kisohen), edited by The Society of Polymer Science, Japan, p175-184, Baifukan Co., Ltd. (1986), for example, N-vinylpyridine, N-vinylimidazole, N-vinylpyrrolidone, vinylthiophene, vinyltetrahydrofuran, vinyloxazoline, vinylthiazole, and N-vinylmorpholine).

These monofunctional monomers may be used alone or in combination of two or more thereof.

The amount of the monofunctional monomer (b) is preferably 10% by mass or more, more preferably 15% by mass or more, further preferably 20% by mass or more with respect to the total solids content in the mixed solution used during the synthesis. The upper limit of the amount of the monofunctional monomer (b) is preferably 99% by mass or lower, more preferably 95% by mass or lower from the viewpoint of the monodispersibility and the dispersion stability of the specific particles (B).

If the content of the monofunctional monomer (b) is less than 10% by mass, the specific particles (B) less prone to deposit from the nonaqueous solvent (c), which makes the synthesis of the specific particles (B) more difficult. Moreover, the monodispersibility of the specific particles (B) may be deteriorated.

### [Resin for dispersion stabilization (dispersant) (c)]

The resin for dispersion stabilization (dispersant) (c) used in the granulation of the specific particles (B) in the invention is described below.

The dispersant (c) is produced by polymerization of the monofunctional monomer (b) in the nonaqueous solvent (a), and used for converting the polymers that are insoluble in the nonaqueous solvent (a) into a stable resin dispersion.

In the invention, the amount of the resin for dispersion stabilization (dispersant) (c) is preferably in the range of 1 to 50% by mass, more preferably in the range of 5 to 40% by mass with respect to the monofunctional monomer (b) used in the synthesis of the specific particles (B).

Examples of the dispersant in the invention include conventionally known dispersion stabilizers soluble in the dispersion medium (A), such as random copolymers, comb copolymers, star copolymers, partially crosslinked copolymers, and crosslinking group-containing copolymers.The dispersants preferably used in the invention are described below.

### (Random copolymer)

Specific examples of the random copolymer used in the invention include polymers obtained by polymerization of following monomers or copolymers of two or more thereof esters of acrylic acid, methacrylic acid or crotonic acid having a alkyl chain or an alkenyl chain having 6 to 32 carbon atoms(wherein the aliphatic groups may contain substituents such as halogen atom, hydroxy group, amino group, and alkoxy group, or may have a hetero atom such as oxygen atom, sulfur atom, and nitrogen atom inserted between the carbon-carbon bond in the main chain.); higher aliphatic acid vinyls; alkylvinyl ethers; olefins such as butadiene, isoprene, and diisoprene.

Also may be used are copolymers obtained by copolymerization of said monomers that form polymers soluble in the nonaqueous solvent (a) with one or more of the following monomers in a proportion that the obtained copolymers are soluble in the nonaqueous solvent.

Examples of the monomer copolymerizable with said monomer include methyl, ethyl or propyl esters of vinyl acetate, acetic acid allyl, acrylic acid, methacrylic acid, crotonic acid, maleic acid, and itaconic acid; styrene derivatives (e.g., styrene, vinyl toluene, and α-methyl styrene); unsaturated carboxylic acids such as acrylic acid, methacrylic acid, crotonic acid, maleic acid, and itaconic acid, and acid anhydrides thereof; monomers having various polar groups such as hydroxy group, amino group, amide group, cyano group, sulfonic acid group, carboxyl group, halogen atom, and heterocycle, such as hydroxyethyl methacrylate, hydroxyethyl acrylate, diethylaminoethyl methacrylate, N-vinyl pyrrolidone, acrylamide, acrylonitrile, 2-chloroethyl methacrylate, and 2,2,2-trifluoroethyl methacrylate

Other examples of the random copolymers used in the invention include natural resins such as alkyd resins, alkyd resins modified with various fatty acids, linseed oil, and modified polyurethane resin.

The weight average molecular weight of the random copolymers used in the invention is preferably in the range of 3,000 to 200,000, more preferably in the range of 5,000 to 150,000.

If the molecular weight is less than 3,000, the dispersibility decreases, which can cause the deterioration of the redispersibility and storage stability. If the molecular weight is exceeding 200,000, solubility in the nonaqueous solvent (a) decreases, which may also cause the deterioration of the dispersibility, redispersibility and storage stability.

### (Comb copolymer)

The comb copolymer used in the invention has the following structure, and has one or more of macromonomers (MM) having a weight average molecular weight of 1 × 10³ to 5 × 10⁴ as a copolymerization component.

In the first place, the macromonomer is described in detail. The macromonomer that is used to obtain a comb copolymer has a chemical structure such that a polymerizable double bond group represented by the formula (III) is bonded to just one end of a polymer main chain having repeating units represented by the formula (II).

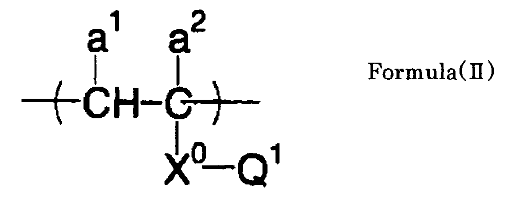

In the above formula (II), a¹ and a² may be the same or different each other, and represents independently a hydrogen atom, a halogen atom (e.g., chlorine atom, bromine atom, and fluorine atom), a cyano group, an alkyl group having 1 to 4 carbon atoms(e.g., methyl group, ethyl group, propyl group, and butyl group), -COO-Z¹ or -COO-Z¹ via a hydrocarbon group. Examples of the hydrocarbon group in the -COO-Z¹ group via a hydrocarbon group include methylene group, ethylene group, and propylene group. Z¹ is preferably a hydrogen atom or an alkyl group, an alkenyl group, an aralkyl group, an alicyclic group or an aryl group having 1 to 18 carbon atoms.These groups, if possible, may have substituents.

In the formula (II), X⁰ represents -COO-, -OCO-, -CH₂OCO-, CH₂COC-, -O-, -SO₂-, -CO-, -CONR¹¹-, -SO₂NR¹¹-, or -Ph (phenylene group)-. Examples of the R¹¹ include hydrogen atom, alkyl groups having 1 to 22 carbon atoms that may be substituted (e.g., methyl group, ethyl group, propyl group, butyl group, heptyl group, hexyl group, octyl group, decyl group, dodecyl group, tridecyl group, tetradecyl group, hexadecyl group, octadecyl group, 2-chloroethyl group, 2-bromoethyl group, 2-cyanoethyl group, 2-methoxycarbonylethyl group, 2-methoxyethyl group, and 3-bromopropyl group), alkenyl groups having a 4 to 18 carbon atoms that may be substituted (e.g., 2-methyl-1-propenyl group, 2-butenyl group, 2-pentenyl group, 3-methyl-2-pentenyl group, 1-pentenyl group, 1-hexenyl group, 2-hexenyl group, and 4-methyl-2-hexenyl group), aralkyl groups having 7 to 12 carbon atoms that may be substituted (e.g., benzyl group, phenethyl group, 3-phenylpropyl group, naphthylmethyl group, 2-naphthylethyl group, chlorobenzyl group, bromobenzyl group, methylbenzyl group, ethylbenzyl group, methoxybenzyl group, dimethylbenzyl group, and dimethoxybenzyl group), alicyclic group having 5 to 8 carbon atoms that may be substituted (e.g., cyclohexyl group, 2-cyclohexylethyl group, and 2-cyclopentylethyl group), aromatic groups having 6 to 12 carbon atoms that may be substituted (e.g., phenyl group, naphthyl group, tolyl group, xylyl group, and propylphenyl group, butylphenyl group, octylphenyl group, dodecylphenyl group, methoxyphenyl group, ethoxyphenyl group, butoxyphenyl group, decyloxyphenyl group, chlorophenyl group, dichlorophenyl group, bromophenyl group, cyanophenyl group, acetylphenyl group, methoxycarbonylphenyl group, ethoxycarbonylphenyl group, butoxycarbonylphenyl group, acetamidephenyl group, propioamidophenyl group, and dodecyloylamidophenyl group).

When X⁰ is -Ph- (phenylene group), the ring may have thereon substituents. Examples of the substituent that may be introduced include halogen atoms (e.g., chlorine atom and bromine atom), alkyl groups (e.g., methyl group, ethyl group, propyl group, butyl group, chloromethyl group, and methoxymethyl group), and alkoxy groups (e.g., methoxy group, ethoxy group, propyloxy group, and butoxy group).

In the formula (II), Q¹ represents an alkyl group having 10 to 22 carbon atoms or an alkenyl group having 10 to 22 carbon atoms.

Next, the polymerizable double bond group represented by the formula (III) is described below.

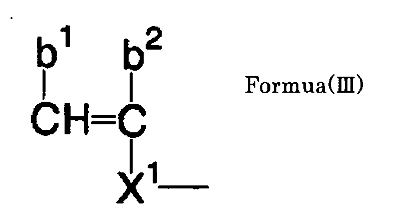

In the above formula (III), b¹ and b² may be the same or different each other, and represent the same members as a¹ and a² in the above formula (II).
X¹ represents the same member as X⁰ in the formula (II), and is preferably, -COO-, -OCO-, -O-, -CH₂OCO- or -CH₂COO-.

Specific examples of the polymerizable double bond group represented by the formula (III) include CH₂=CH-COO-, CH₂=C(CH₃)-COO-, CH₃-CH=CH-COO-, CH₂=C(CH₂COOCH₃)-COO-, CH₂=C(CH₂COOH)-COO-, CH₂=CH-CONH-, CH₂=C(CH₃)-CONH-, CH₃-CH=CH-CONH-, CH₂=CH-OCO-, CH₂=CH-CH₂-OCO-, CH₂=CH-O-, CH₂=C(COOH)-CH₂-COO-, CH₂=C(COOCH₃)-CH₂-COO-, and CH₂=CH-Ph-.

Such polymerizable double bond groups may be directly bonded, or may be bonded via a linking group to just one end of a polymer main chain represented by the formula (II). The linking groups used above are constructed form any combination of groups of atoms which have carbon-carbon bonds (single bonds or double bonds), carbon-hetero atom bonds (wherein the hetero atom is, for example, oxygen, sulfur, nitrogen or silicon atom), and hetero atom-hetero atom bonds. Specific examples of the linking group include linking groups such as -CR⁷R⁸- [wherein R⁷ and R⁸ each independently represent a hydrogen atom, a halogen atom (e.g., fluorine atom, chlorine atom, and bromine atom), a cyano group, a hydroxyl group or an alkyl group (e.g., methyl group, ethyl group, and propyl group)], -(CH=CH)-, -C₅H₁₀ -(or cyclohexylene group), -Ph- (phenylene group)-, -O-, -S-, -CO-, -NR₅-, -COO-, -SO₂-, -CONR⁹-, -SO₂NR⁹-, -NHCOO-, -NHCONH-, -SiR⁹R¹⁰- [wherein R⁹ and R¹⁰ each independently represent a hydrogen atom or a hydrocarbon group such as aliphatic group represented by D¹ in the above formula (I)], and linking group constituted of two or more of these linking groups.

Said macromonomer can be prepared using conventionally known synthesis methods, such as: (1) an ionic polymerization method in which various reagents are reacted with the terminal of a living polymer obtained by anionic polymerization or cationic polymerization to introduce polymerizable double bonds; (2) a radical polymerization method in which oligomers having terminal reactive groups obtained by radical polymerization are reacted with various reagents using polymerization initiators and/or chain transfer agents containing reactive groups such as carboxyl groups, hydroxyl groups or amino groups within the molecule to introduce polymerizable double bonds; and (3) a poly-condensation method in which polymerizable double bonds are introduced into oligomers obtained by polyaddition or polycondensation reactions.

More specifically, the macromonomer can be synthesized in accordance with the methods described in following reviews and references and patents cited therein: P. Dreyfuss & R. P. Quirk, Encycl. polym. Sci. Eng, 7, 551 (1987), P, F. Rempp & E. Franta, Adv. Polym. Sci., 58, 1 (1984), V Percec, Appl. Polym. Sci., 285, 95 (1984), R. Asami, M. Taka Ri, Makvamol. Chem. Suppl., 12, 163 (1985), P. Rempp et al, Makva mol. Chem. Suppl., 8, 3 (1984), Yusuke Kawakami, "Kagaku Kogyo (Chemical Industry" 38, 56 (1987), Yuya Yamashita "Polymer (Kobunshi)", 31, 988 (1982), Shiro Kobayashi "Polymer (Kobunshi)", 30, 625 (1981), Toshinobu Higashimura, "Journal of the Adhesion Society of Japan (Nippon Setchaku Kyokaishi)", 18, 536 (1982), Koich Ito, "Polymer Processing (Kobuinshi Kako)", 35, 262 (1986) and Kishiro Azuma and Takashi Tsuda, "Kino Zairyo (Functional Materials)" 1987, No. 10, 5.

Examples of the polymerization initiator containing reactive groups within the molecule used in the above method (2) include azobis compounds such as 4,4'-azobis(4-cyanovaleric acid), 4,4'-azobis(4-cyanovaleric acid chloride), 2,2'-azobis(2-cyanopropanol), 2,2'-azobis(2-cyano pentanol), 2,2'-azobis[2-(5-hydroxy-3,4,5,6-tetrahydropyrimidine-2-yl)propane], 2,2'-azobis(2-methyl-N-[1,1-bis(hydroxymethyl)-2-hydroxy ethyl]propioamide), 2,2'-azobis{2-methyl-N-[1,1-bis(hydroxymethyl)ethyl]propioamide}, 2,2'-azobis[2-methyl-N-(2-hydroxyethyl)propioamide], 2,2'-azobis(2-amidinopropane), 2,2'-azobis[2-methyl-N-(2-hydroxy ethyl)-propioamide], 2,2'-azobis[2-(5-methyl-2-imidazoline-2-yl)propane], 2,2'-azobis[2-(4,5,6,7-tetrahydro-1H-1,3-diazepine-2-yl)propane], 2,2'-azobis[2-(3,4,5,6-tetrahydro pyrimidine-2-yl)propane], 2,2'-azobis{2-[1-(2-hydroxyethyl)-2-imidazoline-2-yl]propane}, 2,2'-azobis[N-(2-hydroxyethyl)-2-methyl-propionamidine], and 2,2'-azobis[N-(4-aminophenyl)-2-methyl propionamidine].

Examples of the chain transferring agent containing reactive groups within the molecule include mercapto compounds containing the reactive groups or substituents from which the reactive groups can be derived (e.g., thioglycollic acid, thiomalic acid, thiosalicylic acid, 2-mercaptopropionic acid, 3-mercaptopropionic acid, 3-mercaptobutyric acid, N-(2-mercapto propionyl)glycine, 2-mercaptonicotinic acid, 3-[N-(2-mercaptoethyl)carbamoyl]propionic acid, 3-[N-(2-mercaptoethyl)amino]propionic acid, N-(3-mercapto propionyl)alanine, 2-mercaptoethanesulfonic acid, 3-mercaptopropanesulfonic acid, 4-mercaptobutanesulfonic acid, 2-mercaptoethanol, 3-mercapto-1,2-propanediol, 1-mercapto-2-propanol, 3-mercapto-2-butanol, mercapto phenol, 2-mercaptoethylamine, 2-mercaptoimidazole, and 2-mercapto-3-pyridinol), and iodized alkyl compounds containing the reactive groups or substituents from which the reactive groups can be derived (e.g., iodoacetic acid, iodopropionic acid, 2-iodoethanol, 2-iodoethanesulfonic acid, and 3-iodopropanesulfonic acid). Preferable examples include mercapto compounds.

The amount of these polymerization initiators and chain transferring agents is each 0.1 to 10 parts by mass, preferably 0.5 to 5 parts by mass with respect to 100 parts by mass of the total monomer used in the radical polymerization.

The weight average molecular weight of the macromonomer (MM) thus obtained must be in the range of 1 × 10³ to 5 × 10⁴, preferably in the range of 3 × 10³ to 3 × 10⁴ to adjust the molecular weight of the comb copolymer within the range described later.

The comb copolymer used in the invention preferably contains the macromonomer having the above structure in the range of 10 to 90% by mass, more preferably in the range of 20 to 80% by mass.

When the content of the macromonomer is within the range, the average particle diameter of the specific particles (B) obtained by polymerization granulation becomes uniform, and the redispersibility of the thus obtained specific particles is significantly improved.

The weight average molecular weight of the comb copolymer used in the invention is preferably in the range of 5 × 10³ to 5 × 10⁵, more preferably in the range of 1 × 10⁴ to 2 × 10⁵ from the viewpoint of storage stability, redispersibility and dispersion stability.

### (Star copolymer)

The star copolymers used in the invention are copolymers having a weight average molecular weight of 1 × 10⁴ to 1 × 10⁶ in which at least three polymer chains of the A-B type block copolymer are linked to the center organic molecule.

Wherein, the sequence of the block A and block B in the polymer chain is such that the polymer main chain of the block A is linked to the block B at one end, and linked to an organic molecule at the other end. The structure is schematically represented by the following formula (IV).

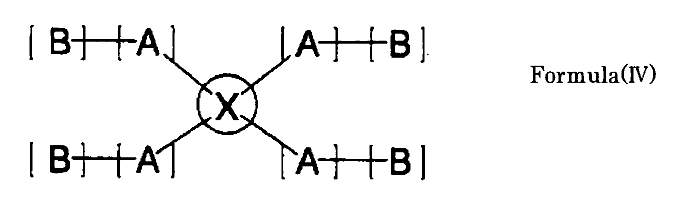

In the above formula (IV), X represents an organic molecule, [A] represents the block A, [B] represents the block B and [A]-[B] represents a polymer chain.

The weight composition ratio between the blocks A and B in the star copolymer in the invention is 1 to 50 / 99 to 50, preferably 5 to 40 / 95 to 60.

In the first place, the block A that composes the polymer chain of the A-B type block copolymer bonded to an organic molecule is described below.

The block A is constituted of polymerization components containing one or more polar groups selected from the group consisting of phosphono group, carboxyl group, sulfo group, hydroxyl group, formyl group, amino group, -P(=O)(OH)R¹group, -CONR³R⁴ group, -SO₂NR³R⁴, and cyclic acid anhydride-containing group and/or one or more polymerization components corresponding to said monofunctional monomer (b).

Thus, the block A is composed of the polymerization components corresponding to the monofunctional monomer (b) and/or said polymerization components containing specific polar groups.

In the specific polar groups, in -P(=O)(OH)R¹ group, R¹ represents a -R² group or a -OR² group, and R² represents a hydrocarbon group having 1 to 10 carbon atoms. Preferable examples of the hydrocarbon group represented by R² include aliphatic groups having 1 to 8 carbon atoms that may be substituted (e.g., methyl group, ethyl group, propyl group, butyl group, pentyl group, hexyl group, butenyl group, pentenyl group, hexenyl group, 2-chloroethyl group, 2-cyanoethyl group, cyclopentyl group, cyclohexyl group, benzyl group, phenethyl group, chlorobenzyl group, and bromobenzyl group), and aromatic groups that may be substituted (e.g., phenyl group, tolyl group, xylyl group, mesityl group, chlorophenyl group, bromophenyl group, methoxyphenyl group, and cyanophenyl group).

In the specific polar groups, -CONR³R⁴ group, and -SO₂NR³R⁴ group, R³and R⁴ each independently represent a hydrogen atom or a hydrocarbon group (hydrocarbon group having 1 to 10 carbon atoms, preferably having 1 to 8 carbon atoms that may be substituted). Specific examples of the hydrocarbon group represented by R³ or R⁴ include the same members as said hydrocarbon groups represented by R².

The cyclic anhydride-containing groups in the specific polar groups are groups containing at least one cyclic acid anhydride, and examples of the contained cyclic acid anhydride include aliphatic dicarboxylic acid anhydrides, and aromatic dicarboxylic acid anhydrides. Examples of the aliphatic dicarboxylic acid anhydrides include succinic acid anhydride, glutaconic acid anhydride, maleic acid anhydride, cyclopentane-1,2-dicarboxylic acid anhydride, cyclohexane-1,2-dicarboxylic acid anhydride, and 2,3-bicyclo[2,2,2]octane dicarboxylic acid anhydride. These aliphatic dicarboxylic acid anhydrides may be substituted with, for example, halogen atoms such as chlorine atom and bromine atom, or alkyl groups such as methyl group, ethyl group, butyl group, and hexyl group

Examples of the aromatic dicarboxylic acid anhydride include phthalic acid anhydride, naphthalene-dicarboxylic acid anhydride, pyridine-dicarboxylic acid anhydride, and thiophene-dicarboxylic acid anhydride. These aromatic dicarboxylic acid anhydrides may be substituted with, for example, halogen atoms such as chlorine atom and bromine atom, alkyl groups such as methyl group, ethyl group, propyl group, and butyl group, hydroxyl groups, cyano groups, nitro groups, alkoxycarbonyl groups (wherein the alkoxy group is, for example, methoxy group or ethoxy group).

The amino group in the specific polar groups is -NH₂, -NHR⁵ or -NR⁵R⁶. R⁵ and R⁶ each independently represent a hydrocarbon group having 1 to 10 carbon atoms, preferably having 1 to 8 carbon atoms, further preferably having 1 to 7 carbon atoms. Specific examples thereof include the same members as said hydrocarbon groups represented by R².

More preferable examples of said hydrocarbon groups represented by R², R³, R⁴, R⁵, and R⁶ include alkyl groups, benzyl groups, and phenyl groups having 1 to 4 carbon atoms that may be substituted.

The monomers corresponding to the polymerization components containing such specific polar groups are any monofunctional monomers containing at least one specific polar group. Examples of such compounds are described in "Polymer Data Reference Book, Basic Edition (Kobunshi Data Handbook Kisohen), edited by The Society of Polymer Science, Japan, Baifukan Co., Ltd. (1986). Specific examples include half ester derivatives of vinyl groups or allyl groups of following compounds, and ester derivatives and amide derivatives of these carboxylic acids or sulfonic acids containing said polar groups in their substituents: acrylic acid, α- and /or β-substituted acrylic acid (e.g., α-acetoxy substituted, α-acetoxy methyl substituted, α-(2-amino)methyl substituted, α-chloro substituted, α-bromo substituted, α-fluoro substituted, α-tributylsilyl substituted, α-cyano substituted, β-chloro substituted, β-bromo substituted, α-chloro-β-methoxy substituted and α,β-dichloro substituted), methacrylic acid, itaconic acid , itaconic acid half esters, itaconic acid half amides, crotonic acid, 2-alkenyl carboxylic acids (e.g., 2-pentenoic acid, 2-methyl-2-hexenoic acid, 2-octenoic acid, 4-methyl-2- hexenoic acid, and 4-ethyl-2 octenoic acid), maleic acid, maleic acid half esters, maleic acid half amides, vinylbenzene carboxylic acid, vinylbenzene sulfonic acid, vinylsulfonic acid, vinyl phosphonic acid, and dicarboxylic acids.

Specific examples of such compounds include following compounds. In the following examples (P-1) to (P-20), e represents -H, -CH₃, -Cl, -Br, -CN, or -CH₂COOCH₃, f represents -H or -CH₃, n represents an integral of 2 to 10, m represents an integral of 1 to 10, and p represents an integral of 1 to 4 X³ represents -COOH, -O-P(=O)(OH)₂, -SO₃H, -OH, -NR^{a}R^{b}, -CHO or -O-P(=O)(OH)R^{a}, wherein R^{a} and R^{b} each independently represent an alkyl group having 1 to 4 carbon atoms. X⁴ represents -COOH or -OH.

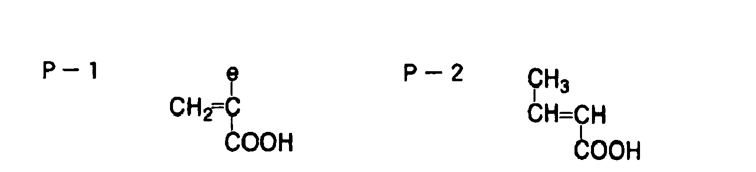

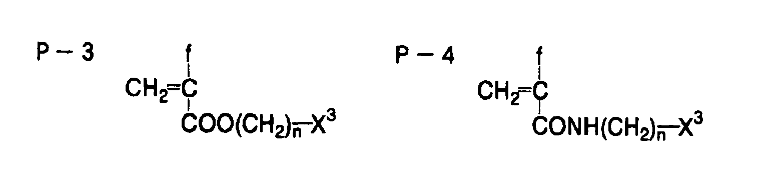

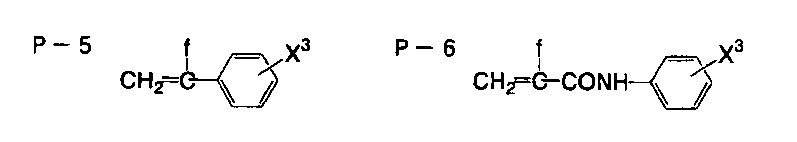

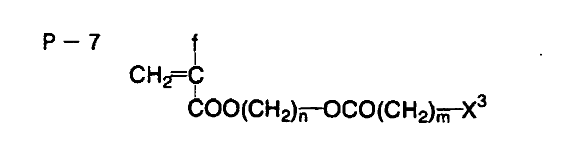

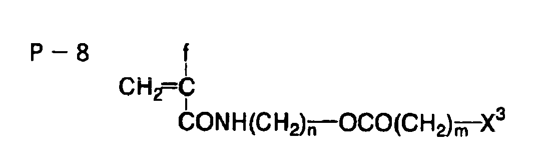

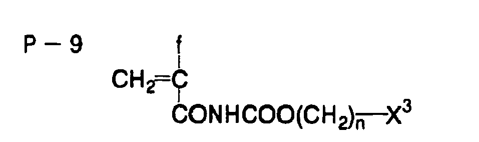

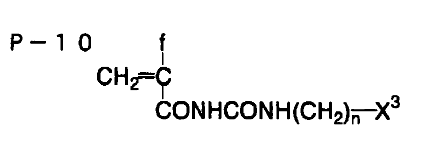

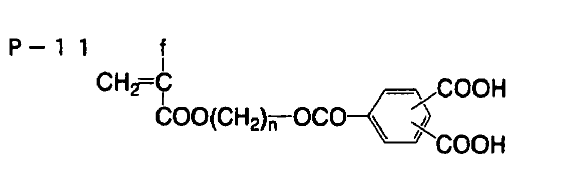

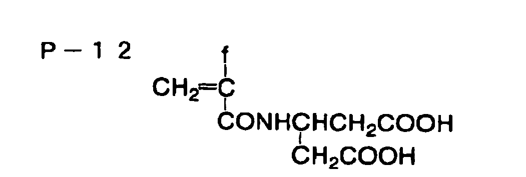

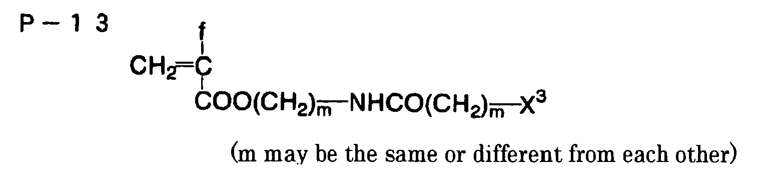

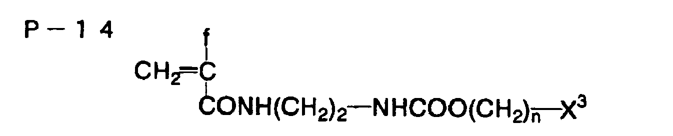

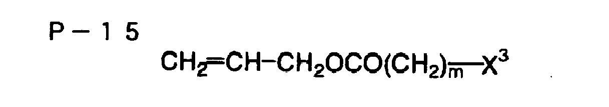

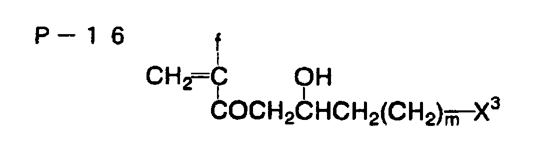

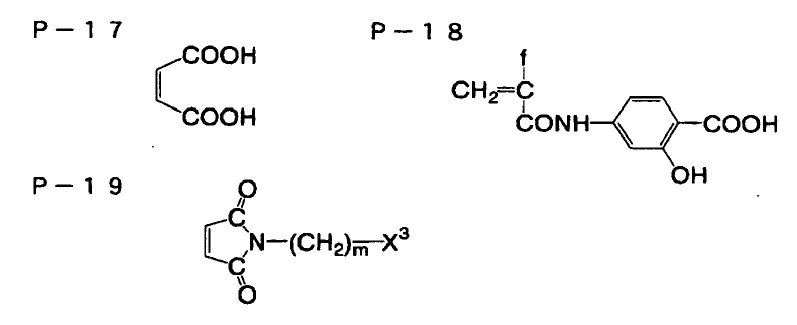

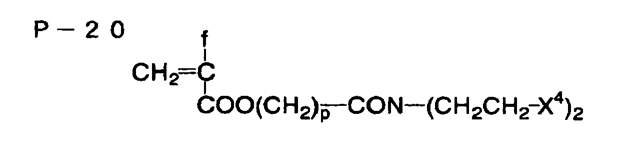

The content of the polymerization component having specific polar groups contained in the block A is preferably 1 to 30 parts by mass, more preferably 1 to 15 parts by mass with respect to 100 parts by mass of the star copolymer.

When no polymerization component having specific polar groups is present in the block A, the content of the polymer component corresponding to said functional monomer (A) is preferably 5 to 50 parts by mass, more preferably 10 to 40 parts by mass with respect to 100 parts by mass of the dispersant.

Next, the block B that composes the polymer chain of the A-B type block copolymer bonded to an organic molecule is described below.

The block B comprises at least one polymer component composed of the repeating units represented by the following formula (V).

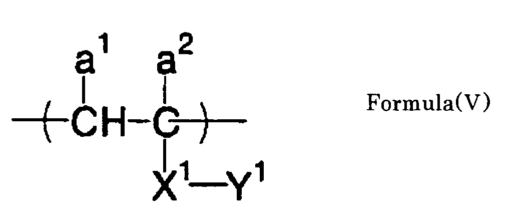

In the above formula (V), X¹ preferably represents -COO-, -OCO- or -O-.
Y¹ preferably represents an alkyl group or an alkenyl group having 10 or more carbon atoms that may be straight-chain or branched-chain. Specific examples include decyl group, dodecyl group, tridecyl group, tetradecyl group, hexadecyl group, octadecyl group, eicosanyl group, docosanyl group, decenyl group, dodecenyl group, tridecenyl group, hexadecenyl group, octadecenyl group, and linoleyl group.

a¹ and a² may be the same or different from each other, and each independently represent preferably a hydrogen atom, a halogen atom (e.g., chlorine atom and bromine atom), a cyano group, an alkyl group having 1 to 3 carbon atoms (e.g., methyl group, ethyl group, and propyl group), -COO-Z¹ or -CH₂COO-Z¹, wherein Z¹ represents a hydrogen atom or a hydrocarbon group having 22 or less carbon atoms that may be substituted (e.g., alkyl group, alkenyl group, aralkyl group, alicyclic group, and aryl group).

Said Z¹ is specifically a hydrogen atom or a hydrocarbon group, and preferable examples of the hydrocarbon group include alkyl groups having 1 to 22 carbon atoms that may be substituted (e.g., methyl group, ethyl group, propyl group, butyl group, heptyl group, hexyl group, octyl group, nonyl group, decyl group, dodecyl group, tridecyl group, tetradecyl group, hexadecyl group, octadecyl group, eicosanyl group, docosanyl group, 2-chloroethyl group, 2-bromoethyl group, 2-cyano ethyl group, 2-methoxycarbonylethyl group, 2-methoxyethyl group, and 3-bromopropyl group), alkenyl groups having 4 to 18 carbon atoms that may be substituted (e.g., 2-methyl-1-propenyl group, 2-butenyl group, 2-pentenyl group, 3-methyl-2-pentenyl group, 1-pentenyl group, 1-hexenyl group, 2-hexenyl group, 4-methyl-2-hexenyl group, decenyl group, dodecenyl group, tridecenyl group, hexadecenyl group, octadecenyl group, and linoleyl group), aralkyl groups having 7 to 12 carbon atoms that may be substituted (e.g., benzyl group, phenethyl group, 3-phenylpropyl group, naphthylmethyl group, 2-naphthylethyl group, chlorobenzyl group, bromobenzyl group, methylbenzyl group, ethylbenzyl group, methoxybenzyl group, dimethylbenzyl group, and dimethoxybenzyl group), alicyclic groups having 5 to 8 carbon atoms that may be substituted (e.g., cyclohexyl group, 2-cyclohexylethyl group, and 2-cyclopentylethyl group), and aromatic groups having 6 to 12 carbon atoms that may be substituted (e.g., phenyl group, naphthyl group, tolyl group, xylyl group, propylphenyl group, butylphenyl group, octyl phenyl group, dodecyl phenyl group, methoxyphenyl group, ethoxyphenyl group, butoxyphenyl group, decyloxyphenyl group, chlorophenyl group, dichlorophenyl group, bromophenyl group, cyanophenyl group, acetylphenyl group, methoxycarbonylphenyl group, ethoxycarbonylphenyl group, butoxycarbonylphenyl group, acetamidephenyl group, propioamidephenyl group, and dodecylamidephenyl group).

The repeating units in the block B represented by the formula (V) may be used in combination of two or more thereof.

In addition to the repeating unit represented by the formula (V), the block B may contain other repeating units as copolymerization components. The other copolymerization components may be any components constituted of monomers copolymerizable with the monomer corresponding to the repeating unit represented by the formula (V). The other copolymerization components are preferably used in a range not exceeding 20 parts by mass with respect to 100 parts by mass of the block B. If the content exceeds 20 parts by mass, the dispersibility of the specific particles in the invention may tend to deteriorate.

The polymerization component represented by the formula (V) contained in the block B is preferably 50 to 99 parts by mass, more preferably 60 to 95 parts by mass with respect to 100 parts by mass of the star copolymer.

If the proportion of the star copolymers used in the invention is less than said predetermined proportions (that is, the proportions of the blocks A and B or the proportion of the polymerization component contained in the block B represented by the formula (V)), the redispersion stability of the specific particles may be deteriorated. On the other hand, if the proportion exceeds the predetermined proportions, the monodispersibility of the particle distribution of the specific particles (B) may tend to deteriorate.

The organic molecule having at least three polymer chains of said A-B type block copolymer is not particularly limited as long as it has a weight average molecular weight of 1,000 or less. Examples thereof include trivalent or more than trivalent hydrocarbon residues. However, specific examples of the organic molecule according to the invention are not limited thereto.

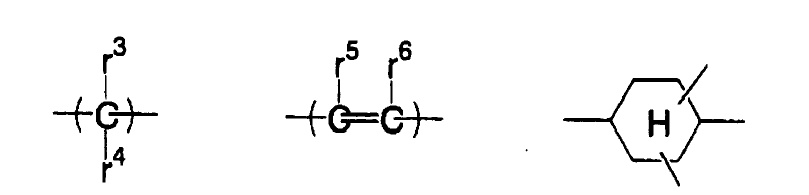

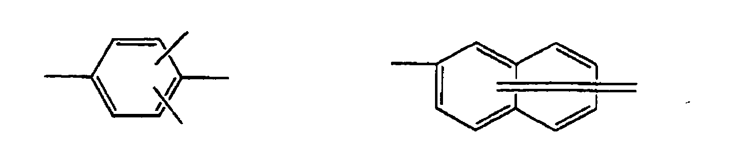

In the above example, r³ to r⁶ each independently represent a hydrogen atom or a hydrocarbon group. At least one of r³ and r⁴, and at least one of r⁵ and r⁶ are linked to the polymer chain of the A-B type block copolymer.

The organic molecule is constituted of said hydrocarbon residue alone or any combinations thereof. The combinations may contain linking units such as -O-, -S-, -N(r⁹)-, -COO-, -CON(r⁹)-, -SO₂-, or -SO₂N(r⁹)- (wherein, r⁹ represents a hydrogen atom or a hydrocarbon group), -NHCOO-, -NHCONH-, and heterocycles containing hetero atoms such as oxygen atom, sulfur atom, and nitrogen atom (e.g., thiophene ring, pyridine ring, pyran ring, imidazole ring, benzimidazole ring, furan ring, piperidine ring, pyrazine ring, pyrrole ring, and piperazine ring). These linking units may be used alone or in combination thereof.

Other examples of the organic molecule include those constituted of the combinations of following linking groups and above linking units. However, specific examples of the organic molecule according to the invention are not limited thereto.

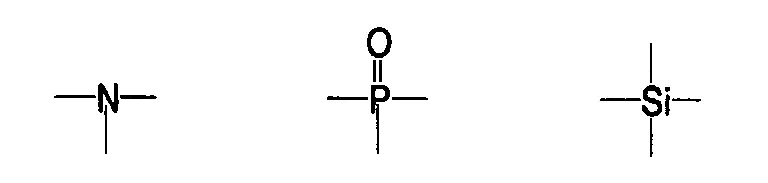

The star dispersant used in the invention contains conventionally known polar groups, and can be synthesized by the method for synthesizing a star polymer from a monomer having polymerizable double bond groups. An example is polymerization reaction using carbanion as initiator. Specifically, the dispersant can be synthesized according to the method described in M. Morton, T. E. Helminiak et al "J. Polym. Sci. " 57, 471 (1962), B. Gordon III, M, Blumenthal, J. E. Loftus et al "Polym, Bull." 11, 349 (1984), R. B, Bates, W. A. Beavers et al "J. Org. Chem." 44, 3800 (1979).

When the above reaction is used, said "specific polar group" is polymerized in the form of a blocked functional group, and thereafter the blocking group is eliminated. Blocking of the specific polar group by blocking groups and the elimination of the blocking groups (deblocking reaction) can be readily performed using conventionally known knowledge. For example, various methods are described in the aforementioned references regarding the synthesis methods. Other methods that can be used are appropriately selected from those described in detail in reviews such as Yoshio Iwakura and Keisuike Kurita, "Reactive Polymer (Hannosei Kobunshi)", Kodansha Ltd. Publishers (1977), T. W. Green "Protective Groups in Organic Synthesis" (John Wiley & Sons, 1981), J. F. W. McOmic "Protective Groups in Organic Chemistry" (Plenum Press, 1973).

The synthesis can be performed by a method of polymerizing a monomer having said "specific functional group" in an unblocked form under photoirradiation using a compound containing a dithiocarbamate group and/or a compound having a xanthate group as initiators. The synthesis methods described in Takayuki Otsu, "Polymer (Kobunshi)", 37, 248 (1988), Toshikazu Himori and Ryuichi Otsu, "polym. Rep. Jap." 37, 3508 (1988), JP-ANos. 64-11, 64-26619, Nobuyuki Azuma et al., "Polymer Preprints, Japan" 36 (6), 1511 (1987), and M. Niwa, N. Higashi et al, "J. Macromol. Sci. Cem." A24 (5), 567 (1987) can be used.

The weight average molecular weight (Mw) of the star dispersant in the invention is 1 × 10⁴ to 1 × 10⁶, preferably 2 × 10⁴ to 5 × 10⁵ from the viewpoint of the storage stability, redispersibility, and dispersion stability.

### (Partially crosslinked copolymer)

The partially crosslinked copolymers used in the invention are copolymers containing at least one repeating unit represented by the following formula (VI), and are a resin having a partially crosslinked polymer main chain soluble in said nonaqueous solvent (a).

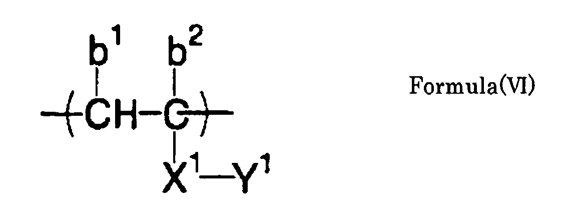

In the above formula (VI), X¹ preferably represents -COO-, -OCO-, -CH₂OCO-, -CH₂COO- or -O-, more preferably represents -COO-, -CH₂COO- or -O-.
Y¹ preferably represents an alkyl group, an alkenyl group or an aralkyl group having 10 to 22 carbon atoms that may be substituted. Examples of the substituent that can be introduced into these groups include a halogen atom (e.g., fluorine atom, chlorine atom, and bromine atom), -O-Z², -COO-Z², and -OCO-Z² (wherein Z² represents an alkyl group having 6 to 22 carbon atoms, e.g., hexyl group, octyl group, decyl group, dodecyl group, hexadecyl group, and octadecyl group). More preferably, Y¹ represents an alkyl group or an alkenyl group having 10 to 22 carbon atoms. Specific examples thereof include decyl group, dodecyl group, tridecyl group, tetradecyl group, hexadecyl group, octadecyl group, docosanyl group, eicosanyl group, decenyl group, dodecenyl group, tetra decenyl group, hexadecenyl group, and octadecenyl group.

b¹, and b² may be the same of different from each other, and preferably represent a hydrogen atom, a halogen atom, a cyano group, a hydrocarbon group having 1 to 8 carbon atoms, -COO-Z¹ or -COO-Z¹ via a hydrocarbon group having 1 to 8 carbon atoms(wherein Z¹ represents a hydrocarbon group having 1 to 22 carbon atoms).

Specific examples thereof include hydrogen atom, halogen atoms (e.g., fluorine atom, chlorine atom, and bromine atom), cyano groups, alkyl groups having 1 to 3 carbon atoms, -COO-Z³ or -CH₂COO-Z³ (wherein Z³ represents an aliphatic group having 1 to 22 carbon atoms, e.g., methyl group, ethyl group, propyl group, butyl group, hexyl group, octyl group, decyl group, dodecyl group, tridecyl group, tetradecyl group, hexadecyl group, octadecyl group, docosanyl group, pentenyl group, hexenyl group, heptenyl group, octenyl group, decenyl group, dodecenyl group, tetra decenyl group, hexadecenyl group, and octadecenyl group, wherein these alkyl groups, and alkenyl groups may have the same substituents as said members represented by Y¹).

The partially crosslinked copolymer of the invention contains at leaast one monomer corresponding to the repeating units represented by the above formula (VI), and has a partially crosslinked polymer main chain.

The introduction of a crosslinking structure into a polymer main chain can be performed by generally known methods, such as (1) a polymerization method in which a monomer is polymerized in the presence of a multifunctional monomer, and (2) a crosslinking method in which a polymer having functional groups capable of proceeding crosslinking reaction is crosslinked using polymerization reaction.

The above method (1) is more effective to produce the partially crosslinked copolymer in the invention from the viewpoint of easiness of synthesis (for example, the method causes less problems such as impurity contamination caused by long-time reaction , nonquantitative reaction, use of reaction accelerators or other factors).

The above method (1) is preferably performed by polymerizing a monomer having two or more polymerizable functional groups in the presence of the monomer corresponding to the repeating units represented by the above formula (VI) to crosslink between the polymer chains.

Specific examples of the polymerizable functional group include CH₂=CH-, CH₂=CH-CH₂-, CH₂=CH-CO-O-, CH₂=C(CH₃)-CO-O-, CH₃-CH=CH-CO-O-, CH₂=CH-CONH-, CH₂=C(CH₃)-CONH-, CH₂=C(CH₃)-CONHCOO-, CH₂=C(CH₃)-CONHCONH-, CH₃-CH=CH-CONH-, CH₂=CH-O-CO-, CH₂=C(CH₃)-O-CO-, CH₂=CH-CH₂-O-CO-, CH₂=CH-NHCO-, CH₂=CH-CH₂-NHCO-, CH₂=CH-SO₂-, CH₂=CH-CO-, CH₂=CH-O-, and CH₂=CH-S-. The above described monomers have two or more of the above polymerizable functional groups that may be the same or different from each other.

Specific examples of the monomer having two or more of the polymerizable functional groups include monomers having the same polymerizable functional groups such as styrene derivatives such as divinyl benzene, and trivinyl benzene; methacrylic acid, acrylic acid or crotonic acid esters, vinyl ethers, and allyl ethers of polyvalent alcohols (e.g., ethylene glycol, diethylene glycol, triethylene glycol, polyethyleneglycol #200, #400, #600, 1,3-butylene glycol, neopentyl glycol, dipropylene glycol, polypropylene glycol, trimethylol propane, trimethylol ethane, and pentaerythritol) or polyhydroxy phenols (e.g., hydroquinone, resorcin, catechol, and derivatives thereof); vinyl esters, allyl esters, vinyl amides, and allyl amides of dibasic acids (e.g., malonic acid, succinic acid , glutaric acid, adipic acid, pimelic acid, maleic acid, phthalic acid, and itaconic acid); condensates of polyamine (e.g., ethylene diamine, 1,3-propylene diamine, and 1,4-butylene diamine), and carboxylic acid having vinyl group(s) (e.g., methacrylic acid, acrylic acid, crotonic acid, and allylic acid).

Examples of the monomer having different polymerizable functional groups include ester derivatives, and amide derivatives having vinyl groups such as carboxylic acids having vinyl groups [e.g., reactants of methacrylic acid, acrylic acid, methacryloyl acetic acid, acryloyl acetic acid, methacryloyl propionic acid, acryloyl propionic acid, itaconiloyl acetic acid, itaconiloyl propionic acid, carboxylic acid anhydrides, and alcohol or amine (e.g., allyloxycarbonyl propionic acid, allyloxycarbonyl acetic acid, 2-allyloxycarbonyl benzoic acid, and allylaminocarbonyl propionic acid)], specific examples thereof include vinyl methacrylate, vinyl acrylate, vinyl itaconate, allyl methacrylate, allyl acrylate, allyl itaconate, methacryloyl vinyl acetate, vinyl methacryloyl propionate, vinyl methacryloyl propionate, allyl methacryloyl propioate, vinyl methacrylate oxycarbonylmethyl ester, vinyl acrylate oxycarbonylmethyloxycarbonylethylene ester, N-allyl acrylamide, N-acryl methacrylamide, N-allylitaconic acid amide, and methacryloyl propionic acid allylamide; and condensates of aminoalcohols (e.g., aminoethanol, 1-aminopropanol, 1-aminobutanol, 1-aminohexanol, and 2-aminobutanol), and carboxylic acids containing vinyl groups.

Said monomer having two or more polymerizable functional group is used for polymerization at a content of 10% by mass or less, preferably 8% by mass or less of the total monomer, to form the partially crosslinked copolymers soluble in the nonaqueous solvent (a).

Specifically, the partially crosslinked dispersant used in the invention is preferably and easily synthesized by a known method of polymerizing the monomer corresponding to the repeating unit represented by the above formula (VI) in the presence of at least said multifunctional monomer polymerization initiators (e.g., azobis-based compounds and peroxides). The content of the polymerization initiator used in the polymerization is each 0.1 to 15% by mass, preferably 0.5 to 10% by mass with respect to 100 parts by mass of the total monomer.

The weight average molecular weight of the partially crosslinked dispersant of the invention is preferably in the range of 5 × 10³ to 1× 10⁶, more preferably in the range of 1 × 10⁴ to 2 × 10⁵ from the viewpoint of the adjustment of the particle diameter distribution and the solubility in the nonaqueous medium (a) of the specific particles obtained by polymerization granulation.

### (Crosslinking group- containing copolymer)

The crosslinking group-containing copolymer used in the invention is a random copolymer represented by the following formula (VII) comprising at least a copolymerization component (component X) soluble in the nonaqueous solvent (a) and another copolymerization component (component Y) at the terminal of the side chain that has a polymerizable double bond group copolymerizable with the specific particles obtained by polymerization granulation. Accordingly, the crosslinking group-containing copolymer is a resin soluble in the dispersion medium (A).

The component X in the formula (VII) may be constituted of a single copolymerization component, or two or more copolymerization components. The same applies to the component Y.

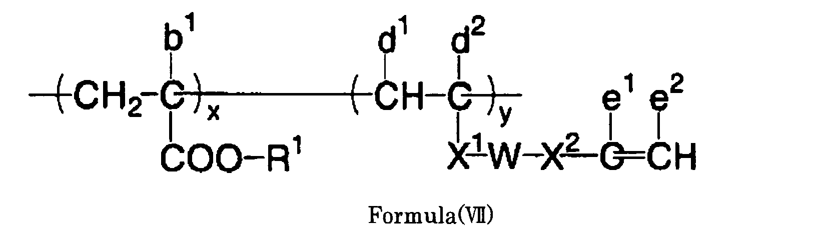

In the above formula (VII), R¹ represents an alkyl group or an alkenyl group having 10 to 32 carbon atoms, and these groups may be straight-chain or branched-chain. Specific examples thereof include decyl group, dodecyl group, tridecyl group, tetradecyl group, pentadecyl group, hexadecyl group, octadecyl group, eicosanyl group, docosanyl group, decenyl group, dodecenyl group, tridecenyl group, hexadecenyl group, octadecenyl group, eicosanyl group, docosanyl group, and linoleyl group. b¹ represents a hydrogen atom or an alkyl group having 1 to 4 carbon atoms (e.g., methyl group, ethyl group, propyl group, and butyl group), preferably represents a hydrogen atom or a methyl group. X¹ and X² each independently represent a single bond, -COO-, -CONH-, -CON(E²)- (wherein E² preferably represents an aliphatic group having 1 to 22 carbon atoms, wherein examples of the aliphatic group include alkyl group, alkenyl group, and aralkyl group), -OCO-, -CH₂OCO- or -O-, more preferably represent -COO-, -CONH -or -CON(E²)-.

d¹, d², e¹, and e² in the above formula (VII) each independently represent a hydrogen atom, a halogen atom, a cyano group or an alkyl group. Specific examples of the alkyl group include the specific examples of said aliphatic group having 1 to 20 carbon atoms that may be substituted and represented by D¹ in the above formula (I).

W represents a linking group containing a carbon atom, and/or a hetero atom. Examples of the hetero atom include oxygen atom, sulfur atom, nitrogen atom, and silicon atom.

The linking groups used above are constituted of any combination of groups of atoms which have carbon-carbon bonds (single bonds or double bonds), carbon-hetero atom bonds, hetero atom bond linking a hetero atom bonds, and heterocycle groups or so on.
Specific examples include following divalent groups.

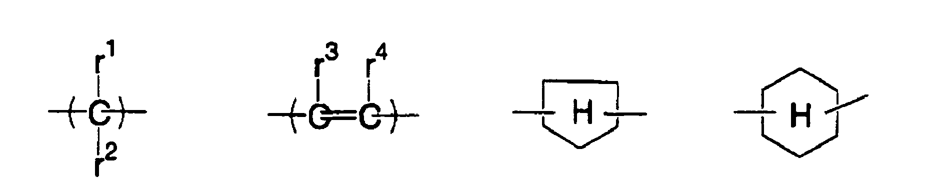

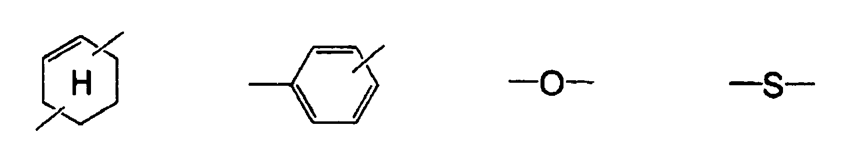

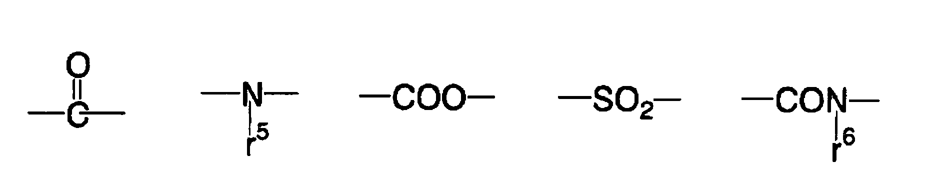

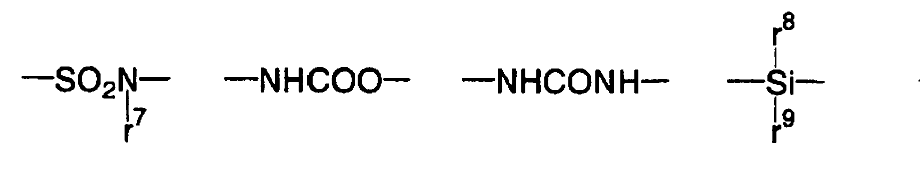

In the above examples of divalent groups, r¹ to r⁴ each independently represent a hydrogen atom, a halogen atom (e.g., fluorine atom, chlorine atom and bromine atom), a cyano group, a hydroxyl group, or an alkyl group (e.g., methyl group, ethyl group, and propyl group).

r⁵ to r⁷ each independently represent a hydrogen atom, an alkyl group (e.g., methyl group, ethyl group, propyl group, and butyl group) or the like.

r⁸ to r⁹ each independently represent a hydrogen atom, a hydrocarbon group having 1 to 8 carbon atoms (e.g., methyl group, ethyl group, propyl group, butyl group, pentyl group, hexyl group, benzyl group, phenetyl group, phenyl group, and tolyl group), or -Or¹⁰ (r¹⁰ represents the same member as the hydrocarbon group represented by r⁸).

Examples of the heterocycle group that can constitute W include heterocycles containing hetero atoms such as oxygen atom, sulfur atom, and nitrogen atom (e.g., thiophene ring, pyridine ring, pyran ring, imidazole ring, benzoimidazole ring, furan ring, piperidine ring, pyrazine ring, pyrrole ring, and piperazine ring).

The linking chain represented by [-X¹-W-X²-] contained in the component Y of the formula (VII) preferably contains a total number of atoms of 8 or more. The number of atoms constituting the linking chain unit that, for example, when X¹ represents -COO- or -CONH-, the oxo group (=O group) and the hydrogen atom are not contained in the number of atoms, and the carbon atom, the ether type oxygen atom and the nitrogen atom constituting the linking main chain are contained in the number of atoms. Therefore, in case of -COO- or -CONH-, the number of atoms is counted as 2.

Specific examples of the component having a polymerizable double bond group (component Y) are listed below, but the present invention is not limited thereto. In the following formulae (Y-1) to (Y-12), each symbol represents following members.

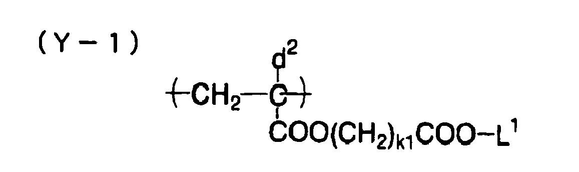

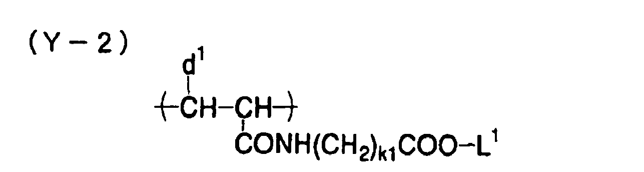

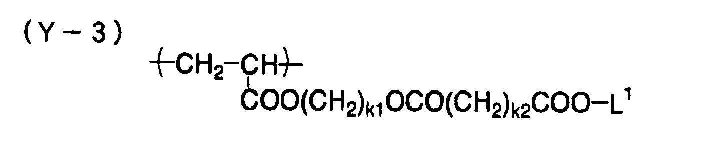

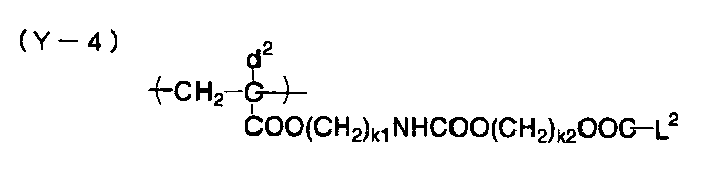

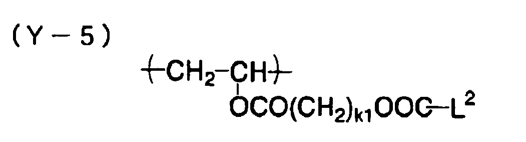

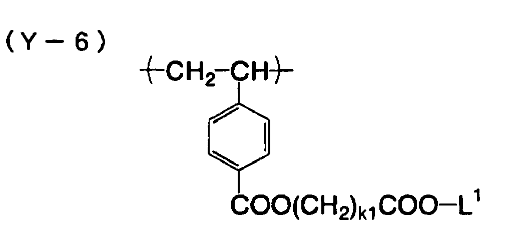

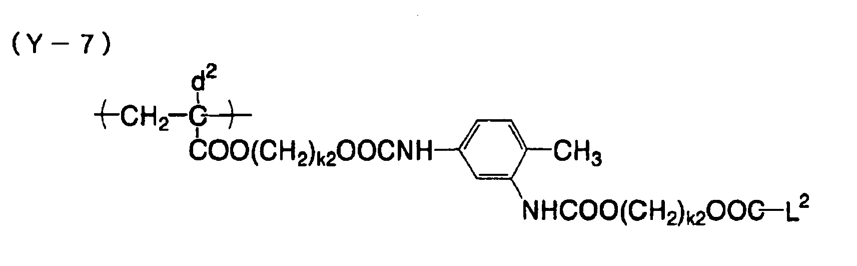

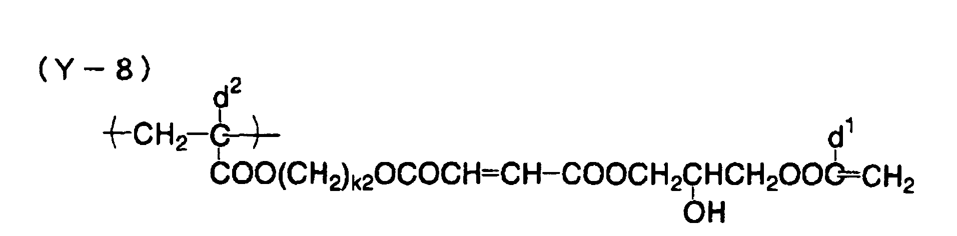

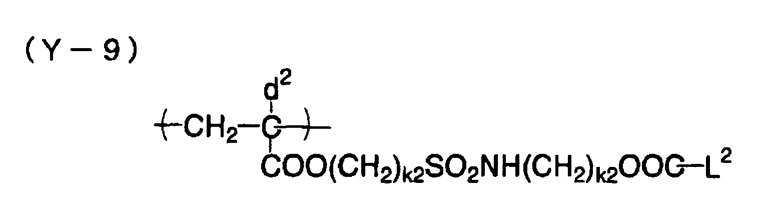

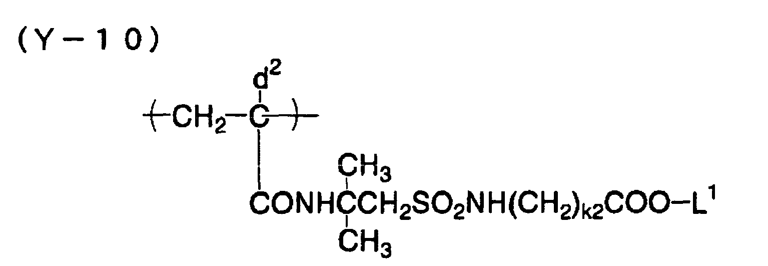

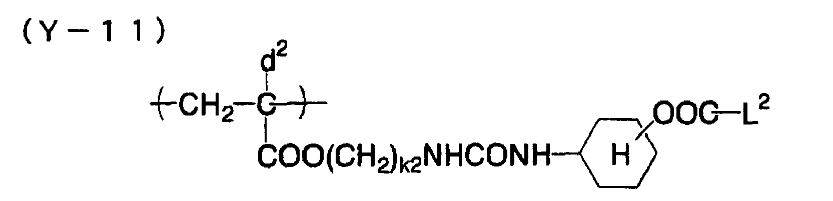

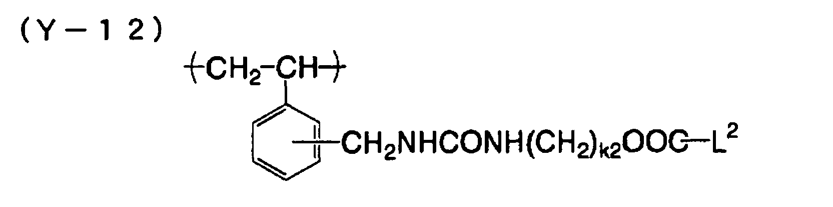

d¹; -H or -CH₃
d²; -H, -CH₃ , -Cl , or -CN
k¹; an integer of 4 to 12
k²; an integer of 2 to 6
L¹; 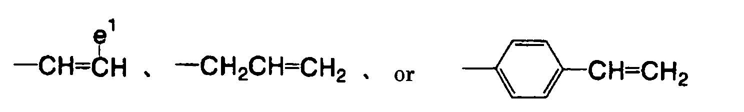 wherein e¹; -H or -CH₃
L² ; 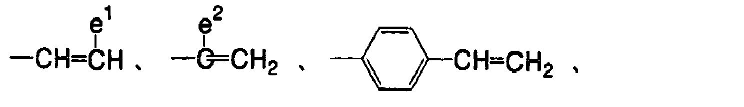 or -CH₂CH=CH₂
   wherein e²; -CH₃ , -Cl , or -CN

The crosslinking group-containing copolymer used in the invention can be readily synthesized by a conventionally known synthesis method. Specifically the copolymerization component (component Y) having polymerizable double bond groups is introduced by polymerizing monomer containing "specific reactive group" (e.g., -OH, -COOH, -SO₃H, -NH₂, -SH, -PO₃H₂, -NCO, -NCS, -COCl, -SO₂Cl, and epoxy group) together with a monomer corresponding to the component X in the formula (VII), followed by reacting with a reactive reagent having a polymerizable double bond group to introduce a polymerizable reactive group by polymerization reaction.

More specifically, the polymerizable double bond group can be introduced according to the methods described in following reviews and references cited therein: P. Dreyfuss & R. P. Quirk, Encycl. Polym. Sci. Eng., 7. 551 (1987), Yoshiki Chujo and Yuya Yamashita, "Dyes and Chemicals (Senryo to Yakuhin), 30, 232 (1985), Akira Ueda and Susumu Nagai, "Chemical and Industry (Kagaku to Kogyo), 60. 57 (1986), P. F. Rempp & E. Franta, Advances in Polymer Science, 58. 1 (1984), Koichi Ito, "Polymer Processing (Kobunshi Kako)", 35. 262 (1986), and V. Percec, Applied Polymer Science, 285. 97 (1984).

Another method in which a bifunctional monomer having functional groups having different reactivity in a radical polymerization is subjected to copolymerization reaction with a monomer corresponding to the component X to prepare a copolymer represented by the formula (VII) without the occurrence of gelation as described in JP-A-60-185962 is also utilized.

In the resin represented by the formula (VII), a weight ratio of component X/component Y is from 60/40 to 99/1, preferably from 85/15 to 98/2 for preventing the occurrence of gelation in the reaction mixture and the formation of coarse resin particles during the polymerization granulation reaction, and for improving the dispersion stability and redispersibility of the specific resin particles.

In the crosslinking group-containing copolymer used in the invention, the repeating units represented by the formula (VII) may be used in combination with other repeating units as the copolymerization components. The other copolymerization components may be any compounds as long as they are constituted of monomers copolymerizable with the monomer corresponding to the repeating units represented by the formula (VII).

The other copolymerization components are used at most 20 parts by mass to 100 parts by mass of the total polymerization component. If the content exceeds 20 parts by mass, the dispersibility of the specific particles used in the invention is deteriorated.

The weight average molecular weight (Mw) of the crosslinking group-containing copolymer used in the invention is 5 × 10³ to 10 × 10⁶, preferably 1 × 10⁴ to 2 × 10⁵ from the viewpoint of storage stability, redispersibility and dispersion stability.

### [Granulation method]

The specific particles (B) used in the invention is usually prepared by heat polymerization of said dispersant (c) and the monofunctional monomer (b) in the nonaqueous solvent (a) in the presence of a polymerization initiator such as benzoyl peroxide, azobisisobutyronitrile, or butyl lithium.

Specific examples of the synthesis method include (i) a method of adding a polymerization initiator to a mixed solution of the dispersant (c) and the monomer (b); (ii) a method of adding dropwise the monomer (b) together with a polymerization initiator to a solution of the dispersant (c); (iii) a method of adding a polymerization initiator and a part of the monomer (b) to a mixed solution of the total amount of the dispersant (c) and the remainder of the monomer (b); and (iv) a method of adding a mixed solution of the dispersant (c) and the monomer (b) together with a polymerization initiator to the nonaqueous solvent (a). Any of these methods can be used for the synthesis.

The content of the polymerization initiator is preferably 0.1 to 20% by mass, more preferably, 0.5 to 10% by mass with respect to the total amount of the monomer (b).

The polymerization temperature is about 40 to 180°C, preferably 50 to 120°C. The reaction time is preferably 3 to 15 hours.

When polar solvents such as alcohols, ketones, ethers, and esters are added to said nonaqueous solvent (a), or when unreacted portion of the monomer (b) remains in the solvent after polymerization granulation, it is preferable to remove them by evaporation by heating the solvent at a temperature higher than the boiling point of the nonaqueous solvent or the monomer, or by evaporation under reduced pressure.

The thus obtained nonaqueous dispersion resin particles [specific particles (B)] are fine particles having a volume average particle diameter of 0.8 µm or more and a uniform particle diameter distribution. The upper limit of the volume average particle diameter of the specific particles (B) is preferably 5.0 µm, more preferably, 1.0 to 4.0 µm, further preferably 1.2 to 3.0 µm from the viewpoint of dispersion stability, storage stability, and redispersibility.

The volume average particle diameter is measured by CAPA-500 (trade name of Horiba, Ltd.).

In the invention, the particle diameter of the specific particles (B) is controlled by various factors such as the type and concentration of the used monofunctional monomer (b), the type and concentration of the used dispersant, the type and concentration of the used solvent, the presence or absence of additives, and the reaction temperature. By adjusting these factors, the specific particles (B) having a desired particle diameter can be obtained.

The weight average molecular weight of the specific particles (B) used in the invention is preferably 1 × 10³ to 1 × 10⁶, more preferably 3 × 10³ to 5 × 10⁵, most preferably 5 × 10³ to 1 × 10⁵.

As the thermophysical property of the specific particles (B) used in the invention, the modulus of elasticity of them at room temperature (10 to 30°C in the invention) is preferably 1.0 × 10⁷ or higher, and the modulus of elasticity at the fixing temperature (in the invention 80 to 150°C) is preferably 5.0 × 10⁶ or lower. More preferably, the modulus of elasticity at room temperature is 1.0 × 10⁸ or higher, and that at the fixing temperature is 1.0 × 10⁶ or lower.

In the ink composition of the invention, the content of the specific particles (B) is preferably in the range of 90 to 1% by mass with respect to the total weight of the ink composition, more preferably in the range of 80 to 20% by mass, further preferably in the range of 70 to 3% by mass. If the content of the specific particles (B) is less than 1% by mass, the concentration of the specific particles (B) is decreased, which may cause the deterioration of the image forming properties. If the specific particles (B) are colored, the color concentration is deteriorated, which may cause the deterioration of visibility. If the content of the specific particles (B) exceeds 90% by mass, the viscosity increases, which may cause the deterioration of ejectability and the aggregation of the specific particles (B) to deteriorate storage stability and dispersibility.

The ink composition of the invention is an oil-based ink containing the dispersion medium (A) and the specific particles (B) having excellent dispersion stability, redispersibility, and storage stability (temporal stability). Moreover, since the ink composition of the invention can form fine droplets, it can form a high definition image with good reproducibility when used for ink jet recording system.

Moreover, in the invention, since the specific particles (B) have a larger particle diameter than conventional particles, they have a larger surface area that can be readily charged. Thus, the ink composition of the invention achieves good ejection stability and can be ejected at a low voltage even under an electrostatic ink jet recording system. Accordingly, a high-quality image is formed with good productivity.

In addition, since the ink composition of the invention comprises the specific particles (B) having a large particle diameter, ink droplets less tend to spread on a recording medium. By these advantages, image blurring can be prevented under various ink jet recording systems.

As described above, the ink composition of the invention achieves good ejection stability under various ink jet recording systems, and forms high-quality images without occurrence of blotting.

[Coloring material]

When the ink composition of the invention is used for image forming on a planographic printing plate, it is not necessarily to form a colored image. However, the ink composition may contain coloring materials for improving the visibility of the image area to be formed, or for forming a colored image with a colored ink composition.

As the coloring materials used in the ink composition of the invention, known dyes and pigments selected according to the intended use and the object can be used. For example, pigments are preferably used from the viewpoint of the color tone of the image recorded materials (printed materials) (for example, see "Pigment Dispersion Stabilization and Surface Treatment Techniques and Evaluation (Ganryo Bunsan Anteika to Hyomen Shori Gijutu Hyoka)", Technical Information Institute Co., Ltd., December 25, 2001, first edition. Hereinafter the reference may be referred to as reference 1.).

By changing the coloring materials, ink compositions of different four colors, yellow, magenta, cyan, and black can be prepared. In particular, pigments used in inks for offset printing or proof are preferable because they achieve the same color tone as offset printed materials.

On the other hand, when the ink composition is used for a planographic printing plate, the coloring materials are not particularly limited as long as they allow plate checking, and dyes that have been frequently used for planographic printing plates can be used as the coloring materials.

Examples of the pigments for yellow ink include monoazo pigments such as C. I. pigment yellow 1 and C.1 pigment yellow 74, disazo pigments such as C.I. pigment yellow 12 and C. I. pigment yellow 17, non-benzidine azo pigments such as C. I. pigment yellow 180, azo lake pigments such as C. I. pigment yellow 100, condensed azo pigments such as C. I. pigment yellow 95, acidic dye lake pigments such as C. I. pigment yellow 115, basic dye lake pigments such as C. I. pigment yellow 18, anthraquinone pigments such as flavanthron yellow, iso-indolinone pigments such as iso-indolinone yellow 3RLT, quinophthalone pigments such as quinophthalone yellow, isoindoline pigments such as isoindoline yellow, nitroso pigments such as C. I. pigment yellow 153, metal complex salt azometine pigments such as C. I.pigment yellow 117, and iso-indolinone pigments such as C. I. pigment yellow 139.

Examples of the pigments for magenta ink include monoazo pigments such as C. I. pigment red 3, disazo pigments such as C. I. pigment red 38, azo lake pigments such as C. I. pigment red 53:1 and C. I. pigment red 57:1, condensed azo pigments such as C. I. pigment red 144, acidic dye lake pigments such as C. I. pigment red 174, basic dye lake pigments such as C. I. pigment red 81, anthraquinone pigments such as C. I. pigment red 177, thio indigo pigments such as C. I.pigment red 88, perinone pigments such as C. I. pigment red 194, perylene pigments such as C. I. pigment red 149, quinacridone pigments such as C. I. pigment red 122, iso-indolinone pigments such as C. I. pigment red 180, and alizarin lake pigments such as C. I. pigment red 83.

Examples of the pigments for cyan ink include disazo pigments such as C. I. pigment blue 25, phthalocyanine pigments such as C. I. pigment blue 15, acidic dye lake pigments such as C. I. pigment blue 24, basic dye lake pigments such as C. I. pigment blue 1, anthraquinone pigments such as C. I. pigment blue 60, and alkali blue pigments such as C. I. pigment blue 18.

Examples of the pigments for black ink include organic pigments such as aniline black pigments, oxidation iron pigments, and carbon black pigments such as furnace black, lamp black, acetylene black, and channel black.

Moreover, processed pigments typified by Mykrolis pigment such as Mykrolis-A, -K, -T can be appropriately used. Specific examples thereof include Mykrolis yellow4G-A, Mykrolis red BP-K, Mykrolis blue 4G-T, and Mykrolis black C-T.

As needed, various pigments can be used. For example, calcium carbonate and titanium oxide pigments can be used for white ink, aluminum powder for silver ink, and copper alloy for gold ink.

It is preferable to basically use one pigment for one color for convenience of ink manufacturing. However, it may be preferable in some instances to mix two or more pigments for controlling the color phase, for example, carbon black may be mixed with phthalocyanine to produce black ink. In addition, pigments may be subjected to surface treatments by known methods such as rosin treatment before use (see the reference 1).

The dye is preferably oil soluble dye such as, azo dye, metal complex salt dye, naphthol dye, anthraquinone dye, indigo dye, carbonium dye, quinonimine dye, xanthene dye, cyanine dye, quinoline dye, nitro dye, nitroso dye, benzoquinone dye, naphthoquinone dye, phthalocyanine dye, and metal phthalocyanine dye.

These pigments and dyes may be used alone or in combination thereof.
The content of the pigments and dyes is appropriately selected according to the type of the coloring materials (pigments and dyes) and the intended use.

For example, when an image is directly formed on a printed material, the content of the pigments and dyes is preferably in the range of 0.1 to 100% by mass, more preferably in the range of 1 to 50% by mass with respect to the mass of the specific particles (B) in the ink composition. Coloring amount is satisfied and color development is sufficiently achieved on a printed material at a content of 0.1% by mass or more, and the storage stability, dispersibility, redispersibility and other properties of the specific particles (B) are kept at a favorable level at a content of 100% by mass or less.

On the other hand, in such instances as to achieve visibility such as plate checking of a planographic printing plate, the content of the pigments and dyes is preferably in the range of 0. 1 to 50% by mass, more preferably in the range of 1 to 30% by mass with respect to the mass of the specific particles (B) in the ink composition. Coloring amount is satisfied and sufficient visibility is achieved at a content of 0.1% by mass or more, and the storage stability, dispersibility, redispersibility and other properties of the specific particles (B) are kept at a favorable level at a content of 30% by mass or less. The content is further preferably 1 to 20% by mass.

The coloring materials may be dispersed by itself in the dispersion medium (A) as dispersed particles, separately from the specific particles (B), or contained in the specific particles (B). The coloring materials are contained in the specific particles (B) by a method of coloring the specific particles (B) with preferable dyes as described in JP-A No 57-48738, or a method of chemically bonding the specific particles (B) with dyes as described in JP-A No. 53-54029. Alternatively, dye-containing monomers are used for polymerization granulation to form a dye-containing copolymer as described in Japanese Patent Application Publication (JP-B) No. 44-22955 and so on.

### [Charge controlling agent]

When the ink composition of the invention is used for forming an image by electrostatic ink jet recording system, it is preferable to use a charge controlling agent that enhances the responsiveness (charge detectability) of the particles to pulse voltage.

In order to impart electroscopicity to the particles, the technology of a developer for wet electrostatic photography can be appropriately utilized. Specifically, it is carried out using an electroscopic material, for example, a charge control agent and other additives as described, for example, in "Recent Developments and Utilization of Electrophotographic Development Systems and Toner Materials (Saikin no Denshishasin Genzo System to Tonerzairyo no Kaihatsu Jitusyoka)", pages 139 to 148, "Fundamentals and Applications of Electrophotographic Techniques (Denshishashin Gijutsu no Kiso to Oyo)", edited by Denshi Shashin Gakkai, pages 497 to 505 (Corona, 1988), and Yuji Harazaki, "Electrophotography (Denshi Shasin)", 16 (No. 2), page 44 (1977).

Suitable compounds are also described, for example, in U.K. Patent Nos. 893,429 and 934,038, U.S. Patent Nos. 1,122,397, 3,900,412, and 4,606,989, Japanese Patent Application Publication (JP-B) Nos. 6-19596, 6-19595, 6-23865, and 4-51023, JP-A Nos. 2-13965 and 60-185963, and examples thereof include metal salts of organic carboxylic acid such as zirconium naphthenate and zirconium octenoate; ammonium salts of organic carboxylic acids such as ammonium salts of tetramethyl stearate; metal salts of organic sulfonic acids such as sodium salts of dodecylbenzene sulfonate and magnesium salts of dioctylsulfosuccinic acid; ammonium salts of organic sulfonic acids such as ammonium salts of tetrabutyl toluene sulfonate; polymers having carboxylic acid groups in the side chains such as stylene-maleic anhydride copolymer modified by amine; polymers having carboxylic acid anion groups in the side chains such as copolymer of stearyl methacrylate and tatramethyl methacrylate ammonium salt; polymers having nitrogen atoms in the side chains such as styrene-vinyl pyridine copolymer; and polymers having ammonium groups in the side chains such as copolymer of butyl methacrylate and N-(2-methacryloyloxyethyl)-N,N,N-trimethyl ammonium tosylate salt.

The charge imparted to the particles may be positive or negative

The content of the charge detecting material is preferably in the range of 0.0001 to 20% by mass with respect to the whole ink composition. Within the range, the electric conductivity of the ink composition can be readily adjusted in the range of 10 nS/m to 1500 nS/m. Moreover, the electric conductivity of the charged particles (specific particle) can be readily adjusted 50% or higher that of the ink composition.

### [Other ingredients]

In the invention, preservatives for preventing corruption and surfactants for controlling surface tension may be added in accordance with purposes.

### [Ink jet recording apparatus]

The ink composition of the invention can be used without limitation in various ink jet recording systems such as a so-called drop-on-demand system (piezo system) in which ink is discharged using oscillation pressure of a piezoelectric element, and a so-called bubble (thermal) jet system in which ink is discharged using pressure generated by forming bubbles and allowing them to grow up with heating at high temperature, and can be used in commercially available ink jet recording apparatus.

The ink composition of the invention is preferably used in an ink jet recording apparatus using electrostatic field. An ink jet recording system using electrostatic field is a system of applying voltage between a control electrode and a back electrode on the back of a recording medium to thereby concentrate the charged particles of an ink composition at the ejecting position by the electrostatic force, and ejecting the ink composition from the ejecting position to a recording medium. The voltage applied between a control electrode and a back electrode is, e.g., the control electrode is positive and the back electrode is negative when the particles are positively charged. The same effect can be obtained by electrifying a recording medium in place of applying voltage to a back electrode.

As an ink jet system, for example, a system of jetting ink from a needle-like tip such as an injection needle is known, and the ink composition of the invention can be used in the system.

However, in such a system it is difficult to replenish charged particles after they are concentrated and ejected, which makes it difficult to stably perform recording for a long period of time. In a system wherein ink is forcedly circulated to supply charged particles, ink flows from the tip of an injection needle, and the meniscus form at the tip of the injection needle, which is the ejecting position, is not stabilized, which makes it difficult to stably perform recording. Therefore the system is suitable for a short period of time.

On the other hand, a method for circulating the ink composition without flowing the ink composition from an ejection opening is preferably used. For example, in a system wherein ink is circulated in an ink chamber having an ejection opening, and concentrated ink droplets are jetted from the tip of an ink guide present in the ejection opening, the tip of which facing the side of a recording medium, by the application of voltage to a control electrode formed around the ejection opening, recording can be performed stably for a long period of time, since the replenishment of charged particles by the circulation of the ink and the meniscus stability at the ejecting position can be compatible. Further in the system, since the exposure of the ink to the air is limited only to the ejection opening, evaporation of the solvent is inhibited and physical characteristics of the ink are stabilized, so that the system can be very preferably used in the invention.

An example of the structure of an ink jet recording apparatus suitable to use the ink composition of the invention is described below.

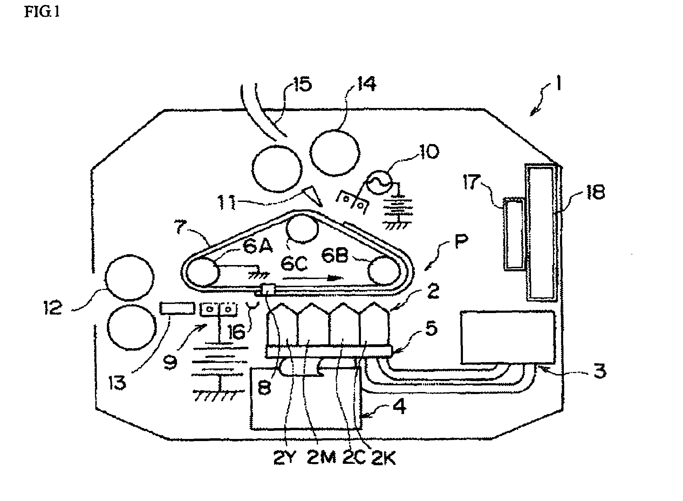

In the first place, the outline of the apparatus as shown in Fig. 1 that performes four-color printing on one side of a recording medium is described.

Ink jet recording apparatus 1 shown in Fig. 1 is equipped with a jet head 2 comprising jet heads 2C, 2M, 2Y and 2K of four colors for performing full color image formation, an ink circulating system 3 for supplying inks to the jet head 2 and recovering inks from jet head 2, a head driver 4 for driving the jet head 2 by the output from the outside apparatus such as a computer and RIP not shown, and a position controlling unit 5. Ink jet recording apparatus 1 is further equipped with a carrier belt 7 stretching on three rollers 6A, 6B and 6C, a carrier belt position detecting unit 8 consisting of an optical sensor and the like capable of detecting the position of the carrier belt 7 in the width direction, an electrostatic suction unit 9 for maintaining recording medium P on the carrier belt 7, and a destaticizing unit 10 and a mechanical unit 11 for peeling away the recording medium P from the carrier belt 7 after conclusion of image formation. A feed roller 12 and a guide 13 for feeding the recording medium P from a stocker not shown to the carrier belt 7, and a fixing unit 14 and a guide 15 for fixing the inks on the recording medium P after being peeled and carrying the recording medium to a stocker of discharged paper not shown are arranged on the upstream and the downstream of the carrier belt 7. In the inside of the ink jet recording apparatus 1 are arranged a recording medium position detecting unit 16 at the position facing the jet head 2 with the carrier belt 7 between, an exhaust fan 17 for recovering the vapor of the solvent occurring from the ink composition, and a solvent recovery part comprising a solvent vapor adsorbing material 18, and the vapors in the inside of the apparatus are exhausted through the recovery part.

As the feed roller 12, well-known rollers can be used, and the feed roller 12 is arranged so that the feeding ability of the recording medium P is increased. It is preferred to remove dirt and powder adhered on the recording medium P. The recording medium P fed by the feed roller 12 is carried to the carrier belt 7 through the guide 13. The back surface of the carrier belt 7 (preferably a metal back surface) is provided via the roller 6A. The recording medium carried is electrostatically adsorbed on the carrier belt by the electrostatic suction unit 9. In Fig. 1, electrostatic suction is performed with a Scorotron charger connected to negative high voltage power supply. The recording medium is electrostatically sucked on the carrier belt 7 without floatation by the electrostatic suction unit 9 and, at the same time, the surface of the recording medium is uniformly charged. The electrostatic suction unit is also utilized as an electrifying unit of the recording medium P here, but an electrifying unit may be provided separately. The charged recording medium P is carried to the jet head part by unit of the carrier belt 7, and electrostatic ink jet image is formed by piling recording signal voltage with charged potential as bias. The image-recorded recording medium P is destaticized by the destaticizing unit 10, peeled away from the carrier belt 7 by the mechanical unit 11, and carried to the fixing part. The peeled recording medium P is carried to the image fixing unit 14 and fixed. The fixed recording medium P is discharged to a stocker of discharged paper not shown through the guide 15. The inkjet recording apparatus is also equipped with a recovery unit of the vapor of the solvent occurring from the ink composition. The recovery unit comprises the solvent vapor adsorbing material 18, the air containing the solvent vapor in the apparatus is introduced into the adsorbing material by the exhaust fan 17, and the vapor is recovered by adsorption and exhausted out of the apparatus. The ink jet recording apparatus is not limited to the above example, and the number, shape, and relative arrangement of constitutional devices, e.g., rollers and charger, and charge polarity can be arbitrarily selected. Four-color imaging is described in the above system, but the system may be a more multicolored system in combination with light-colored inks and special inks.

The ink jet recording apparatus used in ink jet printing method has the jet head 2 and the ink circulating system 3, and the ink circulating system 3 further comprises an ink tank, an ink circulating unit, an ink concentration controlling unit and an ink temperature controlling unit, and the ink tank may contain a stirrer.

As the jet head 2, a single channel head, a multi-channel head or a full line head can be used. Main scanning is performed by the rotation of the carrier belt 7.

An ink jet head preferably used in the invention is an ink jet head of a system of performing ejection by increasing the concentration of ink in the vicinity of the opening by the electrophoresis of charged particles in ink channel. This method performs ejection of ink droplets by electrostatic suction force mainly originating in the recording medium or the counter electrodes arranged in the rear of the recording medium. Accordingly, even when the recording medium or the counter electrodes do not counter the head, or when voltage is not applied to the recording medium or the counter electrodes although they are positioned facing the head, ink droplets are not ejected and the inside of the apparatus does not become dirty even if voltage is applied to the ejection electrodes or vibration is given by error.

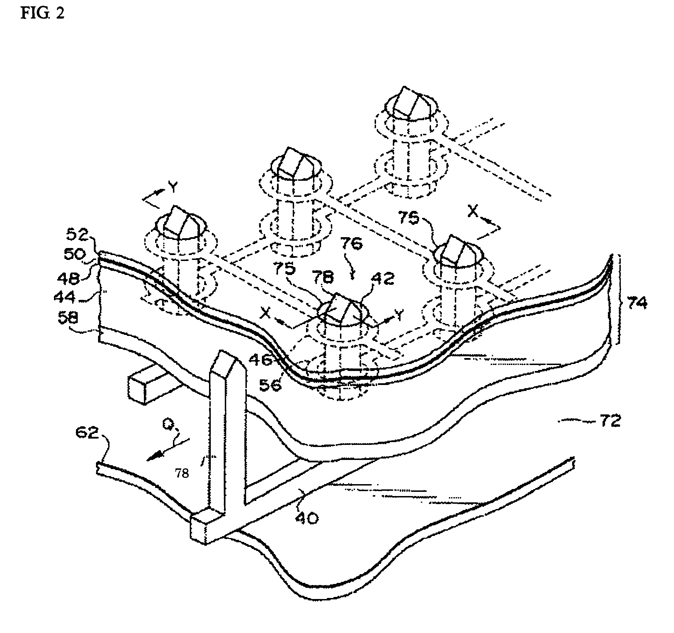

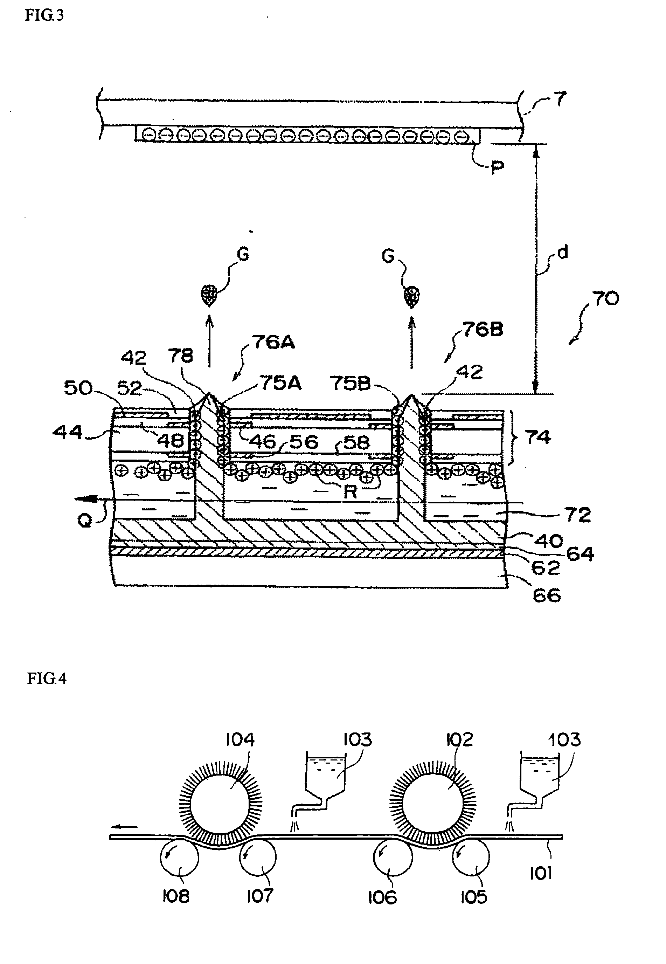

The jet head preferably used in the above ink jet apparatus is shown in Figs. 2 and 3. As shown in Figs. 2 and 3, the ink jet head 70 has an electrical insulating substrate 74 constituting the upper wall of an ink channel 72 forming one way ink flow Q, and a plurality of ejecting sections 76 ejecting ink droplets toward the recording medium P. An ink guide section 78 to guide ink droplets G jetting from the ink channel 72 to the recording medium P is provided in each ejecting section 76, openings 75 in each of which an ink guide section 78 is laid through are formed on a substrate 74, and an ink meniscus 42 is formed between the ink guide section 78 and the inner wall of the opening 75. The gap d between the ink guide section 78 and the recording medium P is preferably from about 200µm to about 1,000µm. The ink guide section 78 is fixed on a supporting bar 40 at the lower side.

The substrate 74 has an insulating layer 44 electrically insulating two ejection electrodes by separating by a prescribed space, the first ejection electrode 46 formed on the upper side of the insulating layer 44, an insulating layer 48 covering the first ejection electrode 46, a guard electrode 50 formed on the upper side of the insulating layer 48, and an insulating layer 52 covering the guard electrode 50. Further, the substrate 74 has the second ejection electrode 56 formed on the lower side of the insulating layer 44, and an insulating layer 58 covering the second ejection electrode 56. The guard electrode 50 is provided to prevent the electric fields of the contiguous ejecting sections from being influenced by the voltage applied to the first ejection electrode 46 and the second ejection electrode 56.

The ink jet head 70 further has a floating conductive plate 62 provided in an electrically floating state. The floating conductive plate 62 constitutes the bottom of the ink channel 72 and, at the same time, migrates upward (i.e., toward the side of a recording medium) ink particles (charged particles) R in the ink channel 72 positively charged by induced voltage steadily generating by the pulse-like ejection voltage applied to the first ejection electrode 46 and the second ejection electrode 56. Further, the insulating covering film 64 is formed on the surface of the floating conductive plate 62 to thereby prevent the physical properties and composition of ink from becoming labile by the application of electric charge to the ink, etc. The electric resistance of the electrical insulating covering film is preferably 10¹² Ω·cm or more, more preferably 10¹³Ω·cm or more. It is preferred that the insulating covering film is anticorrosive to ink, by which the floating conductive plate 62 is prevented from being corroded by ink. The floating conductive plate 62 is further covered with an insulating member 66 from the down side. The floating conductive plate 62 is completely electrically insulated by this constitution.

The floating conductive plate 62 is present one or more per one head unit (for example, in the case where there are four heads of C, M, Y and K, each head has at least one floating conductive plate, and there is no case where C and M head units have a common floating conductive plate).

As shown in Fig. 3, for recording on the recording medium P by ejecting ink droplets from the ink jet head 70, the ink flow Q is generated by circulating the ink in the ink channel 72, and prescribed voltage (e.g., +100 V) is applied to the guard electrode 50. Further, positive voltage is applied to the first ejection electrode 46, the second ejection electrode 56 and the recording medium P (when the gap d is 500 µm, to form the potential difference of from 1 kV to 3.0 kV or so is a standard) so as to form ejecting electric field among the first ejection electrode 46, the second ejection electrode 56 and the recording medium P by which the positively charged particles R in the ink droplets G guided by the ink guide section 78 and jetted from the opening 75 are attracted to the recording medium P.

When pulse voltage is applied to the first ejection electrode 46 and the second ejection electrode 56 in this state according to image signals, the ink droplets G heightened in concentration of charged particles are ejected from the opening 75 (for example, when the initial charged particle concentration is from 3 to 15%, the charged particle concentration of the ink droplets G becomes 30% or more).

At that time, the value of voltage applied to the first ejection electrode 46 and the second ejection electrode 56 is in advance adjusted so that the ink droplets G are ejected only when pulse voltage is applied to both the first ejection electrode 46 and the second ejection electrode 56.

Thus when pulse-like positive voltage is applied, the ink droplets G are guided from the opening 75 to the ink guide section 78 and jetted and adhered to the recording medium P, at the same time, positive induced voltage is generated in the floating conductive plate 62 by the positive voltage applied to the first ejection electrode 46 and the second ejection electrode 56. Even if the voltage applied to the first ejection electrode 46 and the second ejection electrode 56 is pulse voltage, the induced voltage is almost steady voltage. Accordingly, the positively charged particles R in the ink channel 72 get a force to migrate upward by the electric field formed among the floating conductive plate 62, the guard electrode 50 and the recording medium P, so that the concentration of the charged particles R becomes high in the vicinity of the substrate 74. As shown in Fig. 3, when many ejecting sections (that is, channels for ejecting ink droplets) are used, the number of charged particles necessary for ejection increases, but the number of the first ejection electrode 46 and the second ejection electrode 56 used increases, so that the induced voltage induced by floating the conductive plate 62 becomes high, as a result the number of the charged particles R migrating toward the recording medium also increases.

In the above, the example of positively charged colored particles is described, but the colored particles may be negatively charged. In that case, the above charge polarities are all inversed polarities.

In the invention, it is preferred to fix inks by an appropriate heating unit after ink ejection to a recording medium. As the heating unit, a contact type heating apparatus, e.g., a heat roller, a heat block and belt heating, and a non-contact type heating apparatus, e.g., a drier, an infrared lamp, a visible ray lamp, an ultraviolet lamp, and a hot air oven can be used. These heating apparatus are preferably linking and integrated with an ink jet recording apparatus. The temperature of a recording medium at fixing time is preferably from 40 to 200°C for easiness of fixation. The fixing time is preferably in the range of from 1 µsec to 20 seconds.

[Replenishment of ink composition in ink jet recording system using electrostatic field]

In an ink jet recording system utilizing electrostatic field, the charged particles in an ink composition are ejected in a concentrated state. Accordingly, when ink ejection is performed for long hours, the amount of the charged particles in an ink composition is reduced and the electric conductivity of the ink composition lowers. Further, the proportion of the electric conductivity of the charged particles and the electric conductivity of the ink composition changes. In addition, since charged particles having greater particle diameters are liable to be ejected prior to charged particles having smaller particle diameters, the average diameter of charged particles becomes small. Further, the amount of solids content in the ink composition changes, so that the viscosity also changes.

The fluctuation of the values of physical properties results in ejection failure, reduction of the optical density of recorded images and ink blotting. Therefore, by replenishing an ink composition having higher concentration (high in the solids content concentration) than the ink composition introduced in an ink tank at the beginning, the amount loss of the charged particles can be prevented, and the electric conductivity of the ink composition, and the proportion of the electric conductivity of the charged particles and the electric conductivity of the ink composition can be maintained in constant ranges. Further, the average particle diameter and the viscosity can also be maintained. Moreover, ink ejection can be performed for a long period of time stably by maintaining the values of physical properties of the ink composition in a constant range. It is preferred to perform replenishment at this time mechanically or manually by computing the ullage from the detection of the values of physical properties such as electric conductivity and optical density of the ink solution in use. Replenishment may also be performed mechanically or manually by computing the amount of ink composition to be used on the basis of the image data.

### [Recording medium]

In the invention, a variety of recording media can be used in accordance with purposes. For example, by using papers, plastic films, metals, papers laminated or deposited with plastics or metals, and plastic films laminated or deposited with metals, directly printed products can be obtained by ink jet recording. By using aluminum supports or other metal supports having a roughened surface, planographic printing plates and offset printing plates can be obtained. Furthermore, by using plastic supports or the like, flexographic printing plates and color filter for crystal display can be obtained. The shapes of recording media may be a sheet-like planar shape or may be three-dimensional as a cylindrical shape. By using silicon wafers or circuit boards as recording media, semiconductors or printed circuit boards can be produced.

### <Producing method of planographic printing plate>

The method for producing the planographic printing plate of the invention comprises forming an image using the ink composition of the invention on a support for planographic printing plate by an ink jet recording system.

More specifically, the method for producing the planographic printing plate of the invention comprises forming an image area by ejecting the ink composition of the invention on a support for planographic printing plate, which is one of recording media, using said ink jet recording apparatus.

In the method for producing the planographic printing plate precursor of the invention, it is preferable to use an electrostatic ink jet recording system from the viewpoint of achieving high resolution and high precision ink droplet placement.

### [Support for planographic printing plate]

A support for planographic printing plate (hereinafter may be abbreviated as support) is used for producing the planographic printing plate of the invention. The support for planographic printing plate in the invention is not particularly limited as long as it is a dimensionally stable plate-shaped material having necessary strength and durability, and examples thereof include papers, papers laminated with plastic (e.g., polyethylene, polypropylene and polystyrene), metal plates (e.g., aluminum, zinc and copper), plastic films (e.g., cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate and polyvinyl acetal), papers or plastic films laminated or deposited with metal.

Of these supports, in the invention, a polyester film and an aluminum plate are preferable, and an aluminum plate is particularly preferable because it is superior in dimensional stability and is relatively inexpensive. Particularly preferable examples of the aluminum plate include a pure aluminum plate and alloy plates constituted mainly of aluminum and including a trace amount of different elements. A plastic film on which aluminum is laminated or vapor-deposited may be used. The different elements contained in the aluminum alloys are silicon, iron, manganese, copper, magnesium, chromium, zinc, bismuth, nickel, titanium and so on. The content of the different elements in the alloy is 10% by mass or less. Preferable supports in the invention are a surface-treated aluminum plate and a polyester film having provided thereon a sol-gel hydrophilic layer.

These supports are described below.

### [Aluminum support]

A particularly preferable aluminum plate in the invention is a pure aluminum plate; however, a trace amount of the different elements may be contained in the plate because completely pure aluminum is hard to produce from the viewpoint of refining techniques.

The composition of the aluminum plate used in the invention is not particularly specified. Thus, aluminum plates which have been known or used hitherto can be appropriately used. The thickness of the aluminum plate used in the invention is from about 0.1 mm to 0.6 mm, preferably from 0.15 mm to 0.4 mm, and most preferably from 0.15 mm to 0.3 mm.

As needed, such aluminum plate may be subjected to surface treatment such as surface-roughening treatment or anodic oxidation treatment. Such surface treatment is briefly described below.

Before the surface of the aluminum plate is roughened, the plate is, if desired, subjected to degreasing treatment to remove rolling oil on the surface with a surfactant, an organic solvent, an aqueous alkali solution, or the like. Thereafter, the roughening treatment of the aluminum surface is performed, for example, by a mechanical surface-roughening method, a method of dissolving and roughening the surface electrochemically, a method of dissolving the surface selectively in a chemical manner, or some other method. The mechanical surface-roughening method which can be used may be a known method, such as a ball polishing method, a brush polishing method, a blast polishing method or a buff polishing method. The electrochemical surface-roughening method may be a method of performing surface-roughening in a hydrochloric acid or nitric acid electrolyte by alternating current or direct current. As disclosed in JP-A No. 54-63902, a combination of the two may be used.

### [Surface treatment]

The support used in the invention preferably comprises said aluminum plate that has been subjected to surface treatment. For example, it is preferable to provide a support surface with a structure in which irregularities with two or more different rhythms are overlapped by the surface treatment.

Specifically, the support having such surface form is obtained by preferably subjecting an aluminum plate to surface-roughening treatment and anodic oxidation treatment.

The production process of such support is not particularly limited, and may contain various processes other than surface-roughening treatment and anodic oxidation treatment. Examples thereof include a method of sequentially subjecting an aluminum plate to mechanical surface-roughening treatment, alkali etching treatment, desmutting treatment with an acid, and electrochemical surface-roughening treatment with an electrolyte, a method of sequentially subjecting an aluminum plate to mechanical surface-roughening treatment, alkali etching treatment, desmutting treatment with an acid, and plural times of electrochemical surface-roughening treatment with different electrolytes, a method of sequentially subjecting an aluminum plate to alkali etching treatment, desmutting treatment with an acid, and electrochemical surface-roughening treatment with an electrolyte, and a method of sequentially subjecting an aluminum plate to alkali etching treatment, desmutting treatment with an acid, and plural times of electrochemical surface-roughening treatment with different electrolytes. However, the invention is not limited thereto. In these methods, the aluminum plate may be subjected to alkali etching treatment and desmutting treatment with an acid after electrochemical surface-roughening treatment.

The support obtained by these methods has provided thereon a structure in which irregularities with two or more different rhythms are overlapped, and is superior in stain resistance and printing durability when it is made into a planographic printing plate.

The processes involved in the surface treatment that can be used in the invention treatment are described in detail below.

### (Mechanical surface-roughening treatment)

Mechanical surface-roughening treatment is an effective unit for surface-roughening treatment since it can form a surface having irregularities with an average surface roughness of 5 to 100 µm at a lower cost than electrochemical surface-roughening treatment. As the mechanical surface-roughening treatment method, for example, a wire brush graining method wherein the surface of aluminum is scratched with a metallic wire, a ball graining method wherein the surface of aluminum is grained with an abrasive ball and an abrasive, and a brush graining method wherein the surface is grained with a nylon brush and an abrasive as described in JP-ANo. 6-135175 and JP-B No. 50-40047 can be used. Also can be used is a transfer method wherein the surface having irregularities is pressed against an aluminum plate under pressure. More specifically, methods described in JP-ANos. 55-74898, 60-36195, and 60-203496, and a method of performing plural times of transfer as described in JP-A No. 6-55871, and a method characterized by surface elasticity as described in Japanese Patent Application No. 4-204235 (JP-A No. 6-024168) also can be used.

Additional examples thereof include a method of using a transferring roll wherein fine irregularities are etched by electric discharge machining, shot blast, laser, plasma etching or the like to perform transfer repeatedly; and a method of bringing an uneven surface, onto which fine particles are applied, into contact with an aluminum plate, and applying pressure onto the resultant product plural times, thereby transferring an uneven pattern corresponding to the average diameter of the fine particles onto the aluminum plate plural times. The method for giving fine irregularities onto a transferring roll may be any known method, described in JP-A Nos. 3-8635, 3-66404, 63-65017 or the like. Rectangular irregularities may be made in a transferring roll by cutting fine grooves in the surface in two directions by use of a dice, bite, laser or the like. This roll surface may be subjected to a treatment for making the formed rectangular irregularities round by known etching treatment.

In order to make the hardness of the surface high, the surface may be subjected to quenching, hard chromium plating or the like.

Besides, methods described in JP-A Nos. 61-162351, 63-104889 and so on can be used as the mechanical surface-roughening treatment.

In the invention, the above-mentioned methods may be used in combination, considering the productivity thereof and so on. These mechanical surface-roughening treatments are preferably conducted before electrochemical surface-roughening treatment.

The following describes the brush graining method, which is used suitably for the mechanical surface-roughening treatment.

In general, the brush graining method can be performed by spraying a slurry containing an abrasive onto a rotating roller-form brush wherein a great number of brush bristles, such as synthetic resin bristles made of a synthetic resin (for example, Nylon (trade name), propylene resin, or vinyl chloride resin), are planted in the surface of a cylindrical trunk while scrubbing one or both of surfaces of the above-mentioned aluminum plate with the roller. Instead of the roller-form brush or the slurry, an abrading roller, which has on the surface thereof an abrading layer, may be used.

In the case of using the roller-form brush, the bend elastic constant thereof is preferably from 10,000 to 40,000 kg/cm², more preferably from 15,000 to 35,000 kg/cm² and the firmness of the brush bristles is preferably 500 g or less, more preferably 400 g or less. The diameter of the brush bristles is generally from 0.2 to 0.9 mm. The length of the bristles, which may be appropriately decided in accordance with the outer diameter of the brush and that of the trunk, is generally from 10 to 100 mm.

The abrasive may be a known abrasive. Examples thereof include pumice stone, silica sand, aluminum hydroxide, alumina powder, silicon carbide, silicon nitride, volcanic ashes, carborundum, emery, and mixtures thereof. Of these examples, pumice stone and silica sand are preferable. Silica sand is particularly preferable since silica sand is harder and less brittle than pumice stone to have better surface-roughening efficiency and silica sand can prevent the formation of a great number of deep concave portions.

The average grain diameter of the abrasive is preferably from 3 to 50 µm, more preferably from 6 to 45 µm in order that the surface-roughening efficiency can be made better and the pitch of the grains can be made smaller. The abrasive is suspended in, for example, water and used as a slurry. The slurry may contain a thickener, a dispersing agent (such as a surfactant), a preservative or the like besides the abrasive. The specific gravity of the slurry is preferably from 0.5 to 2.

A machine suitable for the mechanical surface-roughening treatment is, for example, a machine described in JP-B No. 50-40047.

### <Electrochemical surface-roughening treatment>

For the electrochemical surface-roughening treatment, electrolytes used in electrochemical surface-roughening treatments using an ordinary alternating current are used. Of the electrolytes, an electrolyte made mainly of hydrochloric acid and nitric acid is used to make it possible to form an irregularity structure characteristic for the invention.

It is preferable to conduct, as the electrochemical surface-roughening treatment in the invention, first and second electrolyzing treatments using an alternating current in an acidic solution before and after cathode electrolyzing treatment. By the cathode electrolyzing treatment, hydrogen gas is generated in the surface of the aluminum plate to generate smut, thereby making the surface state uniform. Thereafter, therefore, uniform electrolytic surface-roughening can be attained at the time of the electrolyzing treatment using the alternating current.

This electrolytic surface-roughening treatment can be performed in accordance with the electrochemical graining method (electrolytic graining method) described in JP-B No. 48-28123 and GB Patent No. 896,563. In this electrolytic graining method, an alternating current having a sine waveform is used. An especial waveform as described in JP-A No. 52-58602 may be used. A waveform described in JP-A No. 3-79799 may be used.
Methods described in the following can be used: JP-ANos. 55-158298, 56-28898, 52-58602, 52-152302, 54-85802, 60-190392, 58-120531, 63-176187, 1-5889, 1-280590, 1-118489, 1-148592, 1-178496, 1-188315, 1-154797, 2-235794, 3-260100, 3-253600, 4-72079, 4-72098, 3-267400 and 1-141094. Besides the above, the electrolysis may be performed using an alternating current having an especial frequency, suggested as a process for producing an electrolytic condenser. This is described in, for example, U. S. Patent Nos. 4,276,129 and 4,676,879.

Electrolytic baths and power sources that can be used are variously suggested, examples of which include those described in U.S. Patent No. 4,203,637, and JP-ANos. 56-123400, 57-59770, 53-12738, 53-32821, 53-32822, 53-32823, 55-122896, 55-132884, 62-127500, 1-52100, 1-52098, 60-67700, 1-230800, 3-257199, 52-58602, 52-152302, 53-12738, 53-12739, 53-32821, 53-32822, 53-32833, 53-32824, 53-32825, 54-85802, 55-122896, 55-132884, 52-133838, 52-133840, 52-133844, 52-133845, 53-149135 and 54-146234, and JP-B Nos. 48-28123 and 51-7081.

Examples of the acidic solution as an electrolyte include nitric acid, hydrochloric acid, and electrolytes described in U.S. Patent Nos. 4,671,859, 4,661,219, 4,618,405, 4,600,482, 4,566,960, 4,566,958, 4,566,959, 4,416,972, 4,374,710, 4,336,113, and 4,184,932.

The concentration of the acidic solution is preferably from 0.5 to 2.5% by mass, and is particularly preferably from 0.7 to 2.0% by mass considering the use thereof in the treatment for removing the above-mentioned smut. The temperature of the solution is preferably from 20 to 80°C, more preferably from 30 to 60°C.

The aqueous solution made mainly of hydrochloric acid or nitric acid can be used in the state of adding, to an aqueous hydrochloric acid or nitric acid solution having a concentration of 1 to 100 g/L, at least one of nitric acid compound having a nitric acid ion (such as aluminum nitride, sodium nitride, or ammonium nitride) and hydrochloric acid compound having an hydrochloric acid ion (such as aluminum chloride, sodium chloride or ammonium chloride) at a concentration ranging from 1 g/L to the saturated concentration thereof. Into the aqueous solution made mainly of hydrochloric acid or nitric acid, a metal contained in aluminum alloy may be dissolved, examples of which include iron, copper, manganese, nickel, titanium, magnesium, or silica. It is preferable to use a solution wherein aluminum chloride, aluminum nitrate or the like is added to an aqueous hydrochloric acid or nitric acid solution having a concentration of 0.5 to 2% by mass so as to set the concentration of aluminum ions into the range of 3 to 50 g/L.

An aluminum plate containing a great quantity of Cu can be uniformly grained by adding a compound which can be combined with Cu to form a complex to the electrolyte and using the resultant. Examples of the compound, which can be combined with Cu to form a complex, include ammonia; amines wherein the hydrogen atom(s) is/are substituted with one or more hydrocarbon groups (such as aliphatic and aromatic hydrocarbon groups), such as methylamine, ethylamine, dimethylamine, diethylamine, trimethylamine, cyclohexylamine, triethanolamine, triisopropanolamine, and EDTA (ethylenediaminetetracetic acid); and metal carbonates such as sodium carbonate, potassium carbonate, and potassium hydrogencarbonate; ammonium salts such as ammonium nitrate, ammonium chloride, ammonium sulfate, ammonium phosphate, and ammonium carbonate.

The temperature thereof is preferably from 10 to 60°C, more preferably from 20 to 50°C.

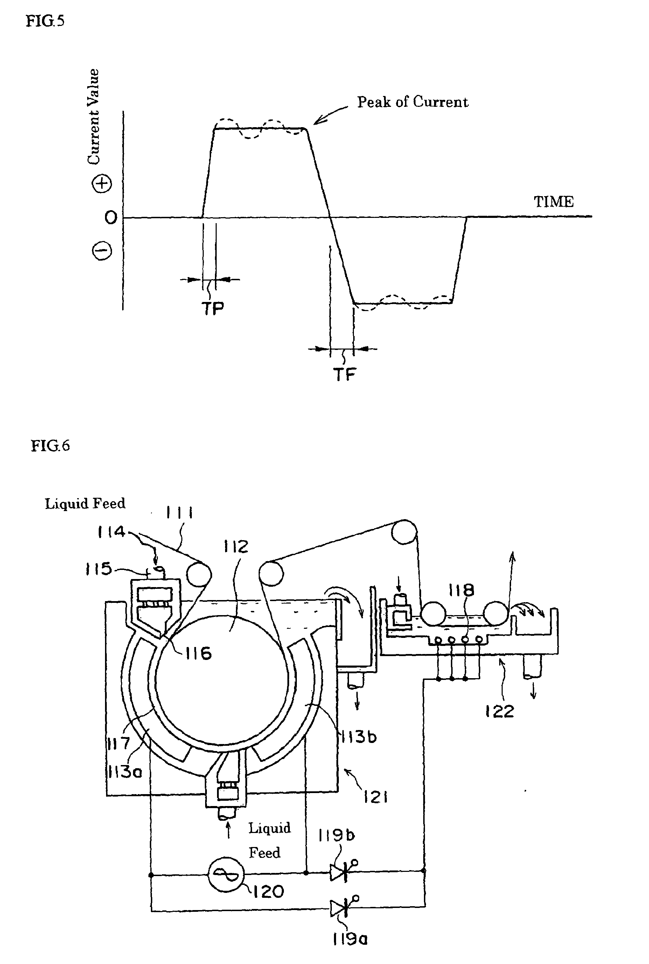

The alternating current wave used in the electrochemical surface-roughening treatment is not particularly limited, and may be a sine wave, a rectangular wave, a trapezoidal wave, a triangular waver, or some other wave. A rectangular wave and a trapezoidal wave are preferable, and the latter is particularly preferable. The trapezoidal wave is a wave illustrated in Fig. 5. In this trapezoidal wave, the time (TP) when electric current rises from zero to a peak is preferably from 1 to 3 msec. If the TP is less than 1 msec, a treatment-unevenness called a chatter mark and generated perpendicularly in the direction along which the aluminum plate is advanced is easily generated. If the TP is more than 3 msec, the following problem is caused, in particular, in the case of using the nitric acid electrolyte: trace components (typically, ammonium ions) which increase naturally in the electrolyte in the electrolysis produce a bad effect. Thus, uniform graining is not easily performed. As a result, when the plate is used to form a planographic printing plate, the stain resistance thereof tends to lower.

The duty ratio of the trapezoidal wave may be from 1:2 to 2:1. The duty ratio is preferably 1:1 in an indirect power feeding manner without using any conductor roller for aluminum, as described in JP-ANo. 5-195300.

The frequency of the trapezoidal wave may be from 0.1 to 120 Hz, and is preferably from 50 to 70 Hz from the viewpoint of facilities. If the frequency is less than 50 Hz, a carbon electrode as a main electrode is easily dissolved. If the frequency is more than 70 Hz, inductance components on a power supply circuit easily produce a bad effect to make power supply costs high

One or more AC power supplies can be connected to the electrolytic bath. In order to control the current ratio between anode and cathode components of the alternating current applied to the aluminum plate, which is opposite to a main electrode, thereby attaining uniform graining and further dissolve carbon of the main electrode, it is preferable to set an auxiliary anode and cause a part of the alternating current to flow dividedly into the auxiliary anode, as illustrated in Fig. 6. In Fig. 6, reference number 111 represents an aluminum plate;112, a radial drum roller;113a and113b, main electrodes; 114, an electrolyte; 115, an electrolyte supplying port; 116, a slit; 117, an electrolyte passage; 118, an auxiliary electrode; 119a and 119b, thyristors; 120, an AC power supply; 121, a main electrolytic bath; and 122, an auxiliary cathode bath. By dividing electric current to cause a part thereof to flow, through a rectifying element or switching element, as a direct current into the auxiliary electrode, which is set into a bath different from the bath for the two main electrodes, it is possible to control the ratio between the current value for taking charge of anodic reaction caused on the aluminum plate opposite to the main electrodes and the current value for taking charge of cathodic reaction. On the aluminum plate opposite to the main electrodes, the ratio of the electricity quantity for the cathodic reaction to that for the anodic reaction (i.e., the ratio of the electricity quantity in the cathodic reaction time to that in the anodic reaction time) is preferably from 0.3 to 0.95.

The electrolytic bath may be a known electrolytic bath used in surface treatment, for example, a bath of a lengthwise type, a flat type, a radial type, or some other type. A radial type electrolytic bath, as described in JP-A No. 5-195300, is particularly preferable. The electrolyte passed in the electrolytic bath may be in parallel to or opposite to the direction in which the aluminum plate is advanced.

### (Nitric electrolysis)

By the electrochemical surface-roughening treatment using an electrolyte made mainly of nitric acid, pits having an average aperture of 0.5 to 5 µm can be made. However, when the electricity quantity is made relatively large, electrolytic reaction is caused so as to be concentrated so that honeycomb pits having an aperture of more than 5 µm also can be made.

In order to obtain such a grain structure, the total of electricity quantities for taking charge of the anodic reaction of the aluminum plate is preferably from 1 to 1000 C/dm², more preferably from 50 to 300 C/dm² when the electrolytic reaction ends. The current density at this time is preferably from 20 to 100 A/dm².

When a nitric acid electrolyte having a high concentration and/or a high temperature is used, a small wave structure having an average aperture of 0.2 µm or less can also be formed.

### -Hydrochloric acid electrolysis-

As hydrochloric acid has a high dissolution power for aluminum, it can form fine irregularities on aluminum surface by the application of slight electrolysis. Such fine irregularities have an average aperture of 0.01 to 0.2 µm, and are uniformly generated on the entire surface of an aluminum plate. To obtain such grain, the total of the electricity quantity used for the anodic reaction of the aluminum plate is preferably 1 to 100 C/dm² at the point when the electrolysis reaction is completed, more preferably 20 to 70 C/dm², and the electric current density is preferably 20 to 50 A/dm².

In this electrochemical surface-roughening treatment using the electrolyte made mainly of hydrochloric acid, large undulations in a crater form can be simultaneously formed by making the total of electricity quantities for taking charge of the anodic reaction as large as a value ranging 400 to 1000 C/dm². In this case, fine irregularities having an average aperture of 10 to 30 µm are superimposed with the crater undulations, which have an average aperture of 10to 30µm, and the fine irregularities are made in the entire surface. In this case, therefore, no medium wave structure, which has an average aperture of O.Olto 0.4µm, can be superimposed with the above-mentioned undulations and irregularities.

The aluminum plate is preferably subjected to the cathodic electrolyzing treatment between said first and second electrolyzing treatment performed in an electrolyte such as a nitric acid or a hydrochloric acid electrolyte. The cathodic electrolyzing treatment forms smut on the surface of the aluminum plate and at the same time generates hydrogen gas, which allows more uniform electrolyzing treatment. The cathodic electrolyzing treatment is performed in an acidic solution at a cathodic electricity quantity of preferably 3 to 80 C/dm², more preferably 5 to 30 C/dm². The cathodic electricity quantity less than 3 C/dm² is not favorable because it can cause the shortage of smut deposition. The quantity exceeding 80 C/dm² is also not favorable because it can cause excessive smut deposition. The electrolyte may be same as or different from the solution used in the above described first and second electrolyzing treatment.

### <Alkali etching>

The alkali etching treatment is treatment for bringing the aluminum plate into contact with an alkali solution to dissolve the surface layer thereof.

In the case of conducting no mechanical surface-roughening treatment, the alkali etching treatment conducted before the electrochemical surface-roughening treatment is for removing rolling oil, stains, naturally-oxidized film and others on the surface of the aluminum plate (e.g., rolled aluminum). In the case of conducting the mechanical surface-roughening treatment already, this treatment is for dissolving edges of irregularities generated by the mechanical surface-roughening treatment to convert the sharp irregularities to the surface having gently-sloping undulations.

In the case of conducting no mechanical surface-roughening treatment before the alkali etching treatment, the etching amount is preferably from 0.1 to 10 g/m², more preferably from 1 to 5 g/m². If the etching amount is less than 0.1 g/m², the rolling oil, stains and naturally-oxidized film on the surface may remain. As a result, uniform pits are not generated in a subsequent electrochemical surface-roughening treatment, so that unevenness may be generated. On the other hand, when the etching amount is from 1 to 10 g/m², the rolling oil, stains and naturally-oxidized film on the surface are sufficiently removed. If the etching amount is more than the upper limit of the above-mentioned range, an economical disadvantage is encountered.

In the case of conducting the mechanical surface-roughening treatment before the alkali etching treatment, the etching amount is preferably from 3 to 20 g/m², more preferably from 5to 15 g/m². If the etching amount is less than 3 g/m², the irregularities made by the mechanical surface-roughening treatment and so on may not be made smooth. Thus, in the subsequent electrochemical treatment, uniform pits may not be formed. Additionally, staining may increase at the time of printing. On the other hand, if the etching amount is more than 20 g/m², the irregularities may disappear.

The alkali etching treatment just after the electrochemical surface-roughening treatment is conducted to dissolve the smut generated in the acidic electrolyte and dissolve edges of pits made by the electrochemical surface-roughening treatment.

The pits made by the electrochemical surface-roughening treatment vary dependently on the kind of the electrolyte. Thus, the optimal etching amount thereof is also different. The etching amount in the alkali etching treatment conducted after the electrochemical surface-roughening treatment is preferably from 0.1 to 5 g/m². In the case of using the nitric acid electrolyte, it is necessary to set the etching amount larger than in the case of using the hydrochloric acid electrolyte. In the case of conducting the electrochemical surface-roughening treatment more than once, the alkali etching treatment may be conducted according to need after each electrochemical surface-roughening treatment.

Examples of the alkali used in the alkali solution include caustic alkalis and alkali metal salts. Specific examples of the caustic alkalis include caustic soda and caustic potassium. Specific examples of the alkali metal salts include alkali metal silicates such as sodium metasilicate, sodium silicate, potassium metasilicate, and potassium silicate; metal carbonates such as sodium carbonate and potassium carbonate; alkali metal aluminates such as sodium aluminate and potassium aluminate; alkali metal aldonates such as sodium gluconate and potassium gluconate; and alkali metal (hydrogen)phosphates such as disodium hydrogenphosphate, dipotassium hydrogenphosphate, trisodium phosphate, and tripotassium phosphate. A solution of a caustic alkali and a solution containing both of a caustic alkali and an alkali metal aluminate are preferable since the solutions give a high etching rate and are inexpensive. An aqueous caustic soda solution is particularly preferable.

The alkali concentration of the alkali solution, which can be decided dependently on the etching amount, is preferably from 1 to 50% by mass, more preferably from 10 to 35% by mass. In the case that aluminum ions are dissolved in the alkali solution, the concentration of the aluminum ions is preferably from 0.01 to 10% by mass, more preferably from 3 to 8% by mass. The temperature of the alkali solution is preferably from 20 to 90°C. The time for the treatment is preferably from 1 to 120 seconds.

Examples of the method for bringing the aluminum plate into contact with the alkali solution include a method of passing the aluminum plate through a bath in which the alkali solution is put, a method of immersing the aluminum plate into a bath in which the alkali solution is put, and a method of spraying the alkali solution onto the surface of the aluminum plate.

### <Desmutting treatment>

After the electrochemical surface-roughening treatment and the alkali etching treatment, washing with an acid (desmutting treatment) is conducted to remove the smut remaining on the surface. Examples of the used acid include nitric acid, sulfuric acid, phosphoric acid, chromic acid, hydrofluoric acid, and fluoroboric acid.

The desmutting treatment is conducted, for example, by bringing the aluminum plate into contact with an acidic solution which has an acid concentration of 0.5 to 30% by mass, the acid being hydrochloric acid, nitric acid, sulfuric acid or the like, (and may contain 0.01 to 5% by mass of aluminum ions). Examples of the method for bringing the aluminum plate into contact with the acidic solution include a method of passing the aluminum plate through a bath in which the acidic solution is put, a method of immersing the aluminum plate into a bath in which the acidic solution is put, and a method of spraying the acidic solution onto the surface of the aluminum plate.

In the desmutting treatment, it is permissible to use, as the acidic solution, waste of the aqueous solution made mainly of nitric acid or the aqueous solution made mainly of hydrochloric acid discharged in the electrochemical surface-roughening treatment, or to use wastes of an aqueous solution made mainly of sulfuric acid discharged in acidic oxidation treatment, which will be detailed later.

The liquid temperature in the desmutting treatment is preferably from 25 to 90°C. The time for the treatment is preferably from 1 to 180 seconds. Aluminum and aluminum alloy may be dissolved in the acidic solution used in the desmutting treatment.

The aluminum plate whose surface is roughened as described above is subjected to anodic oxidation treatment if desired, in order to improve the water retentivity or abrasion resistance of the surface. The electrolyte used in the anodic oxidation treatment of the aluminum plate is any one selected from various electrolytes which can form a porous oxide film. Sulfuric acid, phosphoric acid, oxalic acid, chromic acid, or a mixed acid thereof is generally used. The concentration of the electrolyte may be appropriately decided depending on the kind of the electrolyte.

Conditions for the anodic oxidation treatment cannot be decided without reservation since the conditions vary dependently on the kind of the used electrolyte. In general, however, the following are suitable: electrolyte concentration: 1 to 80% by mass; liquid temperature: 5 to 70°C; current density: 5 to 60 A/dm²; voltage: 1 to 100 V; and electrolyzing time: 10 seconds to 5 minutes.

If the amount of the oxide film on anode is less than 2.0 g/m², non-image areas of the planographic printing plate are easily scared so that the so-called "scar blemishes", resulting from ink adhesion to scared areas at printing, are easily generated.

After the anodic oxidation treatment, the aluminum surface is preferably subjected to hydrophilizing treatment with silicate.

An electrolyzing device used in the anodic oxidation treatment may be a device described in JP-A No. 48-26638 or 47-18739, JP-B No. 58-24517, or the like.

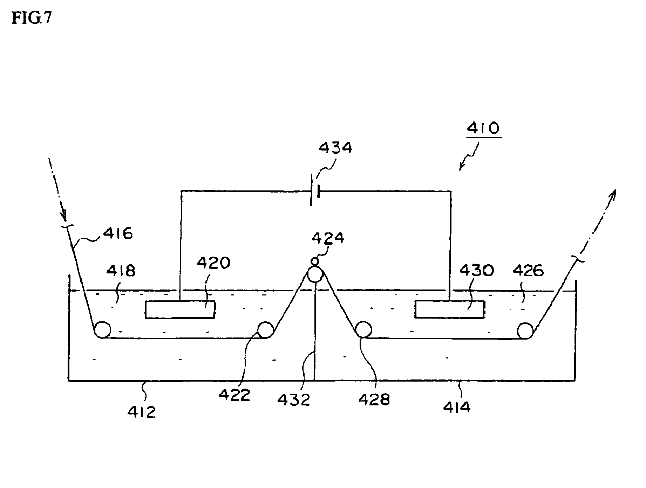

A device illustrated in Fig. 7is preferably used. Figure 7is a schematic view illustrating an example of a device for applying anodic oxidation treatment to the surface of the aluminum plate. In an anodic oxidation treatment device 410, an aluminum plate 416 is carried as shown by an arrow in Fig. 7. The aluminum plate 416 is positively charged by a power feeding electrode 420 in a power feeding bath 412 in which an electrolyte 418 is stored. The aluminum plate 416 is carried upwards by a roller 422 in the power feeding bath 412, and then the direction along which the plate 416 is carried is converted downwards by a nip roller 424. Thereafter, the plate 416 is carried toward an electrolyzing treatment bath 414 in which an electrolyte 426 is stored, and then the direction along which plate 416 is carried is converted into a horizontal direction by a roller 428. Next, the aluminum plate 416 is negatively charged by an electrolyzing electrode 430, thereby forming an anodic oxidation film on the surface thereof. The aluminum plate 416 fed out from the electrolyzing treatment bath 414 is carried into a subsequent step. In the anodic oxidation treatment device 410, the roller 422, the nip roller 424 and the roller 428 constitute a direction converting means. The rollers 422, 424 and 428 carry the aluminum plate 416 into a mountain form or a reverse U-shaped form in an inter-bath section between the power feeding bath 412 and the electrolyzing treatment bath 414. The power feeding electrode 420 and the electrolyzing electrode 430 are connected to a direct current power supply 434.

A characteristic of the anodic oxidation treatment device 410 illustrated in Fig. 7 is that the power feeding bath 412 and the electrolyzing treatment bath 414 are partitioned with one bath wall 432 and the aluminum plate 416 is carried into the mountain or reverse U-shaped form in the inter-bath section. In this way, the length of the aluminum plate 416 in the inter-bath section can be made shortest. Thus, the entire length of the anodic oxidation treatment device 410 can be made short; accordingly, costs for facilities can be decreased. By carrying the aluminum plate 416 into the mountain or reverse U-shaped form, it becomes unnecessary to make an opening through which the aluminum plate 416 can be passed in the bath wall of each of the baths 412 and 414. Thus, it is possible to suppress the liquid-supply amount necessary for keeping the liquid height of each of the baths 412 and 414 at a required level; therefore, running costs can be reduced.

### <Silicate treatment>

Silicate treatment is the treatment for obtaining hydrophilicity by use of the aqueous solution of alkali metal silicate such as sodium silicate or potassium silicate can be conducted by methods and steps described in U.S. Patent Nos. 2,714,066 and 3,181,461.

Examples of the alkali metal silicate include sodium silicate, potassium silicate and lithium silicate. The aqueous solution of alkali metal silicate may contain an appropriate amount of sodium hydroxide, potassium hydroxide, lithium hydroxide, or the like.

The aqueous solution of alkali metal silicate may contain an alkaline earth metal salt or a IV (IVA) group metal salt. Examples of the alkaline earth metal salt include nitrates such as calcium nitrate, strontium nitrate, magnesium nitrate and barium nitrate; sulfates; chlorides; phosphates; acetates; oxalates; and borates. Examples of the IV (IVA) group metal salt include titanium tetrachloride, titanium trichloride, titanium potassium fluoride, titanium potassium oxalate, titanium sulfate, titanium tetraiodide, zirconium chlorooxide, zirconium dioxide, zirconium oxychloride, and zirconium tetrachloride. These alkaline earth metal salts and the IV (IVA) group metal salts may be used alone or in combination of two or more thereof.

The amount of silicate deposition is preferably 1.0 to 30.0 mg/m², more preferably, 2.0 to 20.0 mg/m² from the viewpoint of prevention of ink blotting, stain resistance, and printing durability.

### [Polyester film support]

In the invention, a polyester film suitable as a planographic printing plate support is preferably has a hydrophilic layer having provided thereon a sol-gel structure as described below.

Such hydrophilic layer having a sol-gel structure can be used for any supports other than the polyester film.

### (Hydrophilic layer having sol-gel structure)

The hydrophilic layer having a sol-gel structure used in the invention (hereinafter may be abbreviated as hydrophilic layer) contains a hydrophilic binder. The hydrophilic binder is preferably a sol-gel transforming material made of a system of a metal hydroxide and a metal oxide, most preferably a sol-gel transforming system having the property of forming gel structure of polysiloxane.

The hydrophilic binder serves as a dispersing medium for constituents of the hydrophilic layer to accomplish various purposes, e.g., of enhancing the physical strength of the layer, enhancing the dispersibility of compositions constituting the layer, enhancing the coatability, enhancing the printability and improving the convenience in plate making. The content of the hydrophilic binder is preferably 30% by mass or more, more preferably 35% by mass more with respect to the total solids content in the hydrophilic layer. If the content is 30% by mass or less, the hydrophilic layer cannot have sufficient water resistance and abrasion resistance.

As the hydrophilic binder that can be preferably used in the hydrophilic layer of the invention may be an organic polymer compound for imparting appropriate strength and surface hydrophilicity to the hydrophilic layer. Specific examples thereof include modified PVA such as polyvinyl alcohol (PVA), carboxy modified PVA, starch and starch derivatives, cellulose derivatives such as carboxymethyl cellulose and hydroxyethyl cellulose, casein, gelatin, polyvinyl pyrrolidone, vinyl acetate-crotonic acid copolymer, styrene-maleic acid copolymer, polyacrylic acid and salts thereof, polyacrylamide, and water soluble resins such as water soluble acrylic copolymers constituted mainly of water soluble acrylic monomers such as acrylic acid and acrylamide.

Examples of the water resistant additives for crosslinking and curing the above organic polymer compounds include initial condensates of aminoplast such as glyoxal, melamine formaldehyde resin, and urea formaldehyde resin; methylolated polyamide resin, polyamide-polyamine-epichlorohydrin adduct, polyamide epichlorohydrin resin, modified polyamide polyimide resin, and so on. These compounds may be used in combination with crosslinking catalysts such as ammonium chloride and silane coupling agents.

The system capable of undergoing the sol-gel transformation that is preferably used in the invention is described in detail in books such as "Science of Sol-Gel Process (Sol-Gel Houno Kagaku)", by Sumio Sakka, Agune-Shofu-Sha (1988), "Latest Technique for Preparing Functional Thin Film by Sol-Gel Process (Saishin Sol-Gelhouniyoru Kinouseihakumaku Sakuseigijutu)", by Ken Hirashima, Sogo Gijutu Center (1992).

Linking groups of polyvalent elements are bonded together through oxygen atoms to form a network structure and the polyvalent metal simultaneously has free hydroxyl groups and/or alkoxy groups to thus form a resinous structure in which the foregoing constituents are mixed. Thus, the system is in a sol state before application when it contains much of alkoxy and hydroxyl groups, while the network-like resinous structure is strengthened and the system turns into a gel state as the reaction for forming ether bonds proceeds after application. In addition, the degree of hydrophilicity of the resious structure is variable, and a part of the hydroxyl groups are linked to solid fine particles to modify the surface of the particles and to thus change the degree of the hydrophilicity. Such polyvalent bonding elements having hydroxyl and alkoxy groups undergoing the sol-gel transformation are aluminum, silicon, titanium and zirconium and either of them can be used in the invention. The sol-gel transformation system, which makes used of siloxane bonds and can more preferably be used in the invention, is described in detail below. Sol-gel transformation using aluminum, titanium and zirconium can be carried out according to the following procedures described in connection with silicon, while these elements are substituted for the silicon.

The hydrophilic matrix formed through such sol-gel transformation is preferably a resin having siloxane bonds and silanol groups. The hydrophilic layer used in the invention is formed by applying a coating liquid or a sol system containing a silane compound having at least one silanol group. Thus, the hydrolysis, decomposition and condensation of silanol groups proceed as the elapse of time to thus form a structure having a siloxane skeleton and the gelation thereof proceeds. The siloxane resin having a gel structure is represented by the following formula (A), and the silane compound having at least one silanol group is represented by the following formula (B). The substance system that is contained in the hydrophilic layer and changes from hydrophilic into hydrophobic is not necessarily the silane compound alone represented by the formula (B), but generally may be an oligomer having a partially hydrolytically condensed silane compound, or a mixed composition of a silane compound and its oligomer.

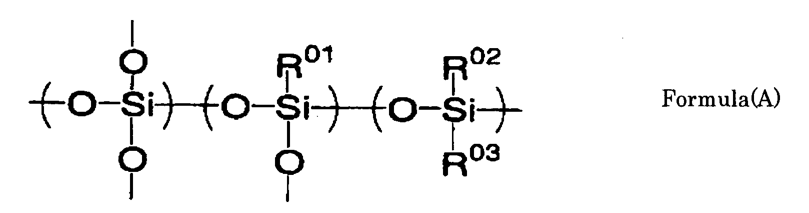

The siloxane-based resin represented by the above formula (A) is formed by sol-gel transformation from the dispersion containing one or more silane compounds represented by the following formula (B). At least one of R⁰¹ to R⁰³ in the formula (A) represents a hydroxyl group, the others each represent an organic residue selected from R⁰ and Y¹ in the following formula (B).

(R⁰)ₙSi(Y¹)₄₋ₙ Formula (B)

In the above formula (B), R⁰ represents a hydroxyl group, a hydrocarbon group or a heterocycle group, Y¹ represents a hydrogen atom, a halogen atom, -OR¹¹, -OCOR¹², or -N(R¹³)(R¹⁴) (wherein R¹¹ and R¹² each independently represents a hydrocarbon group, R¹³ and R¹⁴ may be the same or different from each other, and represents a hydrogen atom or a hydrocarbon group), and n represents 0, 1, 2, or 3.

Examples of the hydrocarbon group or the heterocycle group represented by R⁰ in the formula (B) include straight-chain or branched-chain alkyl groups having 1 to 12 carbon atoms that may be substituted [e.g., methyl group, ethyl group, propyl group, butyl group, pentyl group, hexyl group, heptyl group, octyl group, nonyl group, decyl group, and dodecyl group; wherein examples of the substitutes include halogen atoms (e.g., chlorine atom, fluorine atom, and bromine atom), hydroxy group, thiol group, carboxy group, sulfo group, cyano group, epoxy group, -OR¹ group (wherein R¹ represents a methyl group, an ethyl group, a propyl group, a butyl group, a heptyl group, a hexyl group, an octyl group, a decyl group, a propenyl group, a butenyl group, a hexenyl group, an octenyl group, a 2-hydroxy ethyl group, a 3-chloropropyl group, a 2-cyanoethyl group, a N,N-dimethylaminoethyl group, a 2-bromoethyl group, a 2-(2-methoxyethyl)oxyethyl group, a 2-methoxycarbonylethyl group, a 3-carboxypropyl group, or a benzyl group), -OCOR² group (R² represents the same members as said R¹), -COOR² group, -COR² group, -N(R³)(R³) (wherein R³ represents a hydrogen atom or the same members as said R¹, and may be the same or different from each other), -NHCONHR² group, -NHCOOR² group, -Si(R²)₃ group, -CONHR³ group, and -NHCOR² group. One or more of these substituents may be present in an alkyl group.), straight-chain or branched-chain alkenyl groups having 2 to 12 carbon atoms that may be substituted (e.g., vinyl group, propenyl group, butenyl group, pentenyl group, hexenyl group, octenyl group, decenyl group, and dodecenyl group, wherein the substituents may the same as those for said alkyl groups), aralkyl groups having 7 to 14 carbon atoms that may be substituted (e.g., benzyl group, phenethyl group, 3-phenylpropyl group, naphthylmethyl group, and 2-naphthylethyl group; wherein the substituents may be the same as those for said alkyl groups, and two or more thereof may be present), alicyclic group having 5 to 10 carbon atoms that may be substituted (e.g., cyclopentyl group, cyclohexyl group, 2-cyclohexylethyl group, 2-cyclopentylethyl group, norbonyl group, and adamantyl group, wherein the substituents may be the same as those for said alkyl groups, and two or more thereof may be present), aryl groups having 6 to 12 carbon atoms that may be substituted (e.g., phenyl group and naphthyl group, wherein the substituents may be the same as those for said alkyl groups, and two or more thereof may be present), and heterocycle groups containing at least one atom selected from nitrogen atom, oxygen atom, and sulfur atom that may be fused (examples of the heterocycle include pyran ring, furan ring, thiophene ring, morpholine ring, pyrrole ring, thiazole ring, oxazole ring, pyridine ring, piperidine ring, pyrrolidone ring, benzothiazole ring, benzoxazole ring, quinoline ring, and tetrahydrofuran ring, and these rings may contain substituents. The substituent may be the same as those for said alkyl groups, and two or more thereof may be present).

-OR¹¹ group, -OCOR¹² group, and N(R¹³)(R¹⁴) group contained in Y¹ in the formula (B) represent, for example, following groups.

In said -OR¹¹ group, R¹¹ represents an aliphatic group having 1 to 10 carbon atoms that may be substituted (e.g., methyl group, ethyl group, propyl group, butoxy group, heptyl group, hexyl group, pentyl group, octyl group, nonyl group, decyl group, propenyl group, butenyl group, heptenyl group, hexenyl group, octenyl group, decenyl group, 2-hydroxyethyl group, 2-hydroxypropyl group, 2-methoxyethyl group, 2-(methoxyethyloxo)ethyl group, 2-(N,N-diethylamino)ethyl group, 2-methoxypropyl group, 2-cyanoethyl group, 3-methyloxapropyl group, 2-chloroethyl group, cyclohexyl group, cyclopentyl group, cyclooctyl group, chlorocyclohexyl group, methoxycyclohexyl group, benzyl group, phenethyl group, dimethoxybenzyl group, methylbenzyl group, and bromobenzyl group).

In said -OCOR¹² group, R¹² represents the same aliphatic group as R¹¹ or an aromatic group having 6 to 12 carbon atoms that may be substituted (the aromatic group may be the same as those listed for said aryl groups in R).

More preferably, the sum of the carbon number of R¹¹ and R¹² is 16 or less.

In said -N(R¹³)(R¹⁴) group, R¹³ and R¹⁴ may be the same or different from each other, and each independently represent a hydrogen atom or an aliphatic group having 1 to 10 carbon atoms that may be substituted (examples thereof include the same members as R¹¹ in said -OR¹¹ group).

Specific examples of the silane compound represented by the formula (B) include tetrachlorosilane, tetrabromosilane, tetramethoxysilane, tetraethoxysilane, tetraisopropoxysilane, tetrabutoxysilane, methyltrichlorosilane, methyltribromosilane, methyltrimethoxysilane, methyltriethoxysilane, methyltriisopropoxysilane, methyl-tri-t-butoxysilane, ethyltrichlorosilane, ethyltribromosilane, ethyltrimethoxysilane, ethyltriethoxysilane, ethyltriisopropoxysilane, ethyl-tri-t-butoxysilane, n-propyltrichlorosilane, n-propyltribromosilane, n-propyltrimethoxysilane, n-propyltriethoxysilane, n-propyltriisopropoxysilane, n-propyl-tri-t-butoxysilane, n-hexyltrichlorosilane, n-hexyltribromosilane, n-hexyltrimethoxysilane, n-hexyltriethoxysilane, n-hexyltriisopropoxysilane, n-hexyl-tri-t-butoxysilane, n-decyltrichlorosilane, n-decyltribromosilane, n-decyltrimethoxysilane, n-decyltriethoxysilane, n-decyltriisopropoxysilane, n-decyl-tri-t-butoxysilane, n-octadecyltrichlorosilane, n-octadecyltribromosilane, n-octadecyltrimethoxysilane, n-octadecyltriethoxysilane, n-octadecyltriisopropoxysilane, n-octadecyl--tri-t-butoxysilane, phenyltrichlorosilane, phenyltribromosilane, phenyltrimethoxysilane, phenyltriethoxysilane, phenyltriisopropoxysilane, phenyl-tri-t-butoxysilane, dimethoxy diethoxysilane, dimethyldichlorosilane, dimethyldibromosilane, dimethyldimethoxysilane, dimethyldiethoxysilane, diphenyldichlorosilane, diphenyldibromosilane, diphenyldimethoxysilane, diphenyldiethoxysilane, phenylmethyldichlorosilane, phenylmethyldibromosilane, phenylmethyldimethoxysilane, phenylmethyldiethoxysilane, triethoxyhydrosilane, tribromohydrosilane, trimethoxyhydrosilane, isopropoxyhydrosilane, -tri-t-butoxyhydrosilane, vinyltrichlorosilane, vinyltribromosilane, vinyltrimethoxysilane, vinyltriethoxysilane, vinyltriisopropoxysilane, vinyl--tri-t-butoxysilane, trifluoropropyltrichlorosilane, trifluoropropyltribromosilane, trifluoropropyltrimethoxysilane, trifluoropropyltriethoxysilane, trifluoropropyltriisopropoxysilane, trifluoro propyl-tri-t-butoxysilane, γ-glycidoxy propylmethyldimethoxysilane, γ-glycidoxypropylmethyldiethoxysilane, γ-glycidoxypropyltrimethoxysilane,

γ-glycidoxypropyltriethoxysilane, γ-glycidoxypropyltriisopropoxysilane, γ-glycidoxypropyl-tri-t-butoxysilane, γ-methacryloxypropylmethyldimethoxysilane, γ-methacryloxypropylmethyldiethoxysilane, γ-methacryloxypropyltrimethoxysilane, γ-methacryloxypropyltriisopropoxysilane, γ-methacryloxypropyl-tri-t-butoxysilane, γ-aminopropylmethyldimethoxysilane, γ-aminopropylmethyldiethoxysilane, γ-aminopropyltrimethoxysilane, γ-aminopropyltriethoxysilane, γ-aminopropyltriisopropoxysilane, γ-aminopropyl-tri-t-butoxysilane, γ-mercaptopropylmethyldimethoxysilane, γ-mercaptopropylmethyldiethoxysilane, γ-mercaptopropyltrimethoxysilane, γ-mercaptopropyltriethoxysilane, γ-mercaptopropyltriisopropoxysilane, γ-mercaptopropyl-tri-t-butoxysilane, β-(3,4-epoxycyclohexyl)ethyltrimethoxysilane, and β-(3,4-epoxycyclohexyl)ethyltriethoxysilane.

The silane compound represented by the formula (B) that is used for the formation of the hydrophilic layer according to the invention can be used in combination with metal compounds such as Ti, Zn, Sn, Zr, and Al that can be bound to a resin to form a film during sol-gel transformation. Examples of the metal compound that can be used include Ti(OR²)₄ (wherein R² represents a methyl group, an ethyl group, a propyl group, a butyl group, a pentyl group, or a hexyl group), TiCl₄, Zn(OR²)₂, Zn(CH₃COCHCOCH₃)₂, Sn(OR²)₄, Sn(CH₃COCHCOCH₃)₄, Sn(OCOR²)₄, SnCl₄, Zr(OR²)₄, Zr(CH₃COCHCOCH₃)₄, and Al(OR²)₃.

In the matrix of the gel structure, hydrophilic polymers or crosslinking agents having silane coupling groups may be added to the terminals of the polymer main chain for various purposes such as enhancing physical properties such as film strength and flexibility, enhancing coatability, and controlling hydrophilicity.

Examples of the hydrophilic polymer having silane coupling groups at the terminals of the polymer main chain include the polymer represented by the following formula (1).

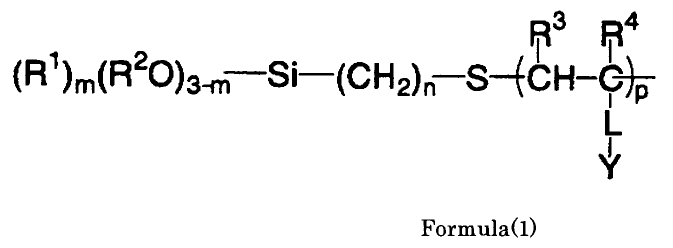

In the above formula (1), R¹, R², R³, and R⁴ each independently represent a hydrogen atom or a hydrocarbon group having 8 or less carbon atoms, m represents 0, 1, or 2, n represents an integral number of 1 to 8, and p represents an integral number of 30 to 300. Y represents -NHCOCH₃, -CONH₂, -CON(CH₃)₂, -COCH₃, -OCH₃, -OH, -CO₂M, or CONHC(CH₃)₂SO₃M, M represents any one selected from the group consisting of a hydrogen atom, alkali metal, alkaline earth metal, and onium.

L represents a single bond or an organic linking group, wherein the organic linking group represents a polyvalent linking group constituted of nonmetal atoms, and specifically is a group constituted of 1 to 60 carbon atoms, 0 to 10 nitrogen atoms, 0 to 50 oxygen atoms, 1 to 100 hydrogen atoms, and 0 to 20 sulfur atoms. More specific examples of the linking group include the groups constituted of following structural units or combinations thereof.

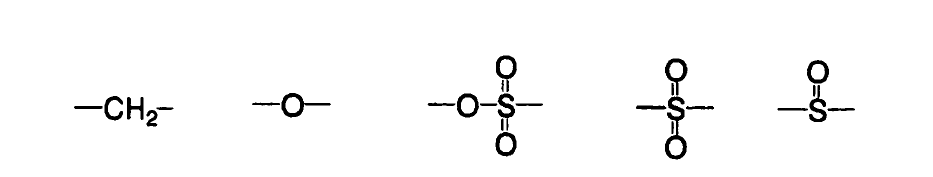

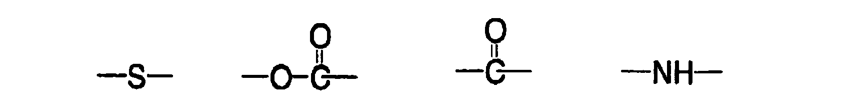

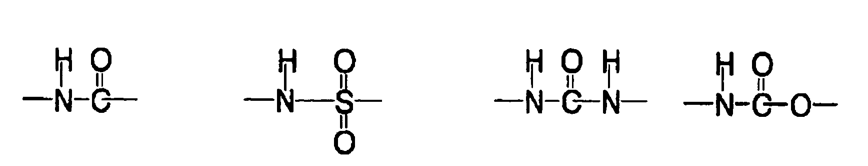

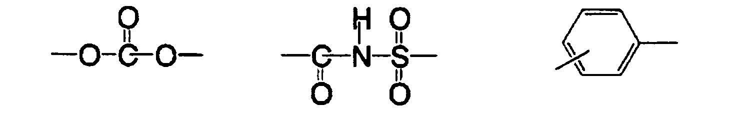

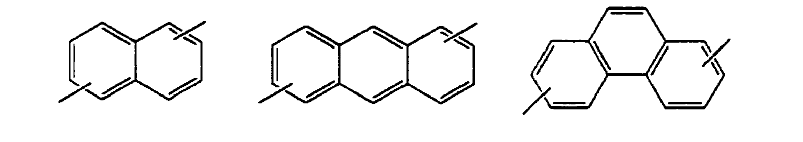

Specific examples of the hydrophilic polymer having silane coupling groups represented by the formula (1) include following polymers. In the following specific examples, p may be any number from 100 to 250.

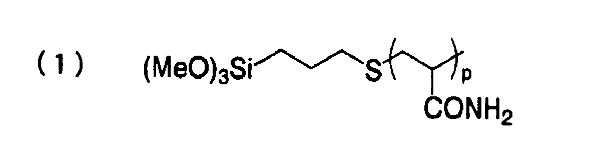

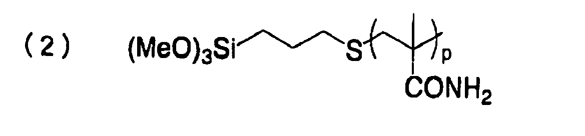

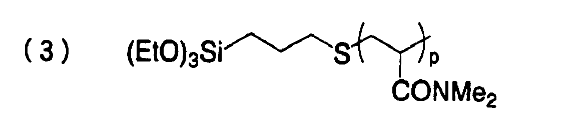

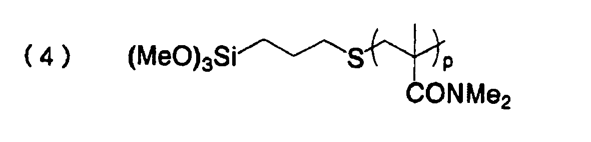

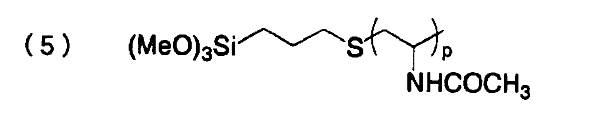

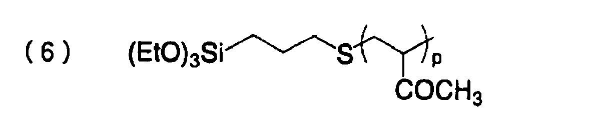

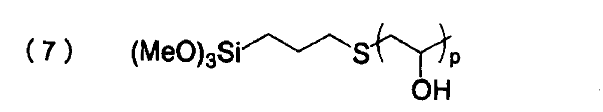

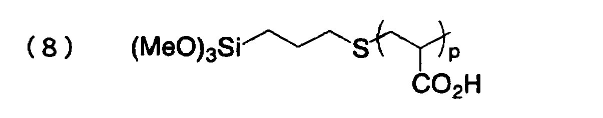

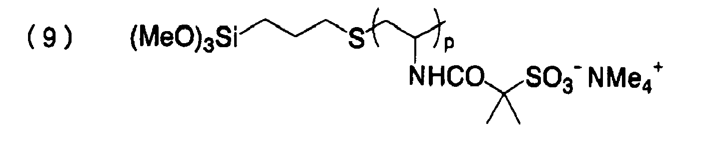

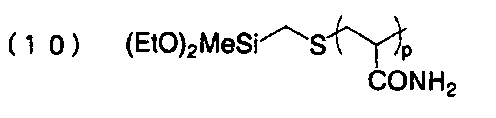

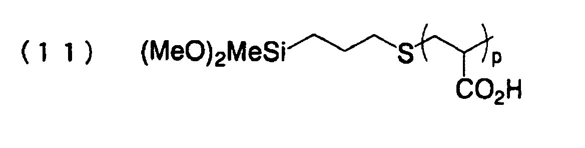

Said hydrophilic polymer according to the invention can be synthesized by radical polymerization of a radical-polymerizable monomer represented by the following formula (2) and a silane coupling agent represented by the following formula (3) that has chain transfer ability in radical polymerization. Since the silane coupling agent represented by the formula (3) has chain transfer ability in radical polymerization, the polymer having silane coupling groups at the terminals of the polymer main chain can be synthesized by radical polymerization.

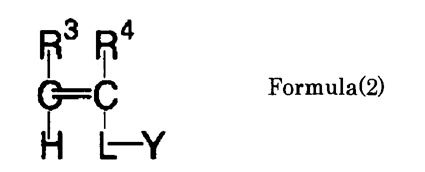

(R¹)ₘ(R²O)₃₋ₘ-Si-(CH₂)ₙ-S-H Formula (3)

The film thickness of the hydrophilic layer in the invention is preferably 0.1 to 10 g/m², more preferably 0.5 to 5 g/m².

Said hydrophilic layer may be provided directly on a polyester film. Alternatively, an intermediate layer (contact layer) containing polyacrylamide or the like may be provided between a polyester film and a contact layer for enhancing adhesiveness.

An said image area is formed by said method using the ink composition of the invention, and thus a planographic printing plate is obtained.

The obtained planographic printing plate has formed thereon a high-definition image area with no occurrence of blotting, and thus allows printing of printed materials on which sharp and high quality image are formed.

Exemplary aspects of the invention are listed below.
<1> An ink composition for ink jet recording comprising a dispersion medium (A) and nonaqueous dispersion resin particles (B) having a volume average particle diameter of 0.8 µm or more.
<2> The ink composition for ink jet recording as described in <1> wherein the volume average particle diameter of the nonaqueous dispersion resin particles is 1.0 to 4.0 µm.
<3> The ink composition for ink jet recording as described in <1> wherein the volume average particle diameter of the nonaqueous dispersion resin particles is 1.2 to 3.0 µm.
<4> The ink composition for ink jet recording as described in <1> wherein the weight average molecular weight of the nonaqueous dispersion resin particles is 1 × 10³ to 1 × 10⁶ µm.
<5> The ink composition for ink jet recording as described in <1> wherein the modulus of elasticity of the nonaqueous dispersion resin particles is 1 × 10⁷ or more at room temperature.
<6> The ink composition for ink jet recording as described in <1> wherein the content of the nonaqueous dispersion resin particles is between 1 and 90% by mass with respect to the total weight of the ink composition.
<7> An ink composition for forming an image on a planographic printing plate support by an ink jet recording system, comprising the ink composition for ink jet recording according to <1>
<8> The ink composition for ink jet recording as described in <1> wherein the content of the dispersion medium (A) is in the range of 10 to 90% by mass with respect to the total weight of the ink composition.
<9> The ink composition for inkjet recording as described in <1>, wherein the nonaqueous dispersion resin particles (B) is obtained by polymerization granulation in a nonaqueous solvent (a) using at least one monofunctional monomer (b) in the presence of the resin for dispersion stabilization (c).
<10> The ink composition for ink jet recording as described in <9>, wherein the amount of the nonaqueous solvent (a) is in the range of 0.01 to 80% by mass with respect to the total weight of the mixed solution used for the synthesis.
<11> The ink composition for ink jet recording as described in <9>, wherein the nonaqueous dispersion resin particles (B) are prepared using the nonaqueous solvent (a) identical to the dispersion medium (A).
<12> The ink composition for ink jet recording as described in <9>, wherein the monofunctional monomer (b) is a monomer represented by the following formula (I), 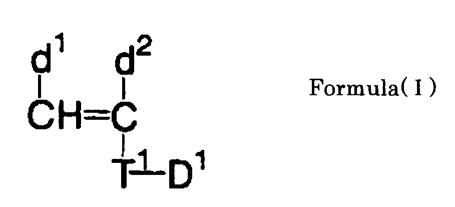 wherein T¹ represents -COO-, -OCO-, -CH₂OCO-, -CH₂COO-, -O-, -CONHCOO-, -CONHOCO-, -SO₂-, -CON(W¹)-, -SO₂N(W¹)-, or a phenylene group, wherein W¹ represents a hydrogen atom or a substituted or unsubstituted aliphatic group having 1 to 20 carbon atoms, D¹ represents a hydrogen atom, a halogen atom, or a substituted or unsubstituted aliphatic group having 1 to 20 carbon atoms, d¹ and d² may be the same or different from each other and each independently represents a hydrogen atom, a halogen atom, a cyano group, or a hydrocarbon group having 1 to 20 carbon atoms, -COO-Z¹, or -COO-Z¹ via a hydrocarbon group having 1 to 20 carbon atoms, wherein, Z¹ represents a hydrocarbon group having 1 to 22 carbon atoms.
<13> The ink composition for ink jet recording as described in <9>, wherein the amount of the monofunctional monomer (b) is 10% by mass or more with respect to the total solids content in the mixed solution used for the synthesis.
<14> The ink composition for ink jet recording as described in <9>, wherein the resin for dispersion stabilization (c) is used in the range of 1 to 50% by mass with respect to the monofunctional monomer (b) used for the synthesis of (B).
<15> The ink composition for ink jet recording as described in <9>, wherein the resin for dispersion stabilization (c) is a polymer which is soluble in the dispersion medium (A) selected from a random copolymer, comb copolymer, star copolymer, partially crosslinked copolymer, and crosslinking group-containing copolymer.
<16> The ink composition for ink jet recording as described in <7>, wherein the ink jet recording system is an electrostatic system.
<17> A method for producing a planographic printing plate comprising forming an image on a planographic printing plate support by an ink jet recording system using an ink composition for ink jet recording containing the dispersion medium (A) and the nonaqueous dispersion resin particles (B) having a volume average particle diameter of 0.8 µm or more.
<18> The method for producing a planographic printing plate as described in <17>, wherein the ink jet recording system is an electrostatic system.

### EXAMPLES

The present invention is illustrated in detail by following Examples, but the invention is not limited thereto.

### <Synthesis of dispersant (c)>

### [Synthesis of random copolymer (C-1)]

200 g of toluene was heated to a temperature of 80°C while stirring under a nitrogen gas stream. A mixed solution of 0.05 mol of styrene, 0.95 mol of stearyl methacrylate, and 2,2'-azobis(isobutyronitrile) (abbreviated as A.I.B.N) dissolved in 200 g of toluene was added dropwise over a period of 3 hours. After the completion of the addition, the mixture was reacted for 2 hours at a temperature of 80°C. Thereafter, an additional 2 g of A.I.B.N. was added to the mixture, followed by reacting for 2 hours. After cooling, the mixed solution was reprecipitated in 5 L of methanol, and powder was collected by filtration and dried to obtain white solid (C-I) at a yield of 92%.

The obtained random copolymer (C-I) had a weight average molecular weight (abbreviated as Mw) of 4 × 10⁴. The structure was identified by NMR and IR.

### [Synthesis of random copolymer (C-II)]

200 g of toluene was heated to a temperature of 80°C while stirring under a nitrogen gas stream.A mixed solution of 0.1 mol of methyl methacrylate, 0.9 mol of hexadecyl methacrylate, and 2,2'-azobis(isobutyronitrile) (abbreviated as A.I.B.N) dissolved in 200 g of toluene was added dropwise over a period of 3 hours. After the completion of the addition, the mixture was reacted for 2 hours at 80°C. Thereafter, an additional 2 g of A.I.B.N. was added to the mixture, and reacted for 2 hours. After cooling, the mixed solution was reprecipitated in 5 L of methanol, and powder was collected by filtration and dried to obtain white solid (C-II) at a yield of 94%.

The obtained random copolymer (C-II) had a weight average molecular weight (abbreviated as Mw) of 3.6 × 10⁴. The structure was identified by NMR and IR.

### [Synthesis of comb copolymer (C-III)]

### (Preparation of macromonomer (MM) 1: macromonomer MM-1)

A mixed solution of 100 g of octadecyl methacrylate and 3 g of mercaptopropionic acid in 300 g of toluene was heated to a temperature of 75°C while stirring under a nitrogen gas stream. 1.0 g of 2,2'-azobisisobutyronitrile (abbreviated as A.I.B.N.) was added to the solution, followed by reacting for 4 hours. Additional 0.5 g of A.I.B.N. was added to the mixture and reacted for 3 hours, and further additional 0.3 g of A.I.B.N was added and reacted for 3 hours. Subsequently, to the reaction solution 8 g of glycidyl methacrylate, 1.0 g of N,N-dimethyldodecylamine, and 0.5 g of t-butylhydroquinone were added, and stirred at a temperature of 100°C for 12 hours. After cooling, the reaction solution was reprecipitated in 2 L of methanol, and white powder was obtained at a yield of 86%. The polymer had a weight average molecular weight of 1.8 × 10⁴. The structure was identified by NMR and IR.

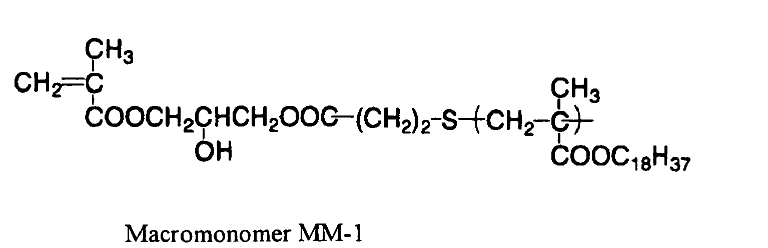

A mixed solution of 0.05 mol of styrene and 0.95 mol of the macromonomer MM-1 obtained as described above, and 250 g of toluene was heated to a temperature of 80°C while stirring under a nitrogen gas stream. 3.0 g of 2,2'-azobisisobutyronitrile (abbreviated as A.I.B.N.) was added to the solution, followed by reacting for 4 hours. Additional 1.0 g of A.I.B.N. was added to the mixture and reacted for 2 hours, and further additional 0.5 g of A.I.B.N. was added and reacted for 2 hours. After cooling, the mixed solution was reprecipitated in 3.5 L of methanol, and powder was collected by filtration, and dried to obtain white powder at a yield of 90%.

The obtained comb copolymer (C-III) had a weight average molecular weight (abbreviated as Mw) of 3.5 × 10⁴. The structure was identified by NMR and IR.

### [Synthesis of comb copolymer (C-IV)]

### (Preparation of macromonomer (MM) 2: macromonomer MM-2)

A mixed solution of 70 g of dodecyl methacrylate, 30 g of octadecyl acrylate, 5 g of thioethanol, and 250 g of toluene was heated to a temperature of 75°C while stirring under a nitrogen gas stream. 1.5 g of A.I.B.N. was added to the solution, and reacted for 4 hours. Additional 0.5 g of A.I.B.N. was added to the mixture and reacted for 3 hours, and further additional 0.3 g of A.I.B.N. was added and reacted for 3 hours. After cooling the reacted solution to room temperature, 18.2 g of 2-carboxyethyl acrylate was added, and to the mixture a mixed solution of 24 g dicyclohexyl carbodiimide (abbreviated as D.C.C.) and 150 g of methylene chloride was added dropwise over a period of 1 hour. To the mixture 1.0 g of t-butyl hydroquinone was added, and stirred for 4 hours.

The precipitated crystal was removed by filtration, and obtained filtrate was reprecipitated in 2 L of methanol. The precipitated oily substance was collected, and dried under reduced pressure to obtain a polymer having a weight average molecular weight of 1.3 × 10⁴ at a yield of 72%. The structure was identified by NMR and IR.

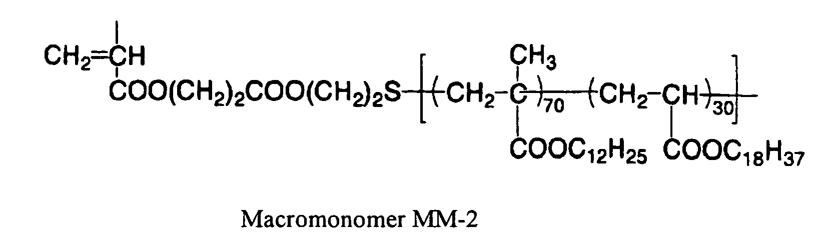

A mixed solution of 0.05 mol of styrene, 0.95 mol of the macromonomer MM-2 obtained as described above, and 250 g of toluene was heated to a temperature of 80°C while stirring under a nitrogen gas stream. 3.0 g of 2,2'-azobisisobutyronitrile (abbreviated as A.I.B.N.) was added to the solution, and reacted for 4 hours. Additional 1.0 g of A.I.B.N. was added to the mixture and reacted for 2 hours, and further additional 0.5 g of A.I.B.N. was added and reacted for 2 hours. After cooling, the mixed solution was reprecipitated in 3.5 L of methanol, and powder was collected by filtration, and dried to obtain white powder at a yield of 92%.

The obtained comb copolymer (C-IV) had a weight average molecular weight (abbreviated as Mw) of 2.9 × 10⁴. The structure was identified by NMR and IR.

### [Star copolymer (C-V)]

A mixture of 50 g of methyl methacrylate, 50 g of methyl acrylate, 6.2 g the initiator [I-1] having the following structure, and 150 g of tetrahydrofuran was heated to a temperature of 60°C while stirring under a nitrogen gas stream. The solution was irradiated with a high pressure mercury lamp of 400 W through a glass filter at a distance of 10 cm for 8 hours to carry out photopolymerization. The polymerized mixture was reprecipitated in 2 L of methanol, and the precipitate was collected and dried.

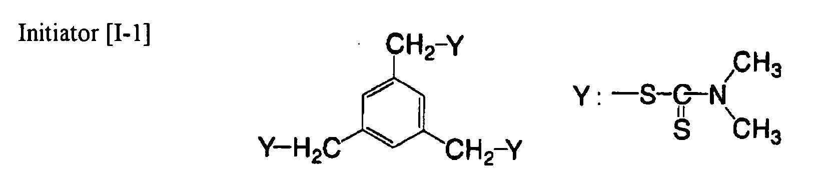

Subsequently, a mixed solution of 30 g of the above polymerized mixture, 70 g of stearyl methacrylate, and 150 g of tetrahydrofuran was heated to a temperature of 50°C under a nitrogen gas stream. Then, as in the same manner as above, light irradiation was carried out for 16 hours, the thus obtained reactant was reprecipitated in 1.5 L of methanol, and the precipitate was collected and dried. Thus star copolymer (C-V) having a weight average molecular weight of 3.9 × 10⁴ and the following structure was obtained at a yield of 86%. The structure was identified by NMR and IR.

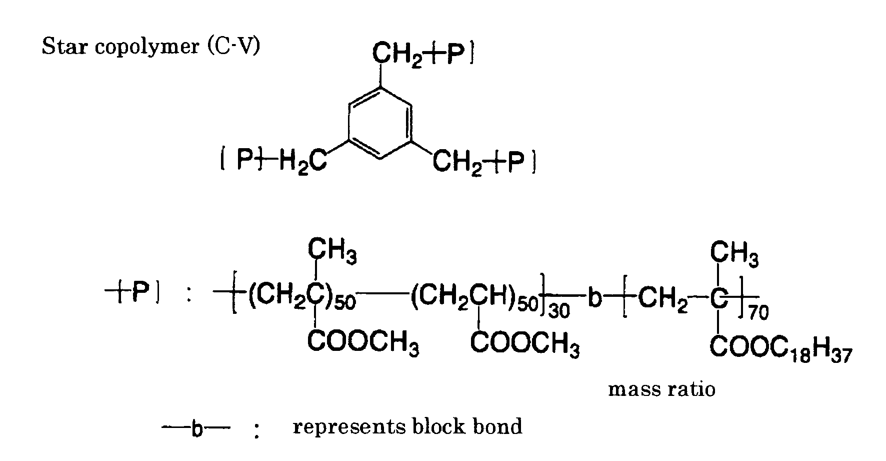

### [Partially crosslinked copolymer (C-VI)]

A mixed solution of 0.95 mol of octadecyl methacrylate, 0.05 mol of divinyl benzene, and 300 g of toluene was heated to a temperature of 85°C while stirring under a nitrogen gas stream. 4.0 g of 2,2'-azobisisobutyronitrile (abbreviated as A.I.B.N.) was added to the solution, and reacted for 4 hours. Additional 1.0 g of A.I.B.N. was added to the mixture, and reacted for 2 hours. After cooling, the mixed solution was reprecipitated in 1.5 L of methanol, and powder was collected by filtration, and dried to obtain white powder at a yield of 97%.

The obtained partially crosslinked copolymer (C-VI) had a weight average molecular weight of 3.3 × 10⁴. The structure was identified by NMR and I

### [Crosslinking group-containing copolymer (C-VII)]

A mixed solution of 96 g of octadecyl methacrylate, 4 g of 4-(2-methacryloyloxyethyloxycarbonyl) butyric acid, and 250 g of toluene was heated to a temperature of 80°C under a nitrogen gas stream. 1.5 g of 2,2'-azobisisobutyronitrile (abbreviated as A.I.B.N.) was added as an initiator, followed by reacting for 4 hours, and additional 0.8 g of A.I.B.N. was added, and reacted at a temperature of 80°C for 4 hours.

After cooling the reaction mixture to room temperature, 6 g of allyl alcohol was added while stirring, then a mixed solution of 10g of dicyclohexyl carbodiimide (abbreviated as D.C.C.), 0.1 g of 4-(N,N-diethyl amino)pyridine and 30 g of methylene chloride was added dropwise over a period of 1 hour. The reaction was continued for additional 3 hours to complete the reaction. Subsequently, 10 g of 80% formic acid was added to the reaction mixture and stirred for 1 hour, insolubles was removed by filtration, and the filtrate was reprecipitated in 2.5 L of methanol. The precipitate was collected by filtration, dissolved again in 200 g of toluene, and insolubles were removed by filtration. The filtrate was reprecipitated in 1 L of methanol, and the precipitate was collected by filtration, and dried.

The crosslinking group-containing copolymer (C-VII) having the following structure was obtained at a yield of 85% , and had a weight average molecular weight of 4.6 × 10⁴. The structure was identified by NMR and IR.

### Crosslinking group-containing copolymer (C-VII)

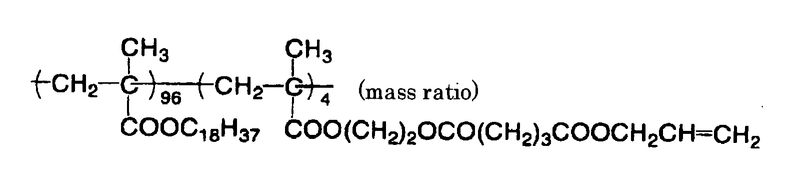

### [Crosslinking group-containing copolymer (C-VIII)]

A mixed solution of 50 g of dodecyl methacrylate, 45g of octadecyl acrylate, 5 g of glycidyl methacrylate, and 250 g of toluene was heated to a temperature of 75°C while stirring under a nitrogen gas stream. 1.8 g of A.I.B.N. was added, and reacted for 4 hours. Additional 0.5 g of A.I.B.N. was added and reacted for 3 hours, and further additional 0.3 g of A.I.B.N. was added and reacted for 3 hours. Subsequently, to the reaction solution 6 g of 3-acryloyloxypropionic acid, 1.0 g of N,N-dimethyldodecylamine, and 0.5 g of t-butylhydroquinone was added, and stirred at a temperature of 100°C for 10 hours. After cooling, the reaction solution was reprecipitated in 2 L of methanol, and white powder was obtained at a yield of 93%.

The thus obtained crosslinking group-containing copolymer (C-VIII) having the following structure and a weight average molecular weight of 4.2 × 10⁴. The structure was identified by NMR and IR.

Crosslinking group-containing copolymer (C-VIII)

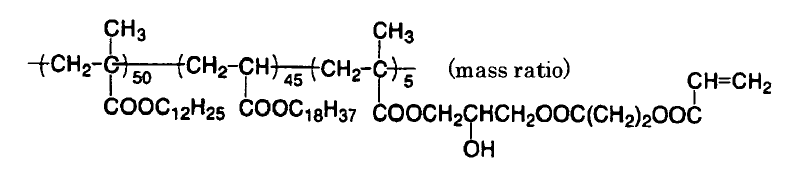

### <Preparation of ink composition>

### [Synthesis of specific particles (X-1)]

A mixed solution of 20 g of said dispersant (c) [C-VII] and 40g of methyl methacrylate, 52 g of methyl acrylate, and 8 g of methacrylic acid as the monomers (b), and 200 g of Isopar G as the nonaqueous solvent (a) was heated to a temperature of 70°C while stirring under a nitrogen gas stream. 1.5 g of A.I.V.N. was added as a polymerization initiator, and reacted for 3 hours. Additionally 1.0 g of A.I.B.N. was added as an initiator, and the mixture was heated to a temperature of 80°C, followed by reacting for 4 hours. Subsequently, the temperature was heated to a temperature of 100°C, stirred for 1 hour, and unreacted monomers was removed by evaporation. After cooling, the reaction solution was strained through 200-mesh nylon cloth to obtain a white dispersion of particles having a polymerization rate of 99.2%, a volume average particle diameter of 1.18 µm, and a Mw of 5.5 × 10⁴.

The particle diameter was measured with CAPA-500 (manufactured by Horiba, Ltd.).

### [Synthesis of specific particles (X-2) to (X-15)]

Synthesis of specific particles (X-2) to (X-15) was carried out according to said synthesis procedure for the specific particles (X-1), while the type and amount of the dispersant (c) and monomer (b) were replaced as shown in the following Table 1.

### [Preparation ink composition (Y-1)]

A dispersion liquid containing the specific particles (X-1) obtained as described above was diluted with Isopar G to make a dispersion liquid containing 50 g of the solid content of the specific particles (X-1) and 20% by mass of the specific particles (X-1). To the dispersion liquid, 5 g of victoria pure blue was added and reacted at 50°C for 4 hours. After the completion of the reaction, the liquid was filtered through a 4 µm filter to obtain a blue color ink as described in Example 1.

### [Preparation of ink compositions (Y-2) to (Y-15)]

Ink composition (Y-2) to (Y-15) as described in Examples 2 to 15 were prepared in the same manner as the ink composition (Y-1), except that the specific particles (X-1) used therein was replaced with specific particles (X-2) to (X-15) listed in the following Table 1.

**[Table 1]**

| | Ink composition | Specific particles (B) | Monomer (b) | Dispersant (c) | Particle diameter (µm) | Mw (× 10⁴) |
|---|---|---|---|---|---|---|
| Example 2 | Y-2 | X-2 | Methyl methacrylate 40g Methyl acrylate 60g | C-VII | 1.09 | 6.2 |
| Example 3 | Y-3 | X-3 | Methyl methacrylate 40g Methyl acrylate 52g Dimethylaminoethyl methacrylate 8g | C-VII | 1.19 | 4.9 |
| Example 4 | Y-4 | X-4 | Methyl methacrylate 40g Methyl acrylate 52g Methacrylic acid 8g | C-1 | 0.99 | 8.5 |
| Example 5 | Y-5 | X-5 | Methyl methacrylate 40g Methyl acrylate 60g | C-I | 0.95 | 6.3 |
| Example 6 | Y-6 | X-6 | Methyl methacrylate 40g Methyl acrylate 52g Dimethylaminoethyl methacrylate 8g | C-I | 1.20 | 5.9 |
| Example 7 | Y-7 | X-7 | Methyl methacrylate 40g Methyl acrylate 52g Methacrylic acid 8g | C-III | 1.11 | 4.9 |
| Example 8 | Y-8 | X-8 | Methyl methacrylate 40g Methyl acrylate 60g | C-III | 1.30 | 6.1 |
| Example 9 | Y-9 | X-9 | Methyl methacrylate 40g Methyl acrylate 52g Dimethylaminoethyl methacrylate 8g | C-III | 1.42 | 5.5 |
| Example 10 | Y-10 | X-10 | Methyl methacrylate 40g Methyl acrylate 52g Methacrylic acid 8g | C-V | 1.20 | 4.9 |
| Example 11 | Y-11 | X-11 | Methyl methacrylate 40g Methyl acrylate 60g | C-V | 0.97 | 8.1 |
| Example 12 | Y-12 | X-12 | Methyl methacrylate 40g Methyl acrylate 52g Dimethylaminoethyl methacrylate 8g | C-V | 0.99 | 7.0 |
| Example 13 | Y-13 | X-13 | Methyl methacrylate 40g Methyl acrylate 52g Methacrylic acid 8g | C-VI | 1.10 | 64 |
| Example 14 | Y-14 | X-14 | Methyl methacrylate 40g Methyl acrylate 60g | C-VI | 1.90 | 6.3 |
| Example 15 | Y-15 | X-15 | Methyl methacrylate 40g Methyl acrylate 52g Dimethylaminoethyl methacrylate 8g | C-VI | 1.08 | 7.1 |

### <Preparation of comparable ink compositions (Z-1) to (Z-5)>

### [Comparative Example 1: Preparation of aqueous dispersion ink (Z-1)]

A flask was equipped with a stirrer, a thermometer, an addition funnel, a nitrogen inlet tube, and a reflux condenser, therein 800 mL of distilled water was added with introducing nitrogen gas to remove oxygen, and 1.0 g of dodecyl sulfuric acid sodium as a dispersant and 3.5 g of 1 N NaOH were added, followed by heating until the internal temperature reached 80°C. To the mixture, 0.46 g of K₂S₂O₈ as an initiator dissolved in 11 g of distilled water, 0.25 mol of 4-vinylpyridine, and 0.75 mol of styrene were added dropwise over a period of each 3 hours. Subsequently, 0.46 g of K₂S₂O₈ dissolved in I 1 g of distilled water, 3.5 g of 1 N NaOH were further added, and reacted for 2 hours to obtain an aqueous particle dispersion. The obtained particle dispersion had a polymerization rate of 98.1%, an average particle diameter of 0.09 µm, and a Mw of 4.1 × 10⁴. The particle diameter was measured by CAPA-500 (manufactured by Horiba, Ltd.).

To the obtained aqueous particle dispersion, victoria pure blue was added in an amount of 5% by mass with respect to the solids content, and reacted at a temperature of 50°C for 4 hours. After the completion of the reaction, the mixture was filtered through a 4 µm filter to obtain blue color ink (Z-1).

### [Comparative Example 2: Preparation of UV ink (Z-2)]

The following components were mixed and stirred to obtain cyan ink (Z-2).
- Caprolactone-modified dipentaerythritol hexaacrylate 6.0 g
   (trade name: DPCA 60, manufactured by SARTOMER; polymerizable compound)
- 1,6-hexanediol diacrylate 14.0 g
   (trade name: HDDA, manufactured by Daicel-UCB Company, Ltd.; polymerizable compound)
- Above-described a-1(oxygen scavenger) 0.6g
- Mixture of 1-hydroxy-cyclohexyl-phenylketone and bis(2,6-dimethoxybenzoyl)-2,4,4-trimethyl-pentylphosphine oxide 1.8 g
   (manufactured by Ciba Specialty Chemicals; photopolymerization initiator)
- Victoria pure blue BOH (the following structure) 0.4 g

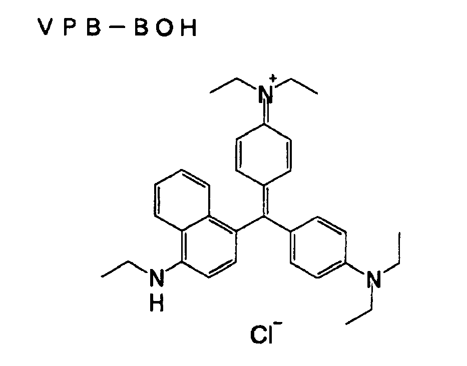

### [Comparative Example 3: Preparation of solid ink (Z-3)]

A mixture of 58 parts by mass of ester amide (trade name CPH380N, manufactured by CP Hall) as a vehicle, 40 parts by mass of carnauba wax (manufactured by Noda Wax Co., Ltd.) and 2 parts by mass of a blue dye (victoria pure blue) was heated to a temperature of 130°C with mixing until a homogeneous melted mixture was obtained. Subsequently, the mixture was filtered under heating and pressure to remove impurities, and cooled to room temperature to obtain blue solid ink (Z-3).

### [Comparative Example 4: Preparation of ink (Z-4) containing polymerization granulated particles having a volume average particle diameter of 0.5 µm or less]

A mixed solution of 30 g of said dispersant [C-V 11], 40 g of methyl methacrylate, 52 g of methyl acrylate, 8 g of methacrylic acid, and 900 g of Isopar G was heated to a temperature of 70°C while stirring under nitrogen gas stream. 1.5 g of A.I.V.N. was added as a polymerization initiator, and reacted for 3 hours. Additional 1.0 g of A.I.B.N. was added as an initiator, and heated to a temperature of 80°C, followed by reacting for 4 hours. Subsequently, the mixture was heated to a temperature of 100°C, stirred for 1 hour, and unreacted monomers were removed by evaporation. After cooling, the solution was strained through 200-mesh nylon cloth to obtain a white particle dispersion having a polymerization rate of 99.2%, a volume average particle diameter of 0.31 µm, and a Mw of 4.6 × 10⁴.

The particle diameter was measured with CAPA-500 (manufactured by Horiba, Ltd.).

To said 10% by mass dispersion of Isopar G having a solid content of 50 g, 5 g of victoria pure blue was added, and reacted for 4 hours at a temperature of 50°C. After the completion of the reaction, the solution was filtered through a 4 µm filter to obtain blue ink (Z-4).

### [Comparative Example 5: Preparation of wet dispersion particle ink (Z-5)]

5 g of victoria pure blue, 50 g of a coating agent [butyl acrylate-methyl methacrylate copolymer (75/25 by mass, manufactured by Aldrich)] were placed in a desktop kneader (trade name: PBV-0. 1, manufactured by Irie Shokai Co., Ltd.), and mixed with heating at a heater temperature of 100°C for 2 hours. 30g of the thus obtained mixture was coarsely ground with a Trio Blender (manufactured by Trio Science), and ground to a fine powder with a sample mill (trade name: SK-M10, manufactured by Kyoritsu-Riko Co.). 30 g of the obtained fine powder, 7.5 g of dispersant [C-III], and 75 g of Isopar G, were placed in a paint shaker (manufactured by Toyo Seiki Co., Ltd.) together with glass beads having a diameter of about 3.0 mm, and preliminarily dispersed. After removing the glass beads, the dispersion was placed in a dynomill (trade name: Type KDL, manufactured by Shinmaru Enterprises Corporation), together with zirconia ceramic beads having a diameter of about 0.6 mm, and dispersed (atomized) at a rotational speed of 2,000 rpm and an internal temperature of 25°C for 5 hours, subsequently at a temperature of 45°C for 5 hours. After removing the zirconia ceramic beads from the obtained dispersion liquid, 316 g of Isopar G, 0.6 g of a charge controlling agent, 1.2 g of an organic polyamine compound were added, and ink composition (Z-5) was obtained. The particle component of the obtained ink composition had an average particle diameter of 0.93 µm.

### <Evaluation>

The redispersibility and the temporal stability (storage stability) of the obtained ink composition were evaluated as described below.

### [Evaluation of redispersibility]

The obtained ink composition was packed in a glass vial and allowed to stand for 2 days at room temperature, before shaking up and down 50 times by hand. The presence or absence of aggregated particles was observed under a SEM to evaluate the redispersibility. The absence of aggregation was rated A, while the presence aggregation was rated C. The result is shown in Table 2.

### [Evaluation of temporal stability]

The obtained ink composition was allowed to stand at a temperature of 60°C for 3 days, subsequently the particle diameter, and shape of the particles were observed under a SEM to evaluate the temporal stability (storage stability) of the ink composition. The absence of aggregation was rated A, while the presence of aggregation was rated C. The result is shown in Table 2.

### [Evaluation by piezo inkjet recording system]

### [Evaluation of ejection stability]

The obtained ink composition was loaded into an ink jet printer (trade name: PX-G920, manufactured by Seiko Epson Corporation), and ink jet recording was carried out on commercial wood-free paper with an ink drop volume of 1.5 pl. Subsequently, when using the ink compositions of Examples 1 to 15 and Comparative Examples 1, 3 to 5, the paper was heated in an oven at a temperature of 120°C for 20 seconds, and the dot shape of the fixed image was observed. When the ink composition of Comparative Example 2 was used, the paper was irradiated with a deep UV lamp (trade name: SP-7, manufactured by Ushio Inc.), and the dot shape of the fixed image was observed under a SEM.

The evaluation indices are as follows. The result is shown in Table 2.
A -- Good dot shape
C -- Irregular dot shape

### [Evaluation of head clogging]

The obtained ink composition was loaded into an ink jet printer (trade name: PX-G920, manufactured by Seiko Epson Corporation), and ink jet recording was continuously carried out on commercial wood-free paper with an ink drop volume of 1.5 pl to evaluate the head clogging.

The evaluation indices are as follows. The result is shown in Table 2.
A-- Continuously ejectable for 8 hours without head clogging
C -- Not continuously ejectable for 8 hours without head clogging

### [Evaluation of blotting]

The obtained ink composition was loaded into an ink jet printer (trade name: PX-G920, manufactured by Seiko Epson Corporation), and inkjet recording was carried out on commercial wood-free paper, a PET support as described below, and an aluminum support with an ink drop volume of 1.5 pl. Subsequently, when using the ink compositions of Examples 1 to 15 and Comparative Examples 1, 3 to 5, the printed materials were heated in an oven at a temperature of 120°C for 20 seconds, and the dot diameter of the fixed image was evaluated. When the ink composition of Comparative Example 2 was used, the printed materials were irradiated with a deep UV lamp (trade name: SP-7, manufactured by Ushio Inc.), and the dot diameter of the fixed image was evaluated under a SEM.

The evaluation indices are as follows. The result is shown in Table 2.
A -- Dot diameter of 40 µm or less
B -- Dot diameter of exceeding 40 µm and 50 µm or less
C -- Dot diameter of exceeding 50 µm

### <Preparation of planographic printing plate support>

### [PET support]

An coating liquid of the following composition was prepared, and applied to the readily-adhering surface of a polyester film having a thickness of 188 µm (trade name: A4100, manufactured by Toyobo Co., Ltd.) to form a contact layer at a coating weight of 1.0 g/m².

(Coating liquid for contact layer)
- Butyral resin BM-S (manufactured by Sekisui Chemical Co., Ltd.) 59 g
   (10% by mass MEK solution)
- Carbon black dispersion (solids content 21%) 13.5 g
- MEK (methylethylketone) 62.7 g

The coating liquid for hydrophilic layer having the following composition was applied to said film using a wire bar, and dried at a temperature of 80°C for 10 minutes in an oven to form a hydrophilic layer having a coating weight of 3.0 g/m² on a dry base. A planographic printing plate support was thus prepared.

### (Coating liquid for hydrophilic layer)

- Colloidal silica dispersion (20% by mass aqueous solution) 100 g
   (Snowtex C)
- Sol-gel preparation described below 500 g
- 5% by mass aqueous solution of an anionic surfactant 30 g
   (Trade name: Nikkol OTP-75, manufactured by Nikko Chemicals Co., Ltd.)
- Purified water 450 g

### (Sol-gel preparation)

19.2 g of ethyl alcohol, 0.86 g of acetylacetone, 0.98 g of tetraethyl orthotitanate, and 8.82 g of purified water were mixed with 1.04 g of tetramethoxysilane (manufactured by Tokyo Chemical Industry Co., Ltd.) and 0.34 g of the following hydrophilic polymer having silane coupling groups at the ends, and aged for 2 hours at room temperature to obtain a sol-gel preparation.

### (Synthesis of hydrophilic polymer having silane coupling groups at the ends)

25 g of acrylamide, 3.5 g of 3-mercaptopropyltrimethoxysilane, and 51.3 g of dimethylformamide were placed in a three-necked flask, heated to a temperature of 65°C under nitrogen gas stream, and 0.25 g of 2,2'-azobis(2,4-dimethylvaleronitrile) was added to initiate the reaction. After stirring for 6 hours, the mixture was cooled to room temperature, and introduced into 1.5 L of ethyl acetate; a solid was precipitated. Subsequently, the solution was filtered, thoroughly washed with ethyl acetate, and dried to obtain a solid at a yield of 21 g. The solid was determined with GPC (polystyrene standard) to be a polymer having a weight average molecular weight of 5,000.

### <aluminum support>

The following alloy was used to prepare a molten metal: an aluminum alloy containing 0.06% by mass of Si, 0.30% by mass of Fe, 0.005% by mass of Cu, 0.001% by mass of Mn, 0.001% by mass of Mg, 0.001% by mass ofZn and 0.03% by mass ofTi, and Al and inevitable impurities as the balance. After the metal melting treatment followed by filtration, a DC casting method was used to produce an ingot having a length of 500 mm and a width of 1200 mm. The surface thereof was cut off by an average thickness of 10 mm by means of a surface cutter. Thereafter, the ingot was subjected to soaking treatment at 550°C for about 5 hours. When the temperature of the ingot was lowered to 400°C, a hot rolling machine was used to produce a rolled plate having a thickness of 2.7 mm. Furthermore, a continuous annealing machine was used to subject the plate to heat treatment at 500°C. Thereafter, the plate was cold-rolled to be finished into a thickness of 0.24 mm. In this way, an aluminum plate of JIS 050 material was obtained. This aluminum plate was made into a width of 1030 mm, and then subjected to the following surface treatment.

### <Surface treatment>

Surface treatment was conducted by carrying out the following (a) to (j) treatments continuously. After each of the treatments and water washing, the solution or water used therein was cleared away by means of a nip roller.

### (a) Mechanical surface-roughening treatment

A machine shown in Fig. 4 was used to supply a suspension (specific gravity: 1.12) of an abrasive (pumice) in water, as an abrading slurry, onto a surface of the aluminum plate, and simultaneously the surface was subjected to mechanical surface-roughening treatment with rotating roller-form nylon brushes. In Fig.4, reference number 101 represents the aluminum plate; 102 and 104, the roller-form brushes; 103, the abrading slurry; and 105, 106, 107 and 108, supporting rollers. The average grain diameter of the abrasive grains was 40 µm, and the maximum grain diameter was 100µm. The material of the nylon brushes was 6,10-nylon, the bristle length thereof was 50 mm, and the bristle diameter thereof was 0.3 mm. The nylon brushes were each obtained by making holes in a stainless steel cylinder having a diameter of 300 mm and then planting bristles densely. The number of the used rotating brushes was three. The distance between the two supporting rollers (diameter: 200 mm) under each of the brushes was 300 mm. Each of the brush rollers was pushed against the aluminum plate until the load of a driving motor for rotating the brush got 7 kW larger than the load before the brush roller was pushed against the aluminum plate. The rotating direction of the brush was the same as the moving direction of the aluminum plate. The rotation speedof the brush was 200 rpm.

### (b) Alkali etching treatment

An aqueous solution having a caustic soda concentration of 2.6% by mass, an aluminum ion concentration of 6.5% by mass and a temperature of 70°C was sprayed to etch the aluminum plate, thereby dissolving the aluminum plate by 6 g/m². Thereafter, the aluminum plate was washed with sprayed water.

### (c) Desmutting treatment

The aluminum plate was subjected to desmutting treatment with a 30°C aqueous solution having a nitric acid concentration of 1% by mass (and containing 0.5% by mass of aluminum ions), which was sprayed, and then washed with sprayed water. The aqueous nitric acid solution used in the desmutting treatment was waste liquid from the step of conducting electrochemical surface-roughening treatment using alternating current in an aqueous nitric acid solution.

### (d) Electrochemical surface-roughening treatment

Alternating current having a frequency of 60 Hz was used to conduct electrochemical surface-roughening treatment continuously. The electrolyte used at this time was a 10.5 g/L solution of nitric acid in water (containing 5 g/L of aluminum ions and 0.007% by mass of ammonium ions), and the temperature thereof was 50°C. The waveform of the alternating current was a waveform shown in Fig. 5. This trapezoidal wave alternating current was used. The time TP until the current value was raised from zero to a peak was 0.8 msec, and the duty ratio of the current was 1:1. A carbon electrode was used as a counter electrode to conduct the electrochemical surface-roughening treatment. Ferrite was used as an auxiliary anode. As an electrolyte bath, a bath illustrated in Fig. 6 was used.

The density of the current was 30 A/dm² when the current was at the peak. The total of electricity quantities when the aluminum plate functioned as an anode was 220 C/dm². 5% of the current sent from a power source was caused to flow into the auxiliary anode.

Thereafter, the aluminum plate was washed with sprayed water.

### (e) Alkali etching treatment

An aqueous solution having a caustic soda of 26% by mass and an aluminum ion concentration of 6.5% by mass was used to etch the aluminum plate at 32°C so as to dissolve the aluminum plate by 0.25 g/m², thereby removing smut components made mainly of aluminum hydroxide and generated when the alternating current was used to conduct the electrochemical surface-roughening treatment in the previous step, and further dissolving edges of formed pits so as to be made smooth. Thereafter, the aluminum plate was washed with sprayed water.

### (f) Desmutting treatment

The aluminum plate was subjected to desmutting treatment with a 30°C aqueous solution having a nitric acid concentration of 15% by mass (and containing 4.5% by mass of aluminum ions), which was sprayed, and then washed with sprayed water. The aqueous nitric acid solution used in the desmutting treatment was waste liquid from the step of conducting the electrochemical surface-roughening treatment using the alternating current in the aqueous nitric acid solution.

### (g) Electrochemical surface-roughening treatment

Alternating current having a frequency of 60 Hz was used to conduct electrochemical surface-roughening treatment continuously. The electrolyte used at this time was a 7.5 g/L solution of hydrochloric acid in water (containing 5 g/L of aluminum ions), and the temperature thereof was 35°C. The waveform of the alternating current was a waveform shown in Fig. 5. This trapezoidal wave alternating current was used. The time TP until the current value was raised from zero to a peak was 0.8 msec, and the duty ratio of the current was 1:1. A carbon electrode was used as a counter electrode to conduct the electrochemical surface-roughening treatment. Ferrite was used as an auxiliary anode. As an electrolyte bath, a bath illustrated in Fig. 6 was used.

The density of the current was 25 A/dm² when the current was at the peak. The total of electricity quantities when the aluminum plate functioned as an anode was 50 C/dm²

Thereafter, the aluminum plate was washed sprayed water.

### (h) Alkali etching treatment

An aqueous solution having a caustic soda of 26% by mass and an aluminum ion concentration of 6.5% by mass was used to etch the aluminum plate at 32°C so as to dissolve the aluminum by 0.10 g/m², thereby removing smut components made mainly of aluminum hydroxide and generated when the alternating current was used to conduct the electrochemical surface-roughening treatment in the previous step, and further dissolving edges of formed pits so as to be made smooth. Thereafter, the aluminum plate was washed with sprayed water.

### (i) Desmutting treatment

The aluminum plate was subjected to desmutting treatment with a 60°C aqueous solution having a sulfuric acid concentration of 25% by mass (and containing 0.5% by mass of aluminum ions), which was sprayed, and then washed with sprayed water.

### (j) Anodic oxidation treatment

An anodic oxidation device having the structure illustrated in Fig. 7 was used to conduct anodic oxidation treatment to yield a planographic printing plate precursor support. The electrolytes supplied into first and second electrolyzing sections were each sulfuric acid. The electrolytes were each an electrolyte having a sulfuric acid concentration of 170 g/L (and containing 0.5% by mass of aluminum ions), and the temperature thereof was 38°C. Thereafter, the support was washed with sprayed water. The final amount of the oxidation film was 2.7 g/m².

The thus obtained planographic printing plate support had a center line average roughness of 0.55 µm, and the average wavelength of large waves was 65 µm, the average opening diameter of medium waves was 1.4 µm, the average opening diameter of small waves was 0.14 µm, and the ratio of the depth of small waves to the average opening diameter was 0.46.

**[Table 2]**

| | Type of ink composition | Redispersibility | Temporal stability | Ejection stability | Head clogging | Blotting (Wood- free paper) | Blotting (PET) | Blotting (Aluminu m) |
|---|---|---|---|---|---|---|---|---|
| Example 1 | Y-1 | A | A | A | A | A | A | A |
| Example 2 | Y-2 | A | A | A | A | A | A | A |
| Example 3 | Y-3 | A | A | A | A | A | A | A |
| Example 4 | Y-4 | A | A | A | A | A | A | A |
| Example 5 | Y-5 | A | A | A | A | A | A | A |
| Example 6 | Y-6 | A | A | A | A | A | A | A |
| Example 7 | Y-7 | A | A | A | A | A | A | A |
| Example 8 | Y-8 | A | A | A | A | A | A | A |
| Example 9 | Y-9 | A | A | A | A | A | A | A |
| Example 10 | Y-10 | A | A | A | A | A | A | A |
| Example 11 | Y-11 | A | A | A | A | A | A | A |
| Example 12 | Y-12 | A | A | A | A | A | A | A |
| Example 13 | Y-13 | A | A | A | A | A | A | A |
| Example 14 | Y-14 | A | A | A | A | A | A | A |
| Example 15 | Y-15 | A | A | A | A | A | A | A |
| Comparative Example 1 | Z-1 | A | A | C | A | A | C | C |
| Comparative Example 2 | Z-2 | Not possible to evaluate | C | C | C | A | A | A |
| Comparative Example 3 | Z-3* | Not possible to evaluate | C | C | C | A | A | A |
| Comparative Example 4 | Z-4 | A | A | A | A | B | B | B |
| Comparative Example 5 | Z-5 | C | C | C | C | A | A | A |

| | | | | | | | | |
|---|---|---|---|---|---|---|---|---|
| * As Z-3 was not able to be ejected at room temperature using a PX-G920 (manufactured by Seiko Epson Corporation), heated ink composition was used for the evaluation of ejection. | | | | | | | | |

As evident from Table 2, the ink compositions of Examples 1 to 15 (the ink compositions of the invention) exhibited superior redispersibility and temporal stability (storage stability) to the ink compositions of Comparative Examples 1 to 5. The ink compositions of Examples 1 to 15 caused no deterioration of ejection stability, head clogging, or blotting even when they were used in a piezo ink jet recording system.

### [Evaluation by electrostatic ink jet recording system]

### <Evaluation of ink jet recording and image>

The obtained ink compositions were loaded in an ink tank of the ink jet recording apparatus as shown in Figs. 1 to 3. A 150 dpi 833 channel head as shown in Fig. 2 (channel density 50 dpi, three-row staggered arrangement) was used as a jet head, and a silicon rubber heat roller equipped with a 1 kW heater was used as a fixing unit. For a controlling unit for ink temperature the ink tank was equipped with an immersion heater and a mixing blade. The ink temperature was kept at 30°C using a thermostat while rotating the mixing blade at 30 rpm. The mixing blade was also used as a stirring unit for preventing precipitation and aggregation. The ink channel was partially transparent and disposed between a LED luminescence element and a light detection element, and a diluted ink (Isopar G) or a concentrated ink having twice the solids content concentration of the above ink composition was put in, according to the output signal to control the concentration. Fine coated paper for offset printing was used as the recording medium.

After removing dust on the surface of the recording medium by air pump suction, the jet head was brought close to the image forming position on the recording medium. The image data to be recorded was transported to the image data controlling element, and the ink composition was ejected to form an image having a resolution of 2,400 dpi while conveying the recording medium by the rotation of the carrier belt and successively moving the jet head. A lamination of a metallic belt and a polyimide film was used as the carrier belt. A line mark was disposed near one end of the belt along the carrying direction, the mark was optically read with the carrier belt position detecting unit, and image formation was carried out while driving the position controlling unit. The distance between the jet head and the recording medium was maintained at 0.5 mm according to the output from the optical gap detecting device. During the ejection, the surface potential of the recording medium was kept at -1.5 kV, and an image was formed on commercial wood-free paper, and the PET and aluminum supports at a pulse voltage of +500 V (pulse width 50 µsec) and a driving frequency of 15 kHz. Subsequently, when the ink compositions of Examples 1 to 15 and Comparative Examples 1, 3 to 5 were used, the printed materials were heated in an oven at a temperature of 120°C for 20 seconds to fix the image. When the ink composition of Comparative Example 2 was used, the printed material was irradiated with a deep UV lamp (trade name: SP-7, manufactured by Ushio Inc.) to fix the image.

Ejection stability, head clogging, and blotting were evaluated in the same manner as the procedure described above, except that the electrostatic ink jet recording system above was used. The results of the evaluations are shown in Table 3.

The response voltage of the obtained ink compositions was also evaluated by the following procedure.

### [Evaluation of response voltage]

The obtained ink compositions were used for ink jet recording with said electrostatic ink jet recording apparatus at under different applied voltages. The results of the evaluations are shown in Table 3.

A lower applied voltage demonstrates a better response of the ink composition.

**[Table 3]**

| | Type of ink composition | Ejection stability | Head clogging | Blotting (Wood-free paper) | Blotting (PET) | Blotting (Aluminum ) | Response voltage (V) |
|---|---|---|---|---|---|---|---|
| Example 1 | Y-1 | A | A | A | A | A | 300V |
| Example 2 | Y-2 | A | A | A | A | A | 300V |
| Example 3 | Y-3 | A | A | A | A | A | 300V |
| Example 4 | Y-4 | A | A | A | A | A | 300V |
| Example 5 | Y-5 | A | A | A | A | A | 300V |
| Example 6 | Y-6 | A | A | A | A | A | 300V |
| Example 7 | Y-7 | A | A | A | A | A | 300V |
| Example 8 | Y-8 | A | A | A | A | A | 300V |
| Example 9 | Y-9 | A | A | A | A | A | 300V |
| Example 10 | Y-10 | A | A | A | A | A | 300V |
| Example 11 | Y-11 | A | A | A | A | A | 300V |
| Example 12 | Y-12 | A | A | A | A | A | 300V |
| Example 13 | Y-13 | A | A | A | A | A | 300V |
| Example 14 | Y-14 | A | A | A | A | A | 300V |
| Example 15 | Y-15 | A | A | A | A | A | 300V |
| Comparative Example 1 | Z-1 | Unejectable | A | Not evaluated | Not evaluated | Not evaluated | Not able to evaluate |
| Comparative Example 2 | Z-2 | Unejectable | C | Not evaluated | Not evaluated | Not evaluated | Not able to evaluate |
| Comparative Example 3 | Z-3* | Unejectable | C | Not evaluated | Not evaluated | Not evaluated | Not able to evaluate |
| Comparative Example 4 | Z-4 | C | A | A | A | A | 600V |
| Comparative Example 5 | Z-5 | C | C | A | A | A | 450V |

| | | | | | | | |
|---|---|---|---|---|---|---|---|
| * As Z-3 was not able to be ejected at room temperature using PX-G920 (manufactured by Seiko Epson Corporation), heated ink composition was used for the evaluation of ejection. | | | | | | | |

As evident from Table 3, the ink compositions of Examples 1 to 15 (the ink compositions of the invention) exhibited better response to voltage than the ink compositions of Comparative Examples 1 to 5. Moreover, the ink compositions of Examples 1 to 15 caused no head clogging, blotting, or deterioration in ejection stability even when used in the electrostatic ink jet recording system.

According to the invention, an ink composition for ink jet recording is provided which has excellent dispersion stability, redispersibility, and storage stability, and high-quality images with good ejection stability and no occurrence of blotting can be obtained when applied to various ink jet recording systems. The ink for ink jet recording is suitable for an ink composition for planographic printing plate capable of producing printed materials on which a high-quality fine image is formed.

Moreover, according to the preparation method for planographic printing plate of the invention, printed material on which a high-quality fine image is formed can be obtained using the ink composition for ink jet recording of the invention.

All publications, patent applications, and technical standards mentioned in this specification are herein incorporated by reference to the same extent as if each individual publication, patent application, or technical standard was specifically and individually indicated to be incorporated by reference.

## Claims

1. An ink composition for ink jet recording comprising a dispersion medium (A) and nonaqueous dispersion resin particles (B) having a volume average particle diameter of 0.8 µm or more.

2. The ink composition for ink jet recording according to claim 1, wherein the volume average particle diameter of the nonaqueous dispersion resin particles is 1.0 to 4.0 µm.

3. The ink composition for ink jet recording according to claim 1, wherein the volume average particle diameter of the nonaqueous dispersion resin particles is 1.2 to 3.0 µm.

4. The ink composition for ink jet recording according to claim 1, wherein the weight average molecular weight of the nonaqueous dispersion resin particles is 1 × 10³ to 1 × 10⁶ µm.

5. The ink composition for ink jet recording according toclaim 1, wherein the modulus of elasticity of the nonaqueous dispersion resin particles is 1 × 10⁷ or more at room temperature.

6. The ink composition for ink jet recording according to claim 1, wherein the content of the nonaqueous dispersion resin particles is between 1 and 90% by mass with respect to the total weight of the ink composition.

7. An ink composition for forming an image on a planographic printing plate support by an ink jet recording system, comprising the ink composition for ink jet recording according to claim 1.

8. The ink composition for ink jet recording according to claim 1, wherein the content of the dispersion medium (A) is in the range of 10 to 90% by mass with respect to the total weight of the ink composition.

9. The ink composition for ink jet recording according to claim 1, wherein the nonaqueous dispersion resin particles (B) are obtained by polymerization granulation in a nonaqueous solvent (a) using at least one monofunctional monomer (b) in the presence of a resin for dispersion stabilization (c).

10. The ink composition for ink jet recording according to claim 9, wherein the amount of the nonaqueous solvent (a) is in the range of 0.01 to 80% by mass with respect to the total weight of the mixed solution used for the synthesis.

11. The ink composition for ink jet recording according to claim 9, wherein the nonaqueous dispersion resin particles (B) are prepared using the nonaqueous solvent (a) identical to the dispersion medium (A).

12. The ink composition for ink jet recording according to claim 9, wherein the monofunctional monomer (b) is a monomer represented by the following formula (I): 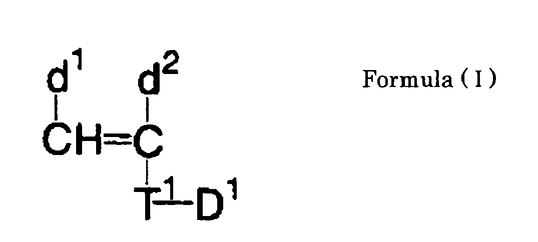 wherein T¹ represents -COO-, -OCO-, -CH₂OCO-, -CH₂COO-, -O-, -CONHCOO-, -CONHOCO-, -SO₂-, -CON(W')-, -SO₂N(W¹)-, or a phenylene group, wherein W¹ represents a hydrogen atom or a substituted or unsubstituted aliphatic group having 1 to 20 carbon atoms, D¹ represents a hydrogen atom, a halogen atom, or a substituted or unsubstituted aliphatic group having 1 to 20 carbon atoms, d¹ and d² may be the same or different from each other and each independently represents a hydrogen atom, a halogen atom, a cyano group, or a hydrocarbon group having 1 to 20 carbon atoms, -COO-Z¹, or -COO-Z¹ via a hydrocarbon group having 1 to 20 carbon atoms, wherein, Z¹ represents a hydrocarbon group having 1 to 22 carbon atoms.

13. The ink composition for ink jet recording according to claim 9, wherein the amount of the monofunctional monomer (b) is 10% by mass or more with respect to the total solids content in the mixed solution used for the synthesis.

14. The ink composition for ink jet recording according to claim 9, wherein the resin for dispersion stabilization (c) is used in the range of 1 to 50% by mass with respect to the monofunctional monomer (b) used for the synthesis of the nonaqueous dispersion resin particles (B).

15. The ink composition for ink jet recording according toclaim 9, wherein the resin for dispersion stabilization (c) is a polymer which is soluble in the dispersion medium (A) selected from a random copolymer, comb copolymer, star copolymer, partially crosslinked copolymer, and crosslinking group-containing copolymer.

16. The ink composition for ink jet recording according to claim 7, wherein the ink jet recording system is an electrostatic system.

17. A method for producing a planographic printing plate comprising forming an image on a planographic printing plate support by an ink jet recording system using an ink composition for inkjet recording containing a dispersion medium (A) and nonaqueous dispersion resin particles (B) having a volume average particle diameter of 0.8 µm or more.

18. The method for producing a planographic printing plate according to claim 17, wherein the ink jet recording system is an electrostatic system.
